# EUROPEAN PATENT APPLICATION

(11) **EP 4 568 393 A1**
(43) Date of publication of application: **11.06.2025**
(21) Application number: 23849980.0
(22) Date of filing: 26.07.2023
(51) Int. Cl.: H04W 72/11, H04W 72/0457, H04W 72/1268, H04W 72/1273, H04W 72/52

(54) **BASE STATION AND COMMUNICATION SYSTEM**

(30) Priority: 02.08.2022 JP 2022123326
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2023/027386
(87) International publication number: WO 2024/029425

(57) **Abstract**

A base station is capable of performing periodic communication to transmit and receive data to and from a communication terminal in a predetermined period. The base station is configured to, when transmitting downlink data, allocate a physical downlink control channel and a physical downlink shared channel used in a first period that is a transmission period for the downlink data, change the physical downlink shared channel used in the first period in response to variation in an amount of the downlink data, and notify the communication terminal of a result of the change by using the physical downlink control channel allocated to the first period. The base station is configured to, when receiving uplink data, allocate a physical downlink control channel and a physical uplink shared channel used in a second period that is a transmission period for the uplink data, change the physical uplink shared channel used in the second period in response to variation in an amount of the uplink data, and notify the communication terminal of a result of the change by using the physical downlink control channel allocated to the second period.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). An NR system has been studied, based on an LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

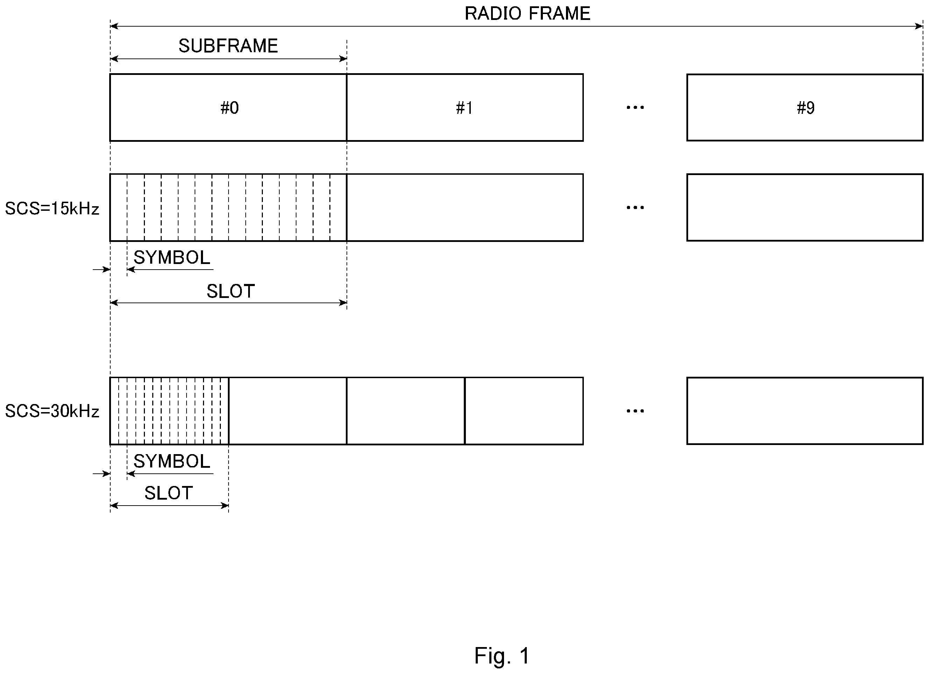

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, in other words, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with a predetermined period for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described below, resource allocation information of a paging channel (PCH) being one of transport channels to be described below, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described below. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, in other words, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, in other words, a CRC error does not occur in the receiver (CRC = OK), an "Ack" is transmitted from the receiver to the transmitter. The transmitter that has received the "Ack" transmits subsequent data.

Another example of a method of retransmission will be described. **In** a case in which a CRC error occurs in the receiver, a retransmission request is performed from the receiver to the transmitter. The retransmission request is performed using toggling of a new data indicator (NDI). The transmitter that has received the retransmission request retransmits data. **In** a case in which a CRC error does not occur in the receiver, the retransmission request is not performed. **In** a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, in other words, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described below is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides NAS mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (SL) communication (also referred to as PC5 communication) both in an Evolved Packet System (EPS) and a 5G core system to be described below is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmit power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

In 3GPP, some new technologies are proposed. For example, a communication method suited to extended reality (XR) and cloud gaming services is discussed (NPL 30), and an XR recognition method, an XR-specific power consumption reduction method, an XR-specific capacity enhancement method, and the like taking account of characteristics of XR traffic (for example, non-integer periodicity, data generation time variation (jitter) characteristics, data volume variation characteristics, low latency characteristics, and the like) are proposed (NPLs 31, 32, and 33).

### Citation List

### Non Patent Literature

[NPL 1] 3GPP TS 36.300 V16.7.0
[NPL 2] 3GPP TS 38.300 V16.8.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.3.0
[NPL 11] 3GPP TS 38.211 V17.0.0
[NPL 12] 3GPP TS 38.212 V17.0.0
[NPL 13] 3GPP TS 38.213 V17.0.0
[NPL 14] 3GPP TS 38.214 V17.0.0
[NPL 15] 3GPP TS 38.321 V16.7.0
[NPL 16] 3GPP TS 38.322 V16.2.0
[NPL 17] 3GPP TS 38.323 V16.6.0
[NPL 18] 3GPP TS 37.324 V16.3.0
[NPL 19] 3GPP TS 38.331 V16.7.0
[NPL 20] 3GPP TS 38.401 V16.8.0
[NPL 21] 3GPP TS 38.413 V16.8.0
[NPL 22] 3GPP TS 37.340 V16.8.0
[NPL 23] 3GPP TS 38.423 V16.8.0
[NPL 24] 3GPP TS 38.305 V16.7.0
[NPL 25] 3GPP TS 23.273 V17.3.0
[NPL 26] 3GPP TR 23.703 V12.0.0
[NPL 27] 3GPP TS 23.287 V17.2.0
[NPL 28] 3GPP TS 23.303 V17.0.0
[NPL 29] 3GPP TS 38.340 V16.5.0
[NPL 30] 3GPP RP-213587
[NPL 31] 3GPP R1-2204656
[NPL 32] 3GPP R1-2203132
[NPL 33] 3GPP R1-2205056
[NPL 34] 3GPP TR 38.838 V17.0.0

### SUMMARY

### Technical Problem

In the 5G radio access system, communication for various services is performed. Enabling communication suited to XR and cloud gaming services is also an important problem. To enable such communication, a communication method taking account of characteristics of XR traffic (for example, non-integer periodicity, data generation time variation (jitter) characteristics, data volume variation characteristics, low latency characteristics, and the like) is required (NPL 30). In the conventional communication method, a period in a periodic transmission/reception method is N milliseconds (N is a positive integer), and resources to be periodically allocated are fixed. Accordingly, there is a problem that the conventional communication method is unsuited to the characteristics of XR traffic to thereby cause increase in delay time and deterioration in communication quality.

In view of the problem, an object of the present disclosure is to achieve a base station that can implement a communication system suited to communication having a characteristic such as XR traffic.

### Solution to Problem

A base station according to the present disclosure is a base station capable of performing periodic communication to transmit and receive data to and from a communication terminal in a predetermined period, the base station being configured to, when transmitting downlink data to the communication terminal in the periodic communication, allocate a physical downlink control channel and a physical downlink shared channel used in a first period that is a transmission period for the downlink data, change the physical downlink shared channel used in the first period in response to variation in an amount of data of the downlink data transmitted to the communication terminal, and notify the communication terminal of a result of the change by using the physical downlink control channel allocated to the first period. The base station is configured to, when receiving uplink data from the communication terminal in the periodic communication, allocate a physical downlink control channel and a physical uplink shared channel used in a second period that is a transmission period for the uplink data, change the physical uplink shared channel used in the second period in response to variation in an amount of data of the uplink data transmitted by the communication terminal, and notify the communication terminal of a result of the change by using the physical downlink control channel allocated to the second period.

### Advantageous Effects of Invention

According to the base station according to the present disclosure, a communication system suited to communication having a characteristic such as XR traffic can be implemented.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a diagram illustrating an example of resource allocation in a case where a plurality of PDSCHs and a plurality of PDCCHs are configured in one SPS period, according to a first embodiment;
Fig. 12 is a diagram illustrating an example of resource allocation in a case where the number of PDCCHs and the number of PDSCHs are individually configured in SPS configuration, according to a first alteration of the first embodiment;
Fig. 13 is a diagram illustrating another example of the resource allocation in a case where the number of PDCCHs and the number of PDSCHs are individually configured in the SPS configuration, according to the first alteration of the first embodiment;
Fig. 14 is a diagram illustrating an example in which a resource of a PDSCH configured by SPS is released by using a PDCCH, according to a second alteration of the first embodiment;
Fig. 15 is a diagram illustrating another example in which the resource of the PDSCH configured by the SPS is released by using the PDCCH, according to the second alteration of the first embodiment;
Fig. 16 is a diagram illustrating an example of resource allocation in a case where only one or more PDCCHs are configured in SPS configuration, according to a third alteration of the first embodiment;
Fig. 17 is a diagram illustrating an example of resource allocation in a case where a plurality of PUSCHs and a plurality of PDCCHs are configured in CG configuration, according to a second embodiment;
Fig. 18 is a diagram illustrating an example of resource allocation in a case where the number of PDCCHs and the number of PUSCHs are individually configured in CG configuration, according to a first alteration of the second embodiment;
Fig. 19 is a diagram illustrating another example of the resource allocation in a case where the number of PDCCHs and the number of PUSCHs are individually configured in the CG configuration, according to the first alteration of the second embodiment;
Fig. 20 is a diagram illustrating an example in which a resource of a PUSCH configured by a CG is released by using a PDCCH, according to a second alteration of the second embodiment;
Fig. 21 is a diagram illustrating another example in which the resource of the PUSCH configured by the CG is released by using the PDCCH, according to the second alteration of the second embodiment;
Fig. 22 is a diagram illustrating an example of resource allocation in a case where two PDCCHs are configured in CG configuration, according to a third alteration of the second embodiment;
Fig. 23 is a diagram illustrating an example of resource allocation in a case where one or more PDSCHs are configured by using a PDSCH configured in SPS configuration, according to a third embodiment;
Fig. 24 is a diagram illustrating an example of resource allocation in a case where one or more PDSCHs are configured by using a plurality of PDSCHs configured in SPS configuration, according to a first alteration of the third embodiment;
Fig. 25 is a diagram illustrating an example of resource allocation in a case where one or more PDSCHs are released by using a plurality of PDSCHs configured in SPS configuration, according to a second alteration of the third embodiment;
Fig. 26 is a diagram illustrating an example of resource allocation in a case where a scheduling request for one or more PUSCHs is notified by using a PUSCH configured in CG configuration, according to a fourth embodiment;
Fig. 27 is a diagram illustrating an example of resource allocation in a case where a PUSCH scheduling request is notified by using a plurality of PUSCHs configured in CG configuration, according to a first alteration of the fourth embodiment;
Fig. 28 is a diagram illustrating an example of resource allocation in a case where information related to a PUSCH used by a UE for transmission is transmitted by using a plurality of PUSCHs configured in CG configuration, according to a second alteration of the fourth embodiment;
Fig. 29 is a diagram illustrating an example of resource allocation in a case where PUSCH release information is transmitted by using a plurality of PUSCHs configured in CG configuration, according to a third alteration of the fourth embodiment;
Fig. 30 is a diagram illustrating an example of resource allocation in a case where an additional request for a PUSCH is transmitted by using a plurality of PUSCHs configured in CG configuration, according to a fourth alteration of the fourth embodiment;
Fig. 31 is a diagram illustrating an example of resource allocation in a case where an offset value is added to an SPS period every n periods configured by SPS, according to a fifth embodiment;
Fig. 32 is a diagram illustrating an example of resource allocation in a case where an offset value to be added to a period configured by SPS is notified, according to a first alteration of the fifth embodiment;
Fig. 33 is a diagram illustrating an example of resource allocation in a case where an offset value to be added to a period configured by SPS is notified by using a PDCCH, according to a second alteration of the fifth embodiment;
Fig. 34 is a diagram illustrating another example of the resource allocation in a case where the offset value to be added to the period configured by the SPS is notified by using the PDCCH, according to the second alteration of the fifth embodiment;
Fig. 35 is a diagram illustrating an example of resource allocation in a case where an offset value is added to a CG period every n periods configured by a CG, according to a sixth embodiment;
Fig. 36 is a diagram illustrating an example of resource allocation in a case where a request for addition of an offset value to a period configured by a CG is notified, according to a first alteration of the sixth embodiment;
Fig. 37 is a diagram illustrating an example of resource allocation in a case where an offset value to be added to a period configured by a CG is notified by using a PDCCH, according to a second alteration of the sixth embodiment; and
FIG. 38 is a diagram illustrating an example of a mobility processing sequence for transmitting modification information about an SPS and/or CG configuration in RA processing, according to a seventh embodiment.

### DETAILED DESCRIPTION

### First Embodiment

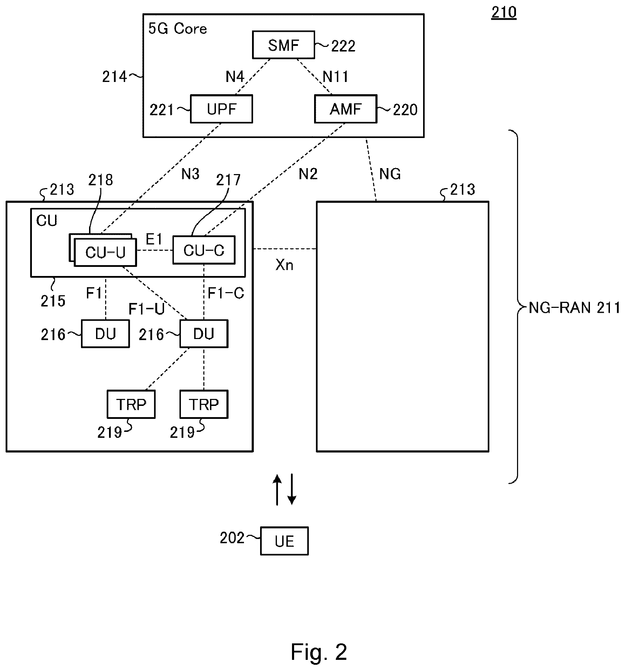

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane or a C-Plane), the SDAP is used in a user plane (which may be hereinafter also referred to as a U plane or a U-Plane), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

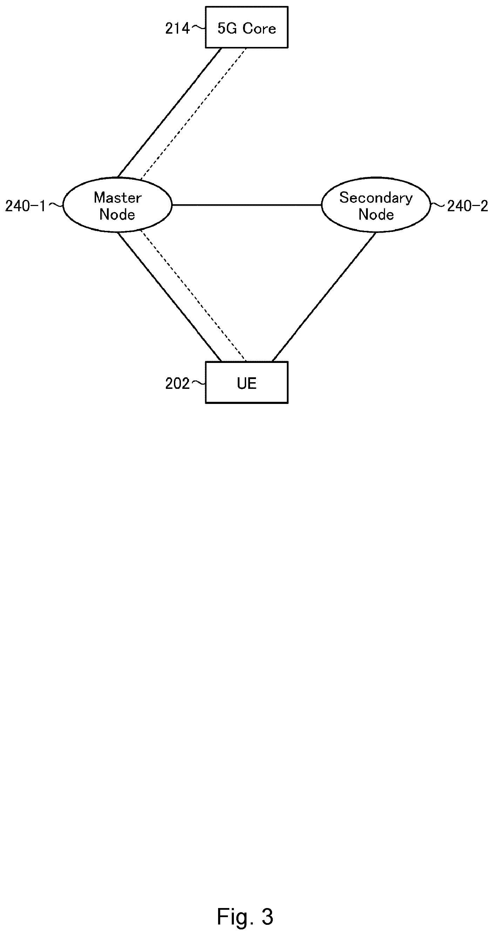

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

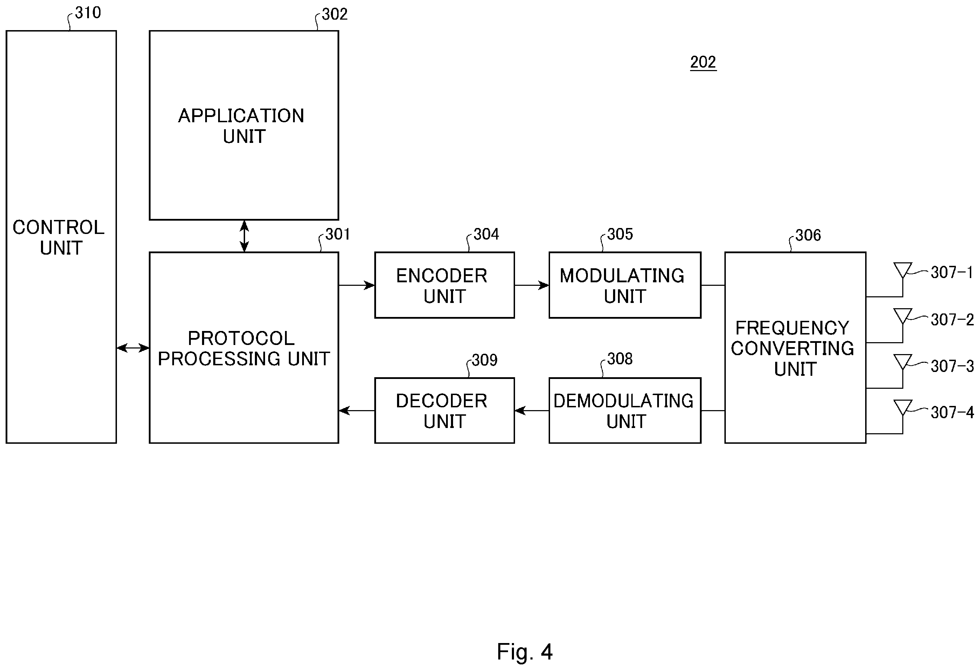

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

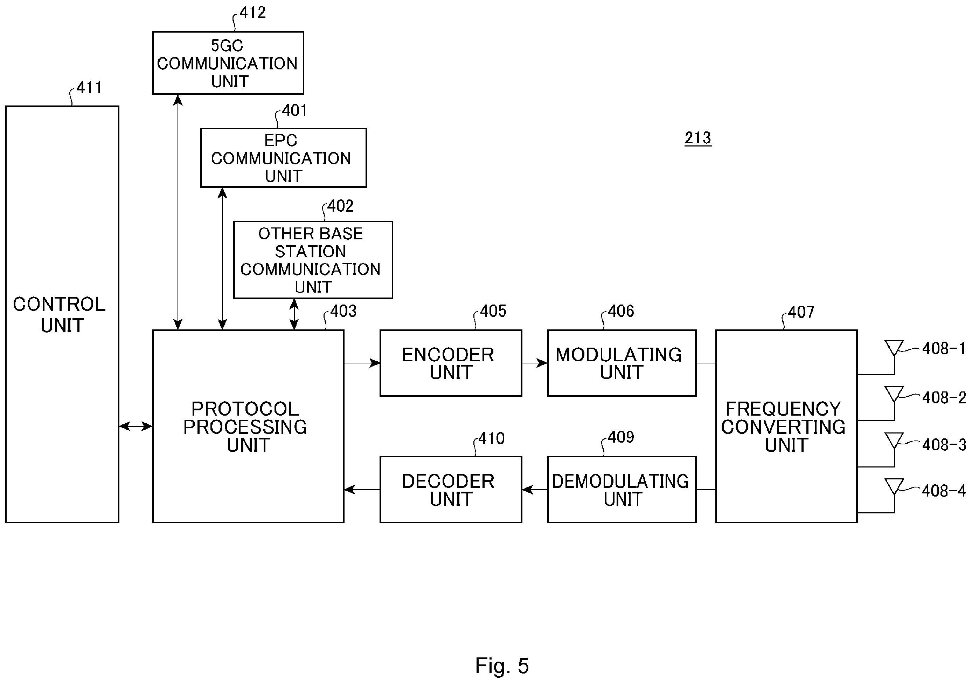

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to a frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

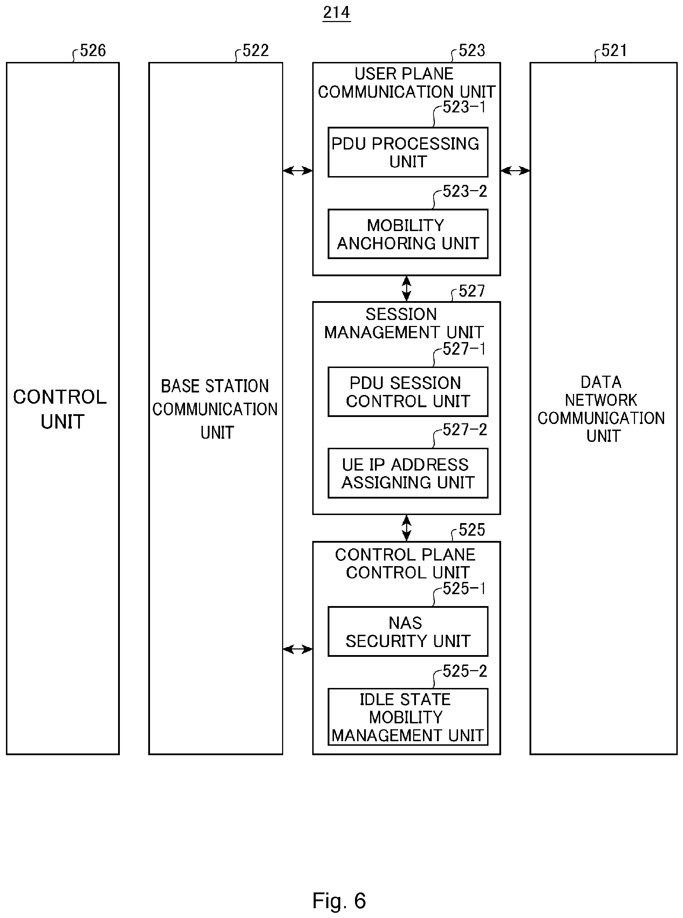

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

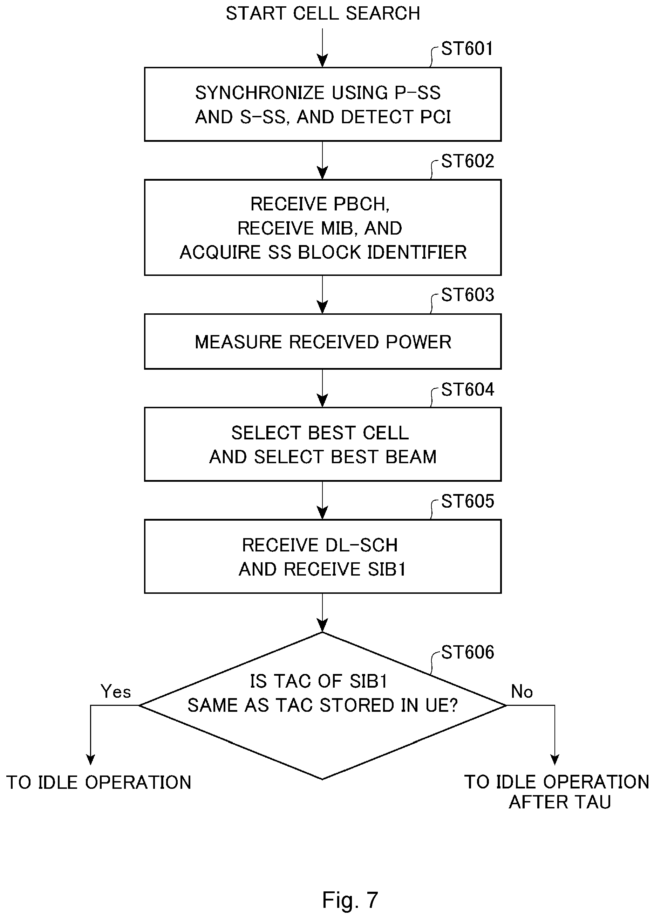

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, in other words, the best cell, out of the one or more cells detected up to Step ST603. The communication terminal selects a beam having the best received quality, for example, a beam having the highest received power of the SS block, in other words, the best beam. In selection of the best beam, for example, received power of the SS block of each SS block identifier is used.

Next, in Step ST605, the communication terminal receives a DL-SCH based on the scheduling information of the SIB1 included in the MIB, and obtains the system information block (SIB) 1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, in other words, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

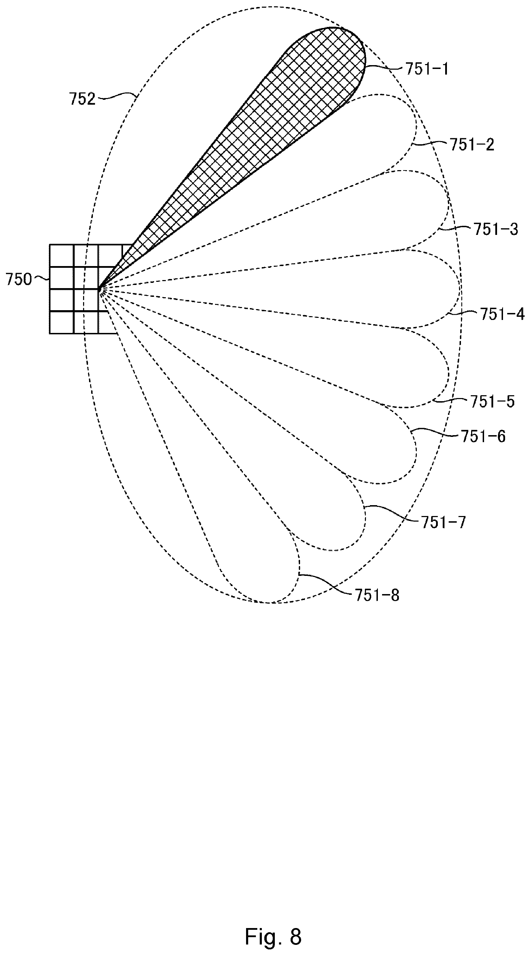

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, in other words, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

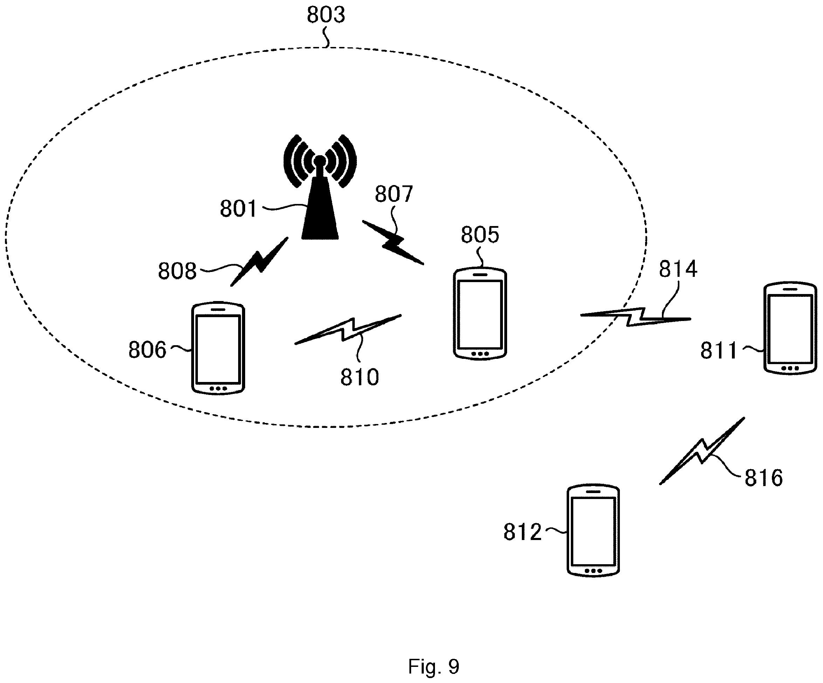

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to the decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

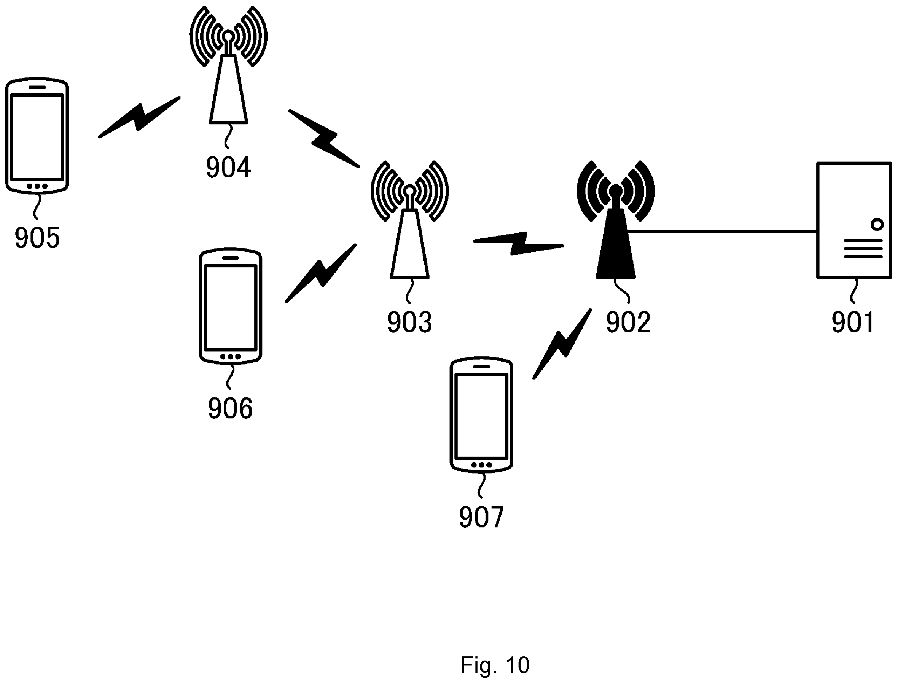

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In a 5G radio access system, enabling communication suited to XR and cloud gaming services is an important problem. In 3GPP, characteristics of XR traffic are studied (see NPL 34). Presented examples of the characteristics of the XR traffic include non-integer periodicity, data generation time variation (jitter) characteristics, data volume variation characteristics, low latency characteristics, and the like. To enable communication suited to XR and cloud gaming services, a communication method taking account of such characteristics of the XR traffic is required.

The conventional periodic communication method includes Semi-Persistent Scheduling (SPS) and Configured Grant (CG). Since resources used for transmission/reception are allocated beforehand for these, these have the advantage that low latency characteristics and low power consumption characteristics can be achieved. However, a period of N milliseconds (N is a positive integer) is applied to the SPS and the CG. Accordingly, deviation in a resource allocation timing from a data generation timing occurs, thereby causing the necessity of waiting for data transmission/reception until a subsequent period. For the SPS and the CG, a timing of periodic resource allocation is constant. Accordingly, in a case of variation in a data generation timing, transmission/reception is unavailable at resource allocation timings configured by the SPS and the CG, thereby causing the necessity of waiting for data transmission/reception until a subsequent period. For the SPS and the CG, periodically allocated resources are fixed. Accordingly, in a case of a larger amount of data, only resources per period allocated by the SPS or the CG fail to complete data transmission/reception, thereby causing the necessity of waiting for data transmission/reception until a subsequent period.

As described above, just simply applying the conventional periodic communication method to XR traffic is unsuited to the characteristics of XR traffic, thereby causing an increase in delay time. A delay exceeding a required delay due to occurrence of delay in data causes the data to be discarded, thereby causing degradation in communication quality.

A first embodiment will disclose a method for solving such a problem.

The method configures one or more PDSCHs in SPS configuration. However, how to configure the plurality of PDSCHs in the SPS configuration is an issue. A method for solving this issue will be disclosed. SPS configurations performed by conventional RRC (see NPL 19) are configured for the number of PDSCHs configured in one period. The SPS configuration may include information related to the number of PDSCHs configured in one period. Different SPS configuration identifiers may be given to the respective SPS configurations. One reference SPS configuration may be determined from among the SPS configurations. For example, an SPS configuration for the first PDSCH configured in an SPS period may be used as a reference, the SPS period being a period in a case where a gNB periodically transmits downlink data (referred to hereinafter as DL data). The SPS configuration may include information indicating the reference SPS. The same SPS configuration information as the reference SPS configuration information, from among other SPS configuration information, may be omitted. An amount of information required to be notified from the gNB to the UE can be reduced. In this manner, configuration of a plurality of PDSCHs can be performed in one SPS period.

SPS activation/deactivation will be disclosed. The gNB notifies the UE of SPS activation/deactivation for each SPS configuration configured by RRC. DCI including the SPS activation/deactivation may be notified by using a PDCCH. As another method for notifying SPS activation/deactivation, the SPS activation/deactivation may be notified by using MAC signaling. A MAC CE for SPS activation/deactivation information may be provided. The SPS activation/deactivation information may be configured for each SPS configuration configured by RRC. The information related to SPS activation/deactivation includes conventional information, such as frequency domain resource allocation, time domain resource allocation, information indicating initial transmission or retransmission (NDI), and the like (see NPLs 12 and 13). As the information related to SPS activation/deactivation, an SPS configuration identifier configured by RRC may be included. The SPS configuration identifier may indicate which SPS configuration for PDSCH is to be activated or deactivated.

As the information related to SPS activation/deactivation, offset may be provided. The offset may cross a slot. The offset may cross a plurality of slots. The offset may be a period starting from a PDCCH for notifying SPS activation/deactivation. The offset may be configured such that the plurality of PDSCHs are consecutive or non-consecutive. In this manner, time domain resource allocation for a plurality of PDSCHs can be flexibly configured.

In this manner, configuration of a plurality of PDSCHs can be performed in SPS configuration. Data can be transmitted from the gNB to the UE by using a plurality of PDSCHs in each SPS period. SPS activation/deactivation can be performed for each PDSCH, and thus the number of PDSCHs can be flexibly configured depending on an amount of DL data generated in a service, for example.

Another method for SPS activation/deactivation will be disclosed. To activate/deactivate one or more SPS configurations configured by RRC, one SPS activation/deactivation is notified. DCI including the SPS activation/deactivation may be notified by using a PDCCH. The one SPS activation/deactivation may include information related to SPS activation/deactivation for the number of SPS configurations. The information related to SPS activation/deactivation and an SPS configuration identifier configured by RRC may be associated with each other. The above-described method may be applied as appropriate to the information related to SPS activation/deactivation.

One reference SPS configuration may be determined from among the SPS configurations. For example, an SPS configuration for the first PDSCH configured in an SPS period may be used as a reference. Which SPS is used as the reference may be statically predetermined by a specification or the like. As another method, the information related to SPS activation/deactivation may include information indicating the reference SPS. The same information as the information related to SPS activation/deactivation in the reference SPS configuration, from among information related to SPS activation/deactivation in another SPS configuration, may be omitted. An amount of information required to be notified from the gNB to the UE can be reduced.

A new Radio Network Temporary Identifier (RNTI) may be provided for reception of a PDCCH including SPS activation/deactivation in a case where a plurality of PDSCHs are configured in SPS configuration. The UE receives the PDCCH by using the RNTI. As another method, a Configured Scheduling RNTI (CS-RNTI) may be used. The CS-RNTI may be notified from the gNB to the UE in advance. Using the CS-RNTI enables an existing RNTI to be used, and thus processing can be simplified.

In this manner, a plurality of PDSCHs can be configured by one SPS activation/deactivation. Data can be transmitted from the gNB to the UE by using a plurality of PDSCHs in each SPS period. One SPS activation/deactivation is sufficient, and thus processing in the gNB and the UE can be simplified. Malfunction can be reduced.

Another method for configuring a plurality of PDSCHs will be disclosed. The gNB configures, for the UE, one or more PDSCHs in one SPS configuration by using RRC. In the one SPS configuration, SPS configuration information for the number of PDSCHs configured in one period is configured. As the SPS configuration information configured by the RRC, information related to PDSCH configuration may be included in addition to SPS configuration information configured by conventional RRC. Number(s) may be given to one or more PDSCHs configured by SPS. As the information related to PDSCH configuration, the SPS configuration information may include the number of PDSCHs and/or PDSCH number(s). The SPS configuration information corresponding to the PDSCH(s) may be associated with PDSCH number(s).

One reference PDSCH may be determined. For example, the first PDSCH configured in an SPS period may be used as a reference. Which PDSCH is used as the reference may be statically predetermined by a specification or the like. As another method, SPS configuration may include information indicating the reference PDSCH. The same SPS configuration information as the SPS configuration information for the reference PDSCH, from among SPS configuration information for another PDSCH, may be omitted. An amount of information required to be notified from the gNB to the UE can be reduced. In this manner, configuration of a plurality of PDSCHs can be performed in one SPS period.

A method for SPS activation/deactivation will be disclosed. To activate/deactivate one SPS configured by RRC, one SPS activation/deactivation is notified. DCI including the SPS activation/deactivation may be notified by using a PDCCH. As another method for notifying SPS activation/deactivation, the SPS activation/deactivation may be notified by using MAC signaling. A MAC CE for SPS activation/deactivation information may be provided. The one SPS activation/deactivation may include information related to SPS activation/deactivation for the number of PDSCHs. The information related to SPS activation/deactivation for the PDSCHs and PDSCH number(s) configured by RRC may be associated with each other. The above-described method may be applied as appropriate to the information related to SPS activation/deactivation.

One reference PDSCH may be determined from among the PDSCHs. For example, the first PDSCH configured in an SPS period may be used as a reference. The information related to SPS activation/deactivation may include information indicating the reference PDSCH. The same information as the information related to SPS activation/deactivation for the reference PDSCH, from among information related to SPS activation/deactivation for another PDSCH, may be omitted. An amount of information required to be notified from the gNB to the UE can be reduced.

As the information related to SPS activation/deactivation for the PDSCH, offset may be provided. The offset may cross a slot. The offset may cross a plurality of slots. The offset may be a period starting from a PDCCH for notifying SPS activation/deactivation. The offset may be configured such that the plurality of PDSCHs are consecutive or non-consecutive. In this manner, time domain resource allocation for a plurality of PDSCHs can be flexibly configured.

A new RNTI may be provided for reception of a PDCCH including SPS activation/deactivation for a plurality of PDSCHs. The UE receives the PDCCH by using the RNTI. As another method, a CS-RNTI may be used. The CS-RNTI may be notified from the gNB to the UE in advance. Using the CS-RNTI enables an existing RNTI to be used, and thus processing can be simplified.

In this manner, a plurality of PDSCHs can be configured by one SPS activation/deactivation. Data can be transmitted from the gNB to the UE by using a plurality of PDSCHs in each SPS period. One SPS activation/deactivation is sufficient, and thus processing in the gNB and the UE can be simplified. Malfunction can be reduced.

Another method for SPS activation/deactivation will be disclosed. The gNB notifies the UE of SPS activation/deactivation for each PDSCH configured in an SPS period. DCI including the SPS activation/deactivation may be notified by using a PDCCH. Information related to SPS activation/deactivation for each PDSCH may be notified.

In this manner, data can be transmitted from the gNB to the UE by using a plurality of PDSCHs in each SPS period. SPS activation/deactivation can be performed at a different timing for each PDSCH, and thus the number of PDSCHs with SPS configuration can be flexibly configured depending on a timing of generation of DL data, for example.

A HARQ process number is given to each PDSCH. The HARQ process number may be derived by using an SPS configuration identifier. The HARQ process number may be a function of the SPS configuration identifier. The HARQ process number may be derived by using a PDSCH number. The HARQ process number may be a function of the PDSCH number. The HARQ process number may be derived by using a slot number to which a PDSCH is allocated. The HARQ process number may be a function of the slot number to which the PDSCH is allocated. With such a method, HARQ can be performed for each PDSCH.

Another method for a HARQ process number will be disclosed. One HARQ process number may be given to one or more PDSCHs in an SPS period. The HARQ process number may be derived by using a reference SPS configuration identifier. The HARQ process number may be a function of the reference SPS configuration identifier. The HARQ process number may be derived by using a slot number to which a reference SPS configuration is allocated. The HARQ process number may be a function of the slot number to which the reference SPS configuration is allocated. The HARQ process number may be derived by using a PDSCH number. The HARQ process number may be a function of the PDSCH number. The HARQ process number may be derived by using a slot number to which a reference PDSCH is allocated. The HARQ process number may be a function of the slot number to which the reference PDSCH is allocated. With such a method, HARQ can be performed for one or more PDSCHs in an SPS period. Multiple HARQ processes, such as those for each PDSCH, are unnecessary. HARQ processing can be simplified.

A PUCCH for Ack/Nack may be configured for each PDSCH. The PUCCH for Ack/Nack depending on the number of PDSCHs is configured. Information related to the PUCCH for Ack/Nack may be included in SPS configuration information. In this manner, an Ack/Nack for each PDSCH can be configured. An Ack/Nack can be transmitted early in response to a received PDSCH without a wait for reception of a plurality of PDSCHs.

Another method for configuring a PUCCH for Ack/Nack will be disclosed. One PUCCH for Ack/Nack may be configured for one or more PDSCHs configured in an SPS period. Information related to the PUCCH for Ack/Nack may be included in SPS configuration information.

The one PUCCH may include Ack/Nack information for each PDSCH configured in the SPS period. Ack/Nack information for the one or more PDSCHs is transmitted by using the one PUCCH. In this manner, PUCCH resources can be reduced. UL resource use efficiency can be enhanced. As another method, by using the one PUCCH, information for the one or more PDSCHs as an Ack may be transmitted. Ack information for the one or more PDSCHs as an Ack may be included in and transmitted by using the one PUCCH. As another method, by using the one PUCCH, information for the one or more PDSCHs as a Nack may be transmitted. Nack information for the one or more PDSCHs as a Nack may be included in and transmitted by using the one PUCCH. In this manner, PUCCH resources can be further reduced. UL resource use efficiency can be enhanced.

A priority may be provided for determination of which Ack/Nack information for PDSCH is to be included. Alternatively, the amount of the information may be reduced by using a codebook. In this manner, an amount of information transmitted by using a PUCCH can be reduced.

One piece of Ack/Nack information may be derived depending on the state of reception of the one or more PDSCHs configured in the SPS period. For example, an Ack is used when all the PDSCHs have been received, otherwise a Nack is used. One PUCCH may include the one derived piece of Ack/Nack information. The one piece of Ack/Nack information is transmitted by using the one PUCCH. In this manner, PUCCH resources can be reduced. UL resource use efficiency can be enhanced.

One or more PDCCHs are provided in an SPS period. In the SPS period, a PDCCH is provided for each PDSCH. The number of PDSCHs may be the same as the number of PDCCHs. In the SPS period, one or more PDSCHs are configured and the same number of PDCCHs as that of the PDSCHs is configured.

As the configuration of one or more PDCCHs, one or more CORESETs and search spaces (SSs) may be configured. The one or more CORESETs and search spaces may be one pair of CORESETs and one pair of search spaces, respectively. A list of CORESETs to be configured in the SPS period may be provided. A list of search spaces to be configured in the SPS period may be provided. CORESET configuration information includes a CORESET identifier, a frequency domain resource, a symbol period, information related to mapping between Control Channel Element (CCE) and Resource Element Group (REG), information related to a Transmission Configuration Indication (TCI) state, and the like. A combination of these pieces of information may be used. Search space configuration information includes a search space identifier, a corresponding CORESET identifier, a search space period, offset, a slot period used for a search space, the number of monitor symbols, the number of candidates, DCI format information, and the like. A combination of these may be used.

In the configuration of one or more PDCCHs, part or all of the CORESET configuration information for the respective PDCCHs may be the same. Likewise, part or all of the search space configuration information for the respective PDCCHs may be the same. For example, CORESET identifiers may be different, and the configuration information other than that may be the same configuration information. For example, search space identifiers and start timings (offsets) may be different, and the configuration information other than those may be the same configuration information. The same configuration information may be omitted.

One reference PDCCH may be determined. For example, the first PDCCH configured in an SPS period may be used as a reference. Which PDCCH is used as the reference may be statically predetermined by a specification or the like. As another method, SPS configuration may include information indicating the reference PDCCH. The same information as the configuration information about the reference PDCCH, from among other PDCCH configuration information, such as CORESET configuration information and search space configuration information, may be omitted. An amount of information required to be notified from the gNB to the UE can be reduced.

A configuration of one or more PDCCHs in an SPS period is notified from the gNB to the UE. RRC signaling may be used. A new RRC message may be provided for the configuration. Misidentification of the configuration with another PDCCH configuration can be suppressed. Alternatively, an existing RRC message may be used. For example, PDCCH-config may include the configuration. For example, a search space period may be an SPS period. PDCCH-config enables one or more search spaces to be configured in an SPS period.

As another method for notifying a configuration of one or more PDCCHs in an SPS period, the configuration may be included in SPS-config of an RRC message. Including the configuration in SPS-config enables the configuration to be configured simultaneously with another SPS configuration, such as a PDSCH configuration. The UE receives SPS-config, thereby enabling PDSCH and PDCCH configurations in an SPS period to be received, and thus malfunction can be reduced.

Part of the configuration information about the one or more PDCCHs may be configured by PDCCH-config, and the remaining part may be notified by using SPS configuration. Flexible configuration can be performed.

In the configuration of the one or more PDCCHs, a search space period may be a period of a search space configured in one SPS period. For example, when the period is one slot period, a search space is configured in one slot period for each SPS period. In the configuration of the one or more PDCCHs, information about the number of search spaces to be configured in one SPS period may be provided. The number of search spaces may be the same as the number of PDCCHs configured in an SPS period. In this manner, the number of search spaces configured in one SPS period can be limited.

SPS configuration may include the configuration information in a case where the search space period is a period of a search space configured in one SPS period. The gNB transmits, to the UE, the information included in the SPS configuration. For example, the gNB may transmit the information included in "SPS-config" of an RRC message. The UE can monitor a PDCCH configured in one SPS period, by receiving search space configuration information, such as information about a period of a search space configured in one SPS period, information about the number of the search spaces, and the like.

In the configuration of the one or more PDCCHs, a CORESET and/or search space may be configured for each PDSCH configured in an SPS period. With the PDCCH, modification of PDSCH scheduling can be performed. The CORESET and/or search space may be configured before a resource for the PDSCH. The CORESET and/or search space may be configured immediately before a resource for the PDSCH. The CORESET and/or search space and the PDSCH may be consecutively configured. A PDSCH can be received immediately after PDCCH reception.

The gNB may transmit, to the UE, DCI including a configuration of one or more PDCCHs configured in SPS. DCI for SPS activation/deactivation including the configuration may be transmitted. A PDCCH may be used for transmission of the DCI. Dynamic notification can be performed. A configuration of one or more PDCCHs configured in SPS may be notified by using MAC signaling. A MAC CE including the configuration of the one or more PDCCHs configured in the SPS may be provided. Transmission using a PDSCH can be performed. Even when a PDCCH is not transmitted, a configuration of one or more PDCCHs configured in SPS can be notified. Information about offset from a PDCCH for transmitting a configuration of one or more PDCCHs configured in SPS to the one or more PDCCHs configured in the SPS may be provided. The offset information may be included in SPS configuration. Configuration information about the one or more PDCCHs may be notified by using a combination of RRC signaling and a PDCCH. More dynamic and flexible configuration can be performed.

A new RNTI may be provided for reception of one or more PDCCHs configured in an SPS period. The UE receives the PDCCH by using the RNTI. As another method, a Cell RNTI (C-RNTI) may be used. A Configured Scheduling RNTI (CS-RNTI) may be used. Using the C-RNTI or the CS-RNTI enables an existing RNTI to be used, and thus processing can be simplified.

PDSCH scheduling modification information is notified by using one or more PDCCHs configured in an SPS period. PDSCH configuration information other than configuration information transmitted by RRC or DCI may be notified by using each PDCCH.

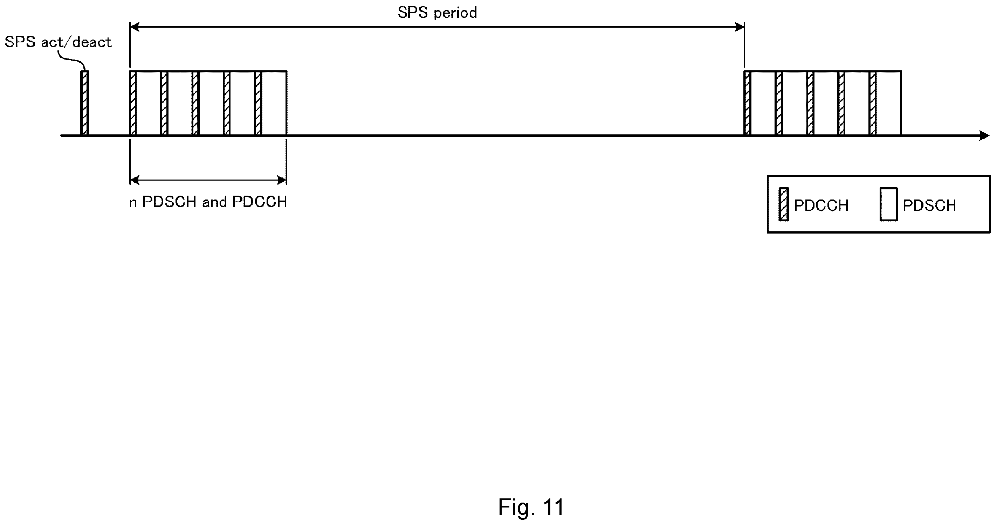

Fig. 11 is a diagram illustrating an example of resource allocation in a case where a plurality of PDSCHs and a plurality of PDCCHs are configured in one SPS period. Fig. 11 illustrates a case where a PDCCH is provided for each PDSCH. The hatched squares and the white squares represent PDCCHs and PDSCHs, respectively. The horizontal axis and the vertical axis represent a time domain and a frequency domain, respectively. The gNB performs SPS configuration for the UE by using RRC signaling, and notifies the UE of SPS activation/deactivation by using a PDCCH. A plurality of PDCCHs are configured for each SPS period, and PDSCH scheduling modification information is transmitted by using each PDCCH.

The plurality of PDSCHs are consecutively allocated in Fig. 11, but may be non-consecutive.

In this manner, configuration of a plurality of PDSCHs can be performed in SPS configuration, and configuration of a PDCCH corresponding to each PDSCH can be performed. Accordingly, modification of scheduling of each PDSCH can be dynamically performed. Scheduling of each PDSCH is modified by the PDCCH, thereby enabling configuration of a resource allocated to each PDSCH, Mobile Switching Centre (MSC), and the like to be modified to be more suitable configuration for variation in a data generation timing and an amount of data. Reduction of delay time and enhancement of resource use efficiency can be achieved.

As described above, data is transmitted by using one or more PDSCHs. As another method, an amount of PDSCH resources may be increased. For example, a plurality of slots may be allocated to one PDSCH. The amount of PDSCH resources may be configurable. In this manner, data can be transmitted by using one PDSCH. In SPS configuration, configuration of one PDSCH may be performed. An amount of PDSCH resources may be configurable. The amount of PDSCH resources may be configured by RRC. Alternatively, the amount of PDSCH resources may be configured by MAC signaling. Alternatively, DCI including the amount of PDSCH resources may be configured by using a PDCCH. In this manner, the number of PDSCHs configured by SPS can be one, and processing can be simplified.

### First Alteration of First Embodiment

Another method for solving the problem disclosed in the first embodiment will be disclosed. In the SPS configuration, one or more PDSCHs are configured and one or more PDCCHs are configured. The number of PDSCHs and the number of PDCCHs are individually configured.

The method disclosed in the first embodiment may be applied as appropriate to the method for configuring the one or more PDSCHs in an SPS period. The method disclosed in the first embodiment may be applied as appropriate to the method for configuring the one or more PDCCHs in an SPS period. By using these methods, the number of PDSCHs and the number of PDCCHs may be individually configured.

Scheduling modification information about one or more PDSCHs is notified by using each PDCCH configured in one SPS period. PDSCH configuration information other than configuration information transmitted by RRC or DCI may be notified by using each PDCCH.

A method for notifying scheduling modification information about a plurality of PDSCHs by using one PDCCH will be disclosed. A plurality of search spaces corresponding to the respective PDSCHs are provided. The UE receives DCI including scheduling modification information about the respective PDSCHs, and thus receives respective search spaces corresponding to the respective PDSCHs. As described above, the plurality of search spaces corresponding to the respective PDSCHs are provided, thereby enabling a conventional search space configuration method to be used. Complexity of SPS processing can be avoided.

Another method for notifying scheduling modification information about a plurality of PDSCHs by using one PDCCH will be disclosed. One search space corresponding to the plurality of PDSCHs is provided. The UE receives DCI including scheduling modification information about the respective PDSCHs, and thus receives each search space corresponding to the respective PDSCHs. As described above, one search space corresponding to the respective PDSCHs is provided, thereby enabling a conventional search space configuration method to be used. Complexity of SPS processing can be avoided.

Search space configuration information may be included in SPS configuration information. The search space configuration information may be included in configuration information about a PDCCH configured in an SPS period. The search space configuration information may be transmitted from the gNB to the UE by using RRC signaling. The search space configuration information may be included in DCI including SPS activation/deactivation, to be transmitted from the gNB to the UE by using a PDCCH. As these methods, the method disclosed in the first embodiment may be applied as appropriate.

To identify one or more PDSCHs configured by SPS, number(s) may be given to the PDSCH(s). In configuration of one or more PDSCHs, PDSCH configuration information and number(s) for the PDSCH(s) may be associated with each other. The method disclosed in the first embodiment may be applied as appropriate.

In the method for notifying scheduling modification information about a plurality of PDSCHs by using one PDCCH, the above-disclosed PDSCH number may be used to identify which PDSCH the scheduling modification information is for. In this manner, which PDSCH scheduling modification information is for can be explicitly indicated. Malfunction in the gNB and the UE can be reduced.

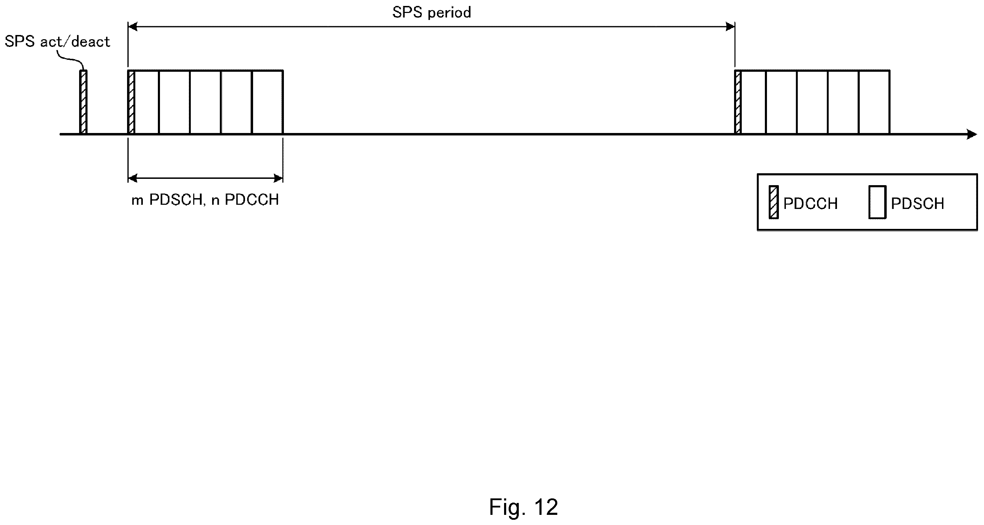

Fig. 12 is a diagram illustrating an example of resource allocation in a case where the number of PDCCHs and the number of PDSCHs are individually configured in SPS configuration. In the SPS configuration, one PDCCH is configured and five PDSCHs are configured. One PDCCH is configured for each SPS period, and scheduling modification information about a corresponding PDSCH is transmitted by using the PDCCH.

The plurality of PDSCHs are consecutively allocated in Fig. 12, but may be non-consecutive.

The number of PDCCHs configured in one SPS period may be more than one. As configuration information about PDCCH(s) configured in one SPS period, the number of PDCCHs may be included. The number of PDCCHs may be configured within a range of the number of PDSCHs configured in one SPS period. As a method for configuring a plurality of PDCCHs, PDCCHs may be periodically configured. The CORESET and search space configuration methods disclosed in the first embodiment may be applied as appropriate. A plurality of PDCCHs can be configured, and PDSCH scheduling modification can be performed by using the number of PDCCHs suitable for a DL data generation timing and an amount of data.

As another method for configuring a PDCCH configured in one SPS period, a PDCCH configured in one SPS period may be configured by using a bitmap. The bit map may be a bit map of the number of bits depending on the number of PDSCHs configured by SPS. As configuration information about the PDCCH, search space configuration may be performed by using the bitmap. The search space configured in the one SPS period may not be periodic, and flexible PDCCH configuration can be performed.

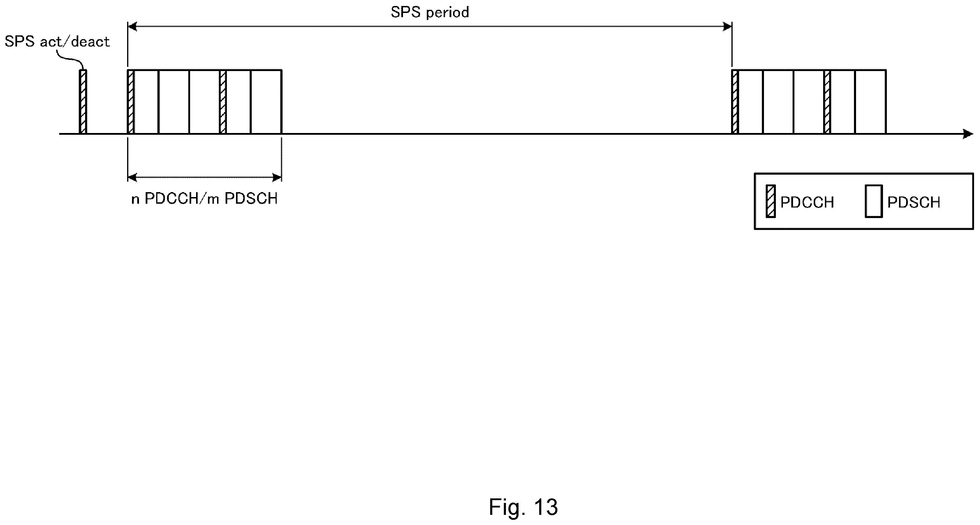

Fig. 13 is a diagram illustrating another example of the resource allocation in a case where the number of PDCCHs and the number of PDSCHs are individually configured in the SPS configuration. In the SPS configuration, two PDCCHs are configured and five PDSCHs are configured. Two PDCCHs are configured for each SPS period, scheduling modification information about the first to third PDSCHs is transmitted by using the first PDCCH, and scheduling modification information about the fourth to fifth PDSCHs is transmitted by using the second PDCCH.

The plurality of PDSCHs are consecutively allocated in Fig. 13, but may be non-consecutive.

In this manner, configuration of a plurality of PDSCHs can be performed in SPS configuration, and configuration of a PDCCH corresponding to each PDSCH can be performed. The number of PDSCHs and the number of PDCCHs are individually configured, thereby enabling flexible PDCCH configuration to be performed. PDCCH resources can be reduced, and thus resource use efficiency can be enhanced. PDCCH reception processing in the UE can be reduced, and thus power consumption can be reduced. As with the effects of the first embodiment, modification of scheduling of each PDSCH can be dynamically performed. Scheduling of each PDSCH is modified by the PDCCH, thereby enabling configuration of a resource allocated to each PDSCH, MSC, and the like to be modified to be more suitable configuration for variation in a data generation timing and an amount of data. Reduction of delay time and enhancement of resource use efficiency can be achieved.

### Second Alteration of First Embodiment

Another method for solving the problem disclosed in the first embodiment will be disclosed. In the SPS configuration, one or more PDSCHs are configured and one or more PDCCHs are configured. The number of PDSCHs and the number of PDCCHs are individually configured. A PDCCH configured for each SPS period includes release information about a PDSCH configured by SPS. The gNB may notify, by using the PDCCH, the UE of release information about one or more PDSCHs configured by SPS.

DCI transmitted by one or more PDCCHs configured for each SPS period may include release information about one or more PDSCHs configured by SPS. When the DCI includes the release information, a new DCI format may be provided. As another method, an existing DCI format may be used. For example, DCI format 2_1 (see NPL 12) may be used. Using the existing DCI format can avoid complexity of processing.

To receive the DCI including the release information, a new RNTI may be provided. For example, the RNTI for receiving the PDCCH disclosed in the first embodiment or the first alteration of the first embodiment may be used. Being an RNTI specific to a PDCCH in SPS configuration can reduce malfunction. As another method, an existing RNTI (see NPL 15) may be used. For example, a C-RNTI or a CS-RNTI may be used. For example, an Interruption RNTI (INT-RNTI) may be used. The INT-RNTI may be used when DCI format 2_1 is used. Using the existing RNTI can avoid complexity of processing.

Release information about one or more PDSCHs may be notified by using one PDCCH. Information for identifying which PDSCH is to be released may be provided and notified. A number is given to a PDSCH configured by SPS, and the PDSCH number may be used as information for identifying a PDSCH to be released. The method for notifying scheduling modification information about one or more PDSCHs by using one PDCCH disclosed in the first alteration of the first embodiment may be applied as appropriate to the method for notifying the PDSCH release information. In place of the PDSCH scheduling modification information or as the PDSCH scheduling modification information, PDSCH release information may be used. The UE receives one or more PDCCHs for each SPS period transmitted from the gNB, thereby enabling the UE to recognize a PDSCH to be released. The UE can release one or more PDSCHs configured by SPS.

The gNB does not transmit, to the UE, data by using a PDSCH notified by release information. The UE may not receive the PDSCH notified by the release information. Both of the gNB and the UE can simplify processing. For example, the gNB releases a PDSCH, depending on a DL data generation timing and an amount of data, thereby enabling the gNB to use a PDSCH suitable for the DL data generation timing and the amount of data. The gNB may use a resource of the released PDSCH for other communication. For example, resource allocation may be performed for a PDSCH for another UE. Use efficiency of radio resources can be enhanced.

As a release method, the PDSCH in the SPS period in which a PDCCH including the release information has been notified is released. In this manner, a PDSCH to be released can be configured for each SPS period, for example. PDSCH release can be performed for each SPS period, depending on a DL data generation timing and an amount of data.

As another release method, the PDSCH after the SPS period in which a PDCCH including the release information has been notified is released. For example, release information about the fourth and fifth PDSCHs is transmitted by using a PDCCH in the second SPS period. In this case, the fourth and fifth PDSCHs in the second and subsequent SPS periods are released. In this manner, for example, PDSCH release for each SPS period is unnecessary, and thus an amount of information required for notification can be reduced.

As another release method, the PDSCH is released in a certain period starting from the SPS period in which a PDCCH including the release information has been notified. A unit of the period may be time, a slot, a subframe, a radio frame, or the like. Instead of the period, the number of SPS periods may be used. The gNB may transmit release period information to the UE. The release period information may be transmitted together with release information. For example, release information about the fourth and fifth PDSCHs and release period information are transmitted by using a PDCCH in the second SPS period. For example, 5 SPS periods are used as the release period information. In this case, the fourth and fifth PDSCHs in the second to sixth SPS periods are released. In this manner, PDSCH release can be limited to a certain period, for example. For example, flexible configuration with consideration of a DL data generation status can be performed.

Whether the release is performed in only the SPS period with the transmission by using the PDCCH, in the SPS period and subsequent periods, or in a certain period may be configurable. The gNB may transmit, to the UE, information about which of these periods the release is to be performed in. The information may be transmitted together with release information. For example, the information may be configured by using release period information. For example, when the release is performed in only the SPS period with the transmission by using the PDCCH, "1" is configured as the release period information. When the release is performed in the certain period, the number of SPS periods is configured as the release period information. When the release is performed in the SPS period with the transmission using the PDCCH and all of the subsequent periods, the release period information is a predetermined value. For example, the predetermined value may be 0. In this manner, which release method is to be used can be configured. Flexible configuration suitable for a communication pattern of DL data can be performed.

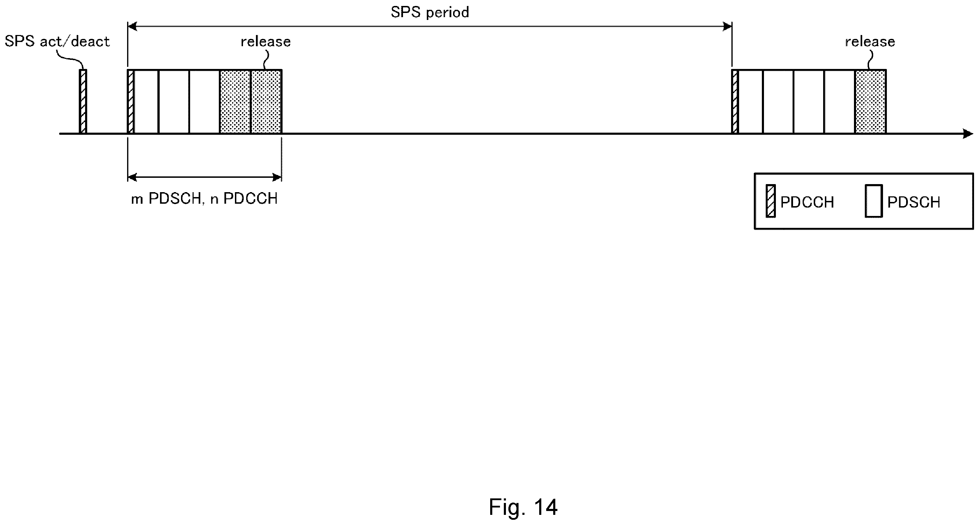

Fig. 14 is a diagram illustrating an example in which a resource of the PDSCH configured by the SPS is released by using a PDCCH. In SPS configuration, the number of PDCCHs and the number of PDSCHs are individually configured. In the SPS configuration, one PDCCH is configured and a plurality of PDSCHs are configured. One PDCCH is configured for each SPS period. By using the PDCCH, information for releasing a PDSCH and information indicating which PDSCH is to be released are transmitted. The UE receives the PDCCH, thereby enabling the UE to recognize which PDSCH is to be released. The UE does not perform reception of a released PDSCH.

The number of PDCCHs may be more than one. As a method for configuring a plurality of PDCCHs, PDCCHs may be periodically configured. The PDCCHs may be configured within a range in which a PDSCH is configured. Alternatively, the PDCCHs may be transmitted within a range in which a PDSCH is configured. As another configuration method, PDCCHs may be configured by using a bitmap. The PDCCHs may be configured within a range in which a PDSCH is configured.

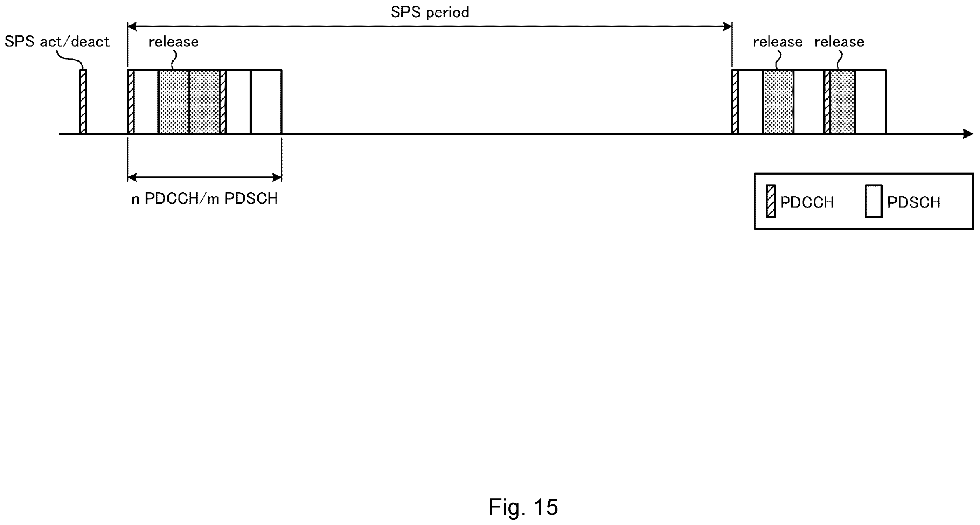

Fig. 15 is a diagram illustrating another example in which the resource of the PDSCH configured by the SPS is released by using the PDCCH. In SPS configuration, two PDCCHs are configured for each SPS period. By using the PDCCH, information for releasing one or more PDSCHs configured by the SPS and information indicating which PDSCH is to be released are transmitted. By using the n-th PDCCH, release information about a PDSCH before transmission of the (n+1)-th PDCCH and information indicating which PDSCH is to be released are transmitted. In Fig. 15, by using the first PDCCH, release information about the first to third PDSCHs and information indicating which PDSCH is to be released are transmitted. By using the second PDCCH, scheduling modification information about the fourth to fifth PDSCHs is transmitted. The UE receives the PDCCH, thereby enabling the UE to recognize which PDSCH is to be released. The UE does not perform reception of a released PDSCH.

Release information about the one or more PDSCHs configured by the SPS may be included in the scheduling modification information about one or more PDSCHs configured by the SPS disclosed in the first alteration of the first embodiment. Scheduling modification information about the one or more PDSCHs configured by the SPS may include information for releasing scheduling of the one or more PDSCHs configured by the SPS. The scheduling modification information about the one or more PDSCHs configured by the SPS may include information for canceling scheduling of the one or more PDSCHs configured by the SPS.

As another method, by using the scheduling modification information about one or more PDSCHs configured by the SPS disclosed in the first alteration of the first embodiment, another PDSCH excluding a PDSCH scheduling of which is modified may be released (or canceled). As the scheduling modification information, information indicating that PDSCH allocation configured in SPS configuration is performed may be provided. As the scheduling modification information, information indicating whether PDSCH allocation configured in SPS configuration is performed may be provided. By using the scheduling modification information about one or more PDSCHs configured by SPS, a PDSCH for which information for performing PDSCH allocation is not indicated may be released (or canceled). In this manner, the UE only needs to receive scheduling modification information, and processing in the UE can be simplified.

In this manner, configuration of a plurality of PDSCHs can be performed in SPS configuration, and configuration of a PDCCH corresponding to each PDSCH can be performed. The number of PDSCHs and the number of PDCCHs are individually configured, thereby enabling flexible PDCCH configuration to be performed. PDCCH resources can be reduced, and thus resource use efficiency can be enhanced. PDCCH reception processing in the UE can be reduced, and thus power consumption can be reduced. Release of each PDSCH can be dynamically performed, and thus configuration can be modified to be configuration suitable for variation in a data generation timing and an amount of data even when multiple PDSCHs are configured in SPS configuration. Reduction of delay time and enhancement of resource use efficiency can be achieved.

### Third Alteration of First Embodiment

Another method for solving the problem disclosed in the first embodiment will be disclosed. One or more PDCCHs are configured in SPS configuration. In the SPS configuration, PDSCH configuration is not performed. The method disclosed above may be applied as appropriate to the method for configuring the one or more PDCCHs in an SPS period. The method disclosed above may be applied as appropriate to a method for notification of the PDCCH configuration from the gNB to the UE.

A PDSCH is scheduled by using one or more PDCCHs configured for each SPS period. By using the PDCCH, PDSCH scheduling information is notified. Information about scheduling of one or more PDSCHs may be notified by using one PDCCH. The method for notifying scheduling modification information about one or more PDSCHs by using one PDCCH disclosed in the first alteration of the first embodiment may be applied as appropriate to the notification method. In place of the scheduling modification information, scheduling information may be employed.

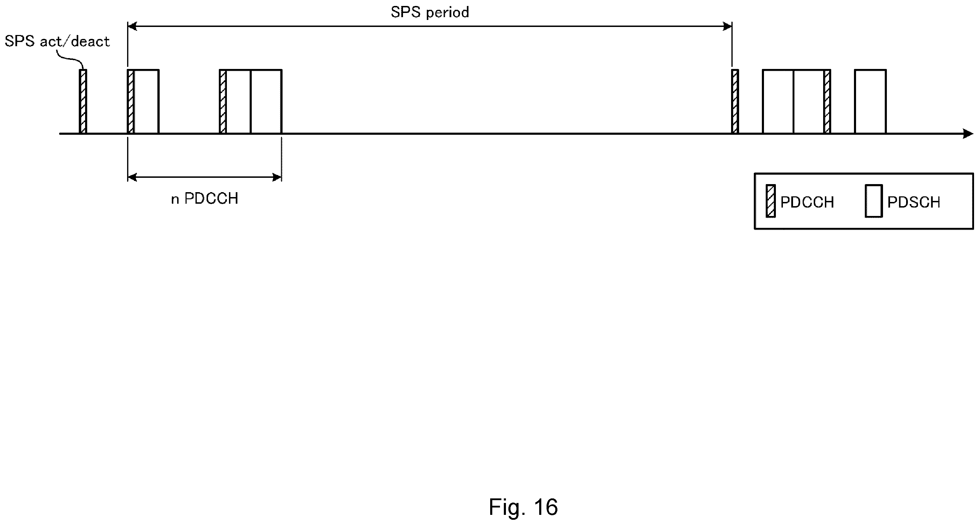

Fig. 16 is a diagram illustrating an example of resource allocation in a case where only one or more PDCCHs are configured in SPS configuration. Two PDCCHs are configured for each SPS period. In the SPS configuration, a PDSCH is not configured. The gNB performs SPS configuration for the UE by using RRC signaling, and notifies the UE of SPS activation/deactivation by using a PDCCH. PDSCH scheduling information is notified by using a PDCCH configured for each SPS period. By using the n-th PDCCH, scheduling information about a PDSCH before transmission of the (n+1)-th PDCCH may be transmitted. In the example in Fig. 16, in the first period, one PDSCH is scheduled by the first PDCCH and two PDSCHs are scheduled by the second PDCCH. In the second period, two PDSCHs are scheduled by the first PDCCH and one PDSCH is scheduled by the second PDCCH. The UE receives the PDCCH, thereby enabling the UE to receive PDSCH scheduling information.

In this manner, configuration of one or more PDCCHs can be performed in SPS configuration. A PDSCH is scheduled by a PDCCH for each SPS period, and thus the number of scheduled PDSCHs can be configured depending on variation in a data generation timing and an amount of data. Accordingly, reduction of delay time and enhancement of resource use efficiency can be achieved.

### Second Embodiment

Another method for solving the problem disclosed in the first embodiment will be disclosed. One or more PUSCHs are configured in CG configuration. One or more PDCCHs are configured in CG configuration. In a CG period, a PDCCH may be provided for each PUSCH. The number of PUSCHs may be the same as the number of PDCCHs. In the CG period that is a period in a case where a UE periodically allocates a resource for transmitting uplink data (referred to hereinafter as UL data), one or more PUSCHs are configured and the same number of PDCCHs as that of the PUSCHs is configured.

One or more PUSCHs are configured in CG configuration. How to configure the plurality of PUSCHs in the CG configuration is an issue. A method for solving the issue will be disclosed. CG configurations configured by conventional RRC (see NPL 19) are configured for the number of PUSCHs configured in one period. Different CG configuration identifiers may be given to the respective configurations. One reference CG configuration may be determined from among the CG configurations. For example, a CG configuration for the first PUSCH configured in a CG period may be used as a reference. The CG configuration may include information indicating the reference CG. The same CG configuration information as the reference CG configuration information, from among other CG configuration information, may be omitted. An amount of information required to be notified from a gNB to the UE can be reduced. In this manner, configuration of a plurality of PUSCHs can be performed in one CG period.

CG activation/deactivation will be disclosed. The gNB may notify the UE of CG activation/deactivation by using RRC signaling. The gNB may regard, as CG activation and deactivation, configuration and release of a CG configuration performed for the UE by using RRC signaling. CG activation/deactivation is performed for each CG configuration configured by RRC.

As another method, the gNB may notify the UE of CG activation/deactivation for each CG configuration configured by RRC. DCI including the CG activation/deactivation may be notified by using a PDCCH. The information related to CG activation/deactivation includes conventional information, such as frequency domain resource allocation, time domain resource allocation, information indicating initial transmission or retransmission (NDI), and the like (see NPLs 12 and 13). As the information related to CG activation/deactivation, a CG configuration identifier configured by RRC may be included. The CG configuration identifier may indicate which CG configuration for PUSCH is to be activated or deactivated.

The SPS activation/deactivation method disclosed in the first embodiment may be applied as appropriate to the CG activation/deactivation method. In place of the SPS, a CG may be used. In place of the PDSCH configured by SPS, a PUSCH configured by a CG may be used. With the CG, similar effects can also be achieved.

Another method for configuring a plurality of PUSCHs will be disclosed. The gNB configures, for the UE, one or more PUSCHs in one CG configuration by using RRC. In the one CG configuration, a certain number of PUSCHs to be configured in a CG period is configured. As the CG configuration information configured by the RRC, information related to PUSCH configuration may be included in addition to CG configuration information configured by conventional RRC. Number(s) may be given to one or more PUSCHs configured by a CG. As the information related to PUSCH configuration, the CG configuration information may include the number of PUSCHs and/or PUSCH number(s). The CG configuration information corresponding to the PUSCH(s) may be associated with PUSCH number(s).

One reference PUSCH may be determined. For example, the first PUSCH configured in a CG period may be used as a reference. Which PUSCH is used as the reference may be statically predetermined by a specification or the like. As another method, CG configuration may include information indicating the reference PUSCH. The same CG configuration information as the CG configuration information for the reference PUSCH, from among CG configuration information for another PUSCH, may be omitted. An amount of information required to be notified from the gNB to the UE can be reduced. In this manner, configuration of a plurality of PUSCHs can be performed in one CG period.

The above-disclosed method may be applied as appropriate to CG activation/deactivation. The gNB may regard, as CG activation and deactivation, CG configuration and release performed for the UE by using RRC signaling. Alternatively, the gNB may notify the UE of DCI including the CG activation/deactivation for each CG configuration configured by RRC, by using a PDCCH.

The SPS activation/deactivation method disclosed in the first embodiment may be applied as appropriate to the CG activation/deactivation method. In the method, in place of the SPS, a CG may be used. In place of the PDSCH configured by SPS, a PUSCH configured by a CG may be used. With the CG, similar effects can also be achieved.

A HARQ process number is given to each PUSCH. The HARQ process number may be derived by using a CG configuration identifier. The HARQ process number may be a function of the CG configuration identifier. The HARQ process number may be derived by using a PUSCH number. The HARQ process number may be a function of the PUSCH number. The HARQ process number may be derived by using a slot number to which a PUSCH is allocated. The HARQ process number may be a function of the slot number to which the PUSCH is allocated. With such a method, HARQ can be performed for each PUSCH.

Another method for a HARQ process number will be disclosed. One HARQ process number may be given to one or more PUSCHs in a CG period. The HARQ process number may be derived by using a reference CG configuration identifier. The HARQ process number may be a function of the reference CG configuration identifier. The HARQ process number may be derived by using a slot number to which a reference CG configuration is allocated. The HARQ process number may be a function of the slot number to which the reference CG configuration is allocated. The HARQ process number may be derived by using a PUSCH number. The HARQ process number may be a function of the PUSCH number. The HARQ process number may be derived by using a slot number to which a reference PUSCH is allocated. The HARQ process number may be a function of the slot number to which the reference PUSCH is allocated. With such a method, HARQ can be performed for one or more PUSCHs in a CG period. Multiple HARQ processes, such as those for each PUSCH, are unnecessary. HARQ processing can be simplified.

One or more PDCCHs are provided in a CG period. In the CG period, a PDCCH is provided for each PUSCH. The number of PUSCHs may be the same as the number of PDCCHs. In the CG period, one or more PUSCHs are configured and the same number of PDCCHs as that of the PUSCHs is configured.

The method for configuring one or more PDCCHs in the SPS period disclosed in the first embodiment may be applied as appropriate to the PDCCH configuration method. In the method, in place of the SPS, a CG may be used.

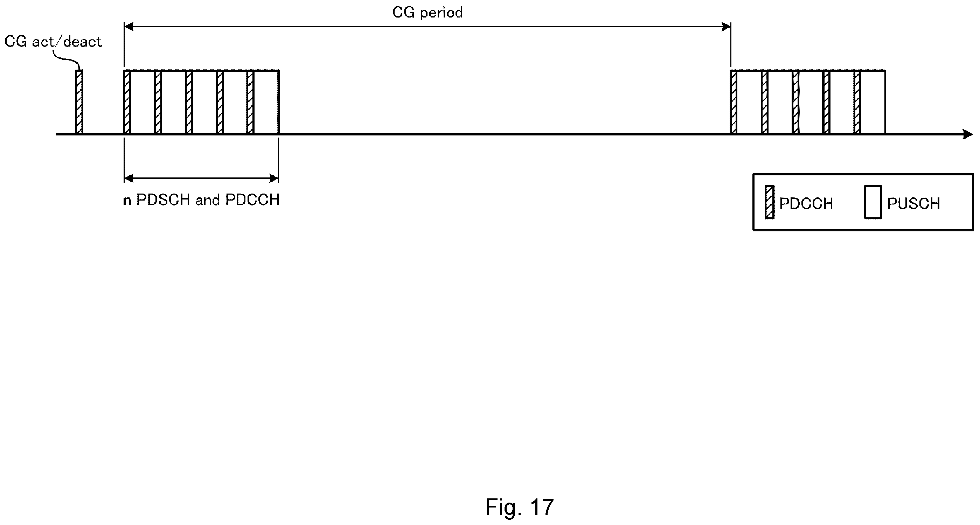

Fig. 17 is a diagram illustrating an example of resource allocation in a case where a plurality of PUSCHs and a plurality of PDCCHs are configured in CG configuration. In the CG configuration, a plurality of PUSCHs are configured and a PDCCH is provided for each PUSCH. The hatched squares and the white squares represent PDCCHs and PUSCHs, respectively. The horizontal axis and the vertical axis represent a time domain and a frequency domain, respectively. The gNB performs CG configuration for the UE by using RRC signaling, and notifies the UE of CG activation/deactivation by using a PDCCH. A plurality of PDCCHs are configured for each CG period, and scheduling modification information about a corresponding PUSCH is transmitted by using each PDCCH.

The plurality of PUSCHs are consecutively allocated in Fig. 17, but may be non-consecutive.

In UL communication, variation in a data generation timing and an amount of data may occur. The UE may transmit information related to an amount of UL data and a data generation timing by appropriately using a PUSCH configured by a CG. The information may be included in a MAC CE. The information may be transmitted together with UL data. A Buffer Status Report (BSR) may be used to transmit the UL data amount information. The gNB that has received the information may modify scheduling of the PUSCH configured by the CG. Scheduling modification information about the PUSCH to be modified may be notified to the UE by a PDCCH. The UE receives the PDCCH, thereby enabling the UE to acquire PUSCH scheduling information. The UE may transmit UL data by using a PUSCH scheduling of which is modified.

In this manner, configuration of a plurality of PUSCHs can be performed in CG configuration, and configuration of a PDCCH corresponding to each PUSCH can be performed. Accordingly, modification of scheduling of each PUSCH can be dynamically performed. Scheduling of each PUSCH is modified by the PDCCH, thereby enabling configuration of a resource allocated to each PUSCH, MSC, and the like to be modified to be more suitable configuration for variation in a data generation timing and an amount of data. Reduction of delay time and enhancement of resource use efficiency can be achieved.

As described above, data is transmitted by using one or more PUSCHs. As another method, an amount of PUSCH resources may be increased. For example, a plurality of slots may be allocated to one PUSCH. An amount of PUSCH resources may be configurable. In this manner, data can be transmitted by using one PUSCH. In CG configuration, configuration of one PUSCH may be performed. An amount of PUSCH resources may be configurable. The amount of PUSCH resources may be configured by RRC. Alternatively, the amount of PUSCH resources may be configured by MAC signaling. Alternatively, DCI including the amount of PUSCH resources may be configured by using a PDCCH. In this manner, the number of PUSCHs configured by a CG can be one, and processing can be simplified.

### First Alteration of Second Embodiment

Another method for solving the problem disclosed in the first embodiment will be disclosed. In the CG configuration, one or more PUSCHs are configured and one or more PDCCHs are configured. The number of PUSCHs and the number of PDCCHs are individually configured.

The method disclosed in the second embodiment may be applied as appropriate to the method for configuring the one or more PUSCHs in a CG period. The method disclosed in the second embodiment may be applied as appropriate to the method for configuring the one or more PDCCHs in a CG period. By using these methods, the number of PUSCHs and the number of PDCCHs may be individually configured.

Scheduling modification information about one or more PUSCHs is notified by using each PDCCH configured in one CG period. PUSCH configuration information other than configuration information transmitted by RRC or DCI may be notified by using each PDCCH.

A method for notifying scheduling modification information about a plurality of PUSCHs by using one PDCCH will be disclosed. A plurality of search spaces corresponding to the respective PUSCHs are provided. The UE receives DCI including scheduling modification information about the respective PUSCHs, and thus receives respective search spaces corresponding to the respective PUSCHs. As described above, the plurality of search spaces corresponding to the respective PUSCHs are provided, thereby enabling a conventional search space configuration method to be used. The complication of SPS processing can be avoided.

Another method for notifying scheduling modification information about a plurality of PUSCHs by using one PDCCH will be disclosed. One search space corresponding to the plurality of PUSCHs is provided. The UE receives DCI including scheduling modification information about the respective PUSCHs, and thus receives respective search spaces corresponding to the respective PUSCHs. As described above, one search space corresponding to respective PUSCHs is provided, thereby enabling a conventional search space configuration method to be used. The complication of SPS processing can be avoided.

Search space configuration information may be included in CG configuration information. The search space configuration information may be included in configuration information about a PDCCH configured in a CG period. The search space configuration information may be transmitted from the gNB to the UE by using RRC signaling. The search space configuration information may be included in DCI including CG activation/deactivation, to be transmitted from the gNB to the UE by using a PDCCH. As these methods, the method disclosed in the second embodiment may be applied as appropriate.

To identify one or more PUSCHs configured by a CG, number(s) may be given to the PUSCH(s). In configuration of one or more PUSCHs, PUSCH configuration information and number(s) for the PUSCH(s) may be associated with each other. The method disclosed in the second embodiment may be applied as appropriate.

In the method for notifying scheduling modification information about a plurality of PUSCHs by using one PDCCH, the above-disclosed PUSCH number may be used to identify which PUSCH the scheduling modification information is for. In this manner, which PUSCH scheduling modification information is for can be explicitly indicated. Malfunction in the gNB and the UE can be reduced.

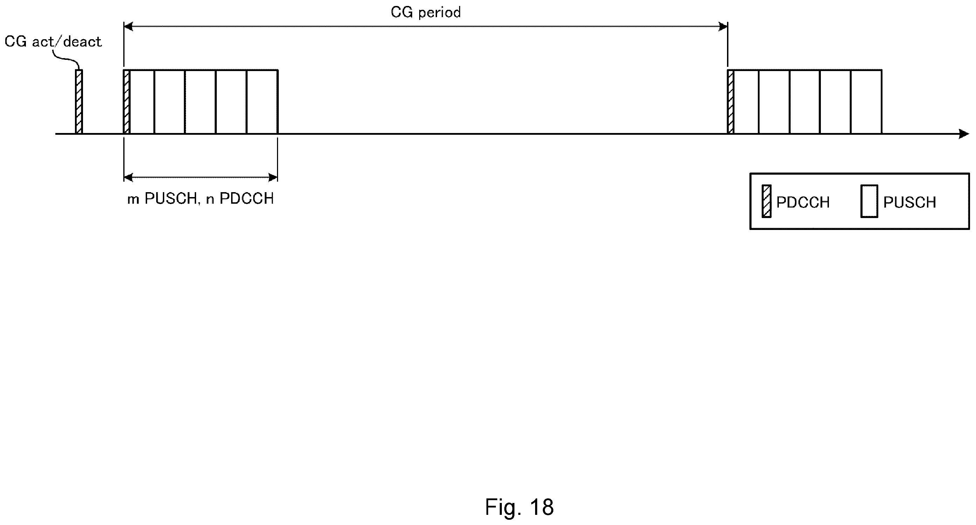

Fig. 18 is a diagram illustrating an example of resource allocation in a case where the number of PDCCHs and the number of PUSCHs are individually configured in CG configuration. In the CG configuration, one PDCCH is configured and five PUSCHs are configured. One PDCCH is configured for each CG period, and scheduling modification information about a corresponding PUSCH is transmitted by using the PDCCH.

The plurality of PUSCHs are consecutively allocated in Fig. 18, but may be non-consecutive.

The number of PDCCHs configured in one CG period may be more than one. As configuration information about PDCCH(s) configured in one CG period, the number of PDCCHs may be included. The number of PDCCHs may be configured within a range of the number of PDSCHs configured in one CG period. As a method for configuring a plurality of PDCCHs, PDCCHs may be periodically configured. The CORESET and search space configuration methods disclosed in the second embodiment may be applied as appropriate. A plurality of PDCCHs can be configured, and PUSCH scheduling modification can be performed by using the number of PDCCHs suitable for a UL data generation timing and an amount of data.

As another method for configuring a PDCCH configured in one CG period, a PDCCH configured in one CG period may be configured by using a bitmap. The bit map may be a bit map of the number of bits depending on the number of PUSCHs configured by a CG. As configuration information about the PDCCH, search space configuration may be performed by using the bitmap. The search space configured in the one CG period may not be periodic, and flexible PDCCH configuration can be performed.

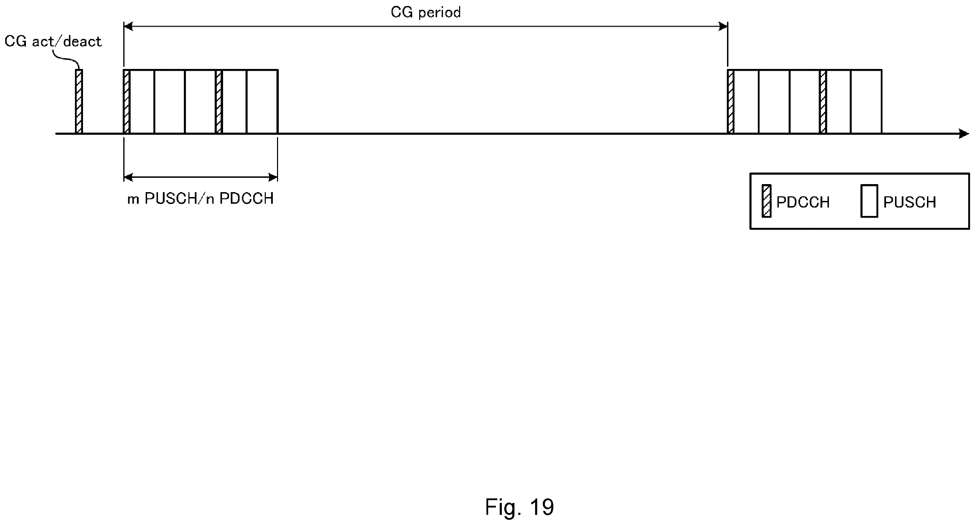

Fig. 19 is a diagram illustrating another example of the resource allocation in a case where the number of PDCCHs and the number of PUSCHs are individually configured in the CG configuration. In the CG configuration, two PDCCHs and five PUSCHs are configured for each CG period. By using the n-th PDCCH, scheduling modification information about a PUSCH before the (n+1)-th PDCCH may be transmitted. In Fig. 19, scheduling modification information about the first to third PUSCHs is transmitted by using the first PDCCH, and scheduling modification information about the fourth to fifth PUSCHs is transmitted by using the second PDCCH.

The plurality of PUSCHs are consecutively allocated in Fig. 19, but may be non-consecutive.

In this manner, configuration of a plurality of PUSCHs can be performed in CG configuration, and configuration of a PDCCH corresponding to each PUSCH can be performed. The number of PUSCHs and the number of PDCCHs are individually configured, thereby enabling flexible PDCCH configuration to be performed. PDCCH resources can be reduced, and thus resource use efficiency can be enhanced. PDCCH reception processing in the UE can be reduced, and thus power consumption can be reduced. As with the effects of the second embodiment, modification of scheduling of each PUSCH can be dynamically performed. Scheduling of each PUSCH is modified by the PDCCH, thereby enabling configuration of a resource allocated to each PUSCH, MSC, and the like to be modified to be more suitable configuration for variation in a data generation timing and an amount of data. Reduction of delay time and enhancement of resource use efficiency can be achieved.

### Second Alteration of Second Embodiment

Another method for solving the problem disclosed in the first embodiment will be disclosed. In the CG configuration, one or more PUSCHs are configured and one or more PDCCHs are configured. The number of PUSCHs and the number of PDCCHs are individually configured. A PDCCH includes release information about a PUSCH configured by a CG. The gNB may notify, by using the PDCCH, the UE of release information about one or more PUSCHs configured by a CG.

DCI transmitted by one or more PDCCHs configured for each CG period may include release information about one or more PUSCHs configured by a CG. When the DCI includes the release information, a new DCI format may be provided. As another method, an existing DCI format (see NPL 12) may be used. For example, DCI format 2_4 may be used. Using the existing DCI format can avoid complexity of processing.

To receive a PDCCH for transmitting the DCI including the release information, a new RNTI may be provided. For example, the RNTI for receiving the PDCCH disclosed in the second embodiment or the first alteration of the second embodiment may be used. Being an RNTI specific to a PDCCH in CG configuration can reduce malfunction. As another method, an existing RNTI (see NPL 15) may be used. For example, a Cancellation Indication RNTI (CI-RNTI) may be used. The CI-RNTI may be used when DCI format 2_4 is used. Using the existing RNTI can avoid complexity of processing.

The method for notifying the release information about the one or more PDSCHs by using one PDCCH and the release method disclosed in the first embodiment may be applied as appropriate to the method for notifying the release information about the one or more PUSCHs by using one PDCCH and the release method. In each method, in place of the SPS, a CG may be used. In place of the PDSCH, a PUSCH may be used. Effects similar to those of the first embodiment can be achieved.

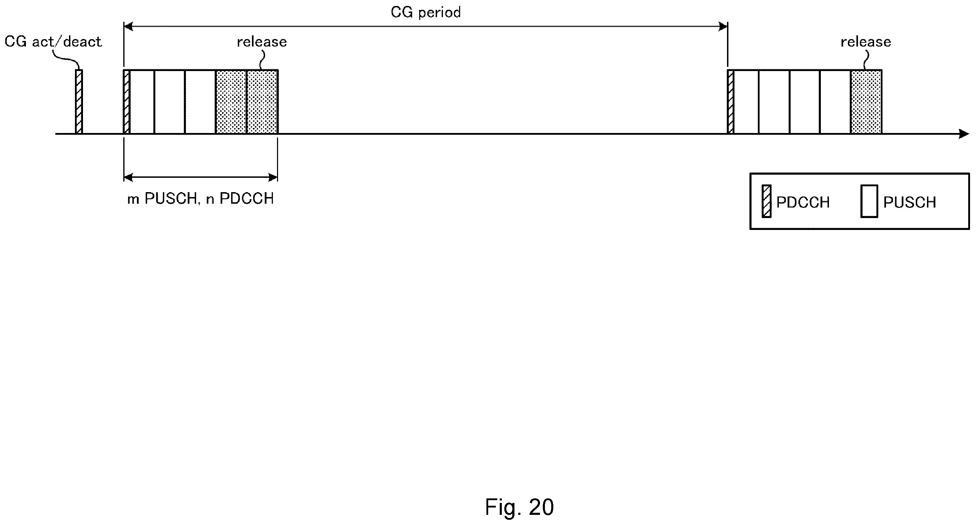

Fig. 20 is a diagram illustrating an example in which a resource of the PUSCH configured by the CG is released by a PDCCH. In CG configuration, the number of PDCCHs and the number of PUSCHs are individually configured. In the CG configuration, one PDCCH is configured and a plurality of PUSCHs are configured. One PDCCH is configured for each CG period. By using the PDCCH, information for releasing a PUSCH and information indicating which PUSCH is to be released are transmitted. The UE receives the PDCCH, thereby enabling the UE to recognize which PUSCH is to be released. The UE does not perform transmission of a released PUSCH.

The number of PDCCHs may be more than one. As a method for configuring a plurality of PDCCHs, PDCCHs may be periodically configured. The PDCCHs may be configured within a range in which a PUSCH is configured. Alternatively, the PDCCHs may be transmitted within a range in which a PUSCH is configured. As another configuration method, PDCCHs may be configured by using a bitmap. The PDCCHs may be configured within a range in which a PUSCH is configured.

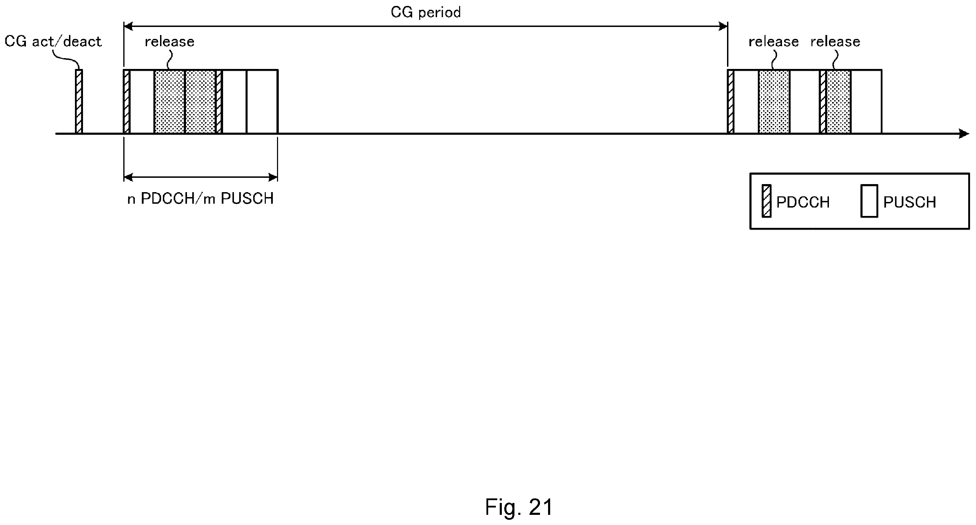

Fig. 21 is a diagram illustrating another example in which the resource of the PUSCH configured by the CG is released by the PDCCH. In CG configuration, two PDCCHs are configured for each CG period. By using the PDCCH, information for releasing one or more PUSCHs configured by the CG and information indicating which PUSCH is to be released are transmitted. By using the n-th PDCCH, release information about a PUSCH before transmission of the (n+1)-th PDCCH and information indicating which PUSCH is to be released may be transmitted. In Fig. 21, by using the first PDCCH, release information about the first to third PUSCHs and information indicating which PUSCH is to be released are transmitted. By using the second PDCCH, scheduling modification information about the fourth to fifth PUSCHs is transmitted. The UE receives the PDCCH, thereby enabling the UE to recognize which PUSCH is to be released. The UE does not perform transmission of a released PUSCH.

Release information about the one or more PUSCHs configured by the CG may be included in the scheduling modification information about one or more PUSCHs configured by the CG disclosed in the first alteration of the second embodiment. Scheduling modification information about the one or more PUSCHs configured by the CG may include information for releasing scheduling of the one or more PUSCHs configured by the CG. The scheduling modification information about the one or more PUSCHs configured by the CG may include information for canceling scheduling of the one or more PUSCHs configured by the CG.

As another method, by using the scheduling modification information about one or more PUSCHs configured by the CG disclosed in the first alteration of the second embodiment, another PUSCH excluding a PUSCH scheduling of which is modified may be released (or canceled). As the scheduling modification information, information indicating that PUSCH allocation configured in CG configuration is performed may be provided. As the scheduling modification information, information indicating whether PUSCH allocation configured in CG configuration is performed may be provided. By using the scheduling modification information about one or more PUSCHs configured by a CG, a PUSCH for which information for performing PUSCH allocation is not indicated may be released (or canceled). In this manner, the UE only needs to receive scheduling modification information, and processing in the UE can be simplified.

In this manner, configuration of a plurality of PUSCHs can be performed in CG configuration, and configuration of a PDCCH corresponding to each PUSCH can be performed. The number of PUSCHs and the number of PDCCHs are individually configured, thereby enabling flexible PDCCH configuration to be performed. PDCCH resources can be reduced, and thus resource use efficiency can be enhanced. PDCCH reception processing in the UE can be reduced, and thus power consumption can be reduced. Release of each PUSCH can be dynamically performed, and thus configuration can be modified to be configuration suitable for variation in a data generation timing and an amount of data even when multiple PUSCHs are configured in CG configuration. Reduction of delay time and enhancement of resource use efficiency can be achieved.

### Third Alteration of Second Embodiment

Another method for solving the problem disclosed in the first embodiment will be disclosed. One or more PDCCHs are configured in CG configuration. In the CG configuration, PUSCH configuration is not performed. The method disclosed above may be appropriately applied to the PDCCH configuration method. The above-disclosed method may be applied as appropriate to a method for notification of the PDCCH configuration from the gNB to the UE.

A PUSCH is scheduled by one or more PDCCHs configured for each CG period. By using the PDCCH, PUSCH scheduling information is notified. Information about scheduling of a plurality of PUSCHs may be notified by using one PDCCH. The above-disclosed method for notifying scheduling modification information about a plurality of PUSCHs by using one PDCCH may be applied as appropriate to the notification method.

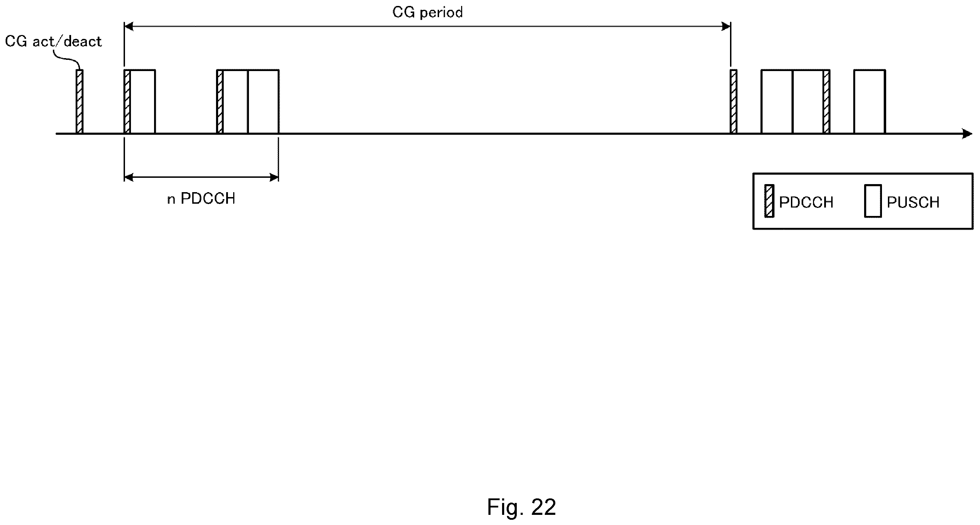

Fig. 22 is a diagram illustrating an example of resource allocation in a case where two PDCCHs are configured in CG configuration. In the CG configuration, a PUSCH is not configured. Two PDCCHs are configured for each CG period. The gNB performs CG configuration for the UE by using RRC signaling, and notifies the UE of CG activation/deactivation by using a PDCCH. PUSCH scheduling information is notified by using a PDCCH configured for each CG period. By using the n-th PDCCH, scheduling information about a PUSCH before transmission of the (n+1)-th PDCCH may be transmitted. In the example in Fig. 22, in the first period, one PUSCH is scheduled by the first PDCCH and two PUSCHs are scheduled by the second PDCCH. In the second period, two PUSCHs and one PUSCH are scheduled by the first PDCCH and the second PDCCH, respectively. The UE receives the PDCCH, thereby enabling the UE to receive PUSCH scheduling information.

In this manner, configuration of one or more PDCCHs can be performed in CG configuration. A PUSCH is scheduled by a PDCCH for each CG period, and thus the number of scheduled PUSCHs can be configured depending on variation in a data generation timing and an amount of data. Accordingly, reduction of delay time and enhancement of resource use efficiency can be achieved.

### Third Embodiment

Another method for solving the problem disclosed in the first embodiment will be disclosed.

One PDSCH is configured in SPS configuration. One or more PDSCHs are configured by using the PDSCH configured in the SPS configuration. MAC signaling may be used for the configuration of the one or more PDSCHs. Information about scheduling of the one or more PDSCHs may be included in a MAC CE.

The conventional SPS configuration method may be applied to the method for configuring the one PDSCH in the SPS configuration. The method disclosed in the first embodiment may be applied as appropriate to the method for configuring one or more PDSCHs. When DL data is transmitted by the PDSCH configured in the SPS configuration, the DL data and the configuration information for the one or more PDSCHs may be multiplexed with each other. The multiplexing may be performed by MAC. When transmission of DL data using the PDSCH configured in the SPS configuration is absent, only the configuration information for the one or more PDSCHs may be transmitted.

When configuration of the one or more PDSCHs is absent, the configuration information may include information indicating the absence of PDSCH configuration. As another method, a MAC PDU may include padding. A UE receives these pieces of information, thereby enabling the UE to recognize the absence of PDSCH configuration.

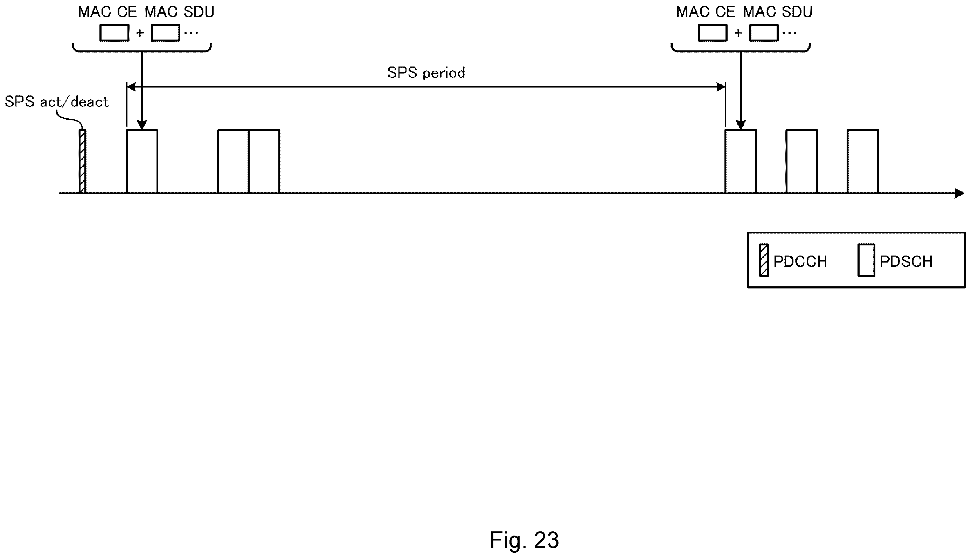

Fig. 23 is a diagram illustrating an example of resource allocation in a case where one or more PDSCHs are configured by using a PDSCH configured in SPS configuration. The hatched square and the white squares represent a PDCCH and PDSCHs, respectively. The horizontal axis and the vertical axis represent a time domain and a frequency domain, respectively. A gNB performs SPS configuration for the UE by using RRC signaling, and notifies the UE of SPS activation/deactivation by using a PDCCH. One PDSCH is configured for each SPS period. By using the PDSCH configured in the SPS configuration, DL data and configuration information for the one or more PDSCHs are transmitted. A MAC SDU including DL data and a MAC CE including configuration information for one or more PDSCHs are multiplexed with each other by MAC. In Fig. 23, two PDSCHs are configured by using the PDSCH configured in the SPS configuration. DL data may be transmitted by the configured PDSCH.

In this manner, configuration of one or more PDSCHs can be performed for each SPS period. The one or more PDSCHs are configured by using the PDSCH configured in the SPS configuration, and thus the number of PDSCHs for each SPS period can be flexibly changed. Configuration information for the one or more PDSCHs is dynamically changed by using the PDSCH configured in the SPS configuration, thereby enabling resource allocation more suitable for variation in a data generation timing and an amount of data to be performed. Reduction of delay time and enhancement of resource use efficiency can be achieved.

### First Alteration of Third Embodiment

Another method for solving the problem disclosed in the first embodiment will be disclosed. In SPS configuration, a plurality of PDSCHs are configured. One or more PDSCHs are configured by using the PDSCH configured in the SPS configuration. In other words, a plurality of PDSCHs are configured in SPS configuration, and one or more PDSCHs are additionally configured by using the PDSCH. MAC signaling may be used for the configuration of the one or more PDSCHs configured by using the PDSCH configured in the SPS configuration. The configuration information for the one or more PDSCHs may be included in a MAC CE.

The configuration method disclosed in the first embodiment may be applied to the method for configuring the plurality of PDSCHs in the SPS configuration. When DL data is transmitted by the PDSCH configured in the SPS configuration, the DL data and the configuration information for the one or more PDSCHs may be multiplexed with each other. The multiplexing may be performed by MAC. When transmission of DL data using the PDSCH configured in the SPS configuration is absent, only the configuration information for the one or more PDSCHs may be transmitted.

When configuration of the one or more PDSCHs is absent, the configuration information may include information indicating the absence of PDSCH configuration. As another method, a MAC PDU may include padding. The UE receives these pieces of information, thereby enabling the UE to recognize the absence of PDSCH configuration.

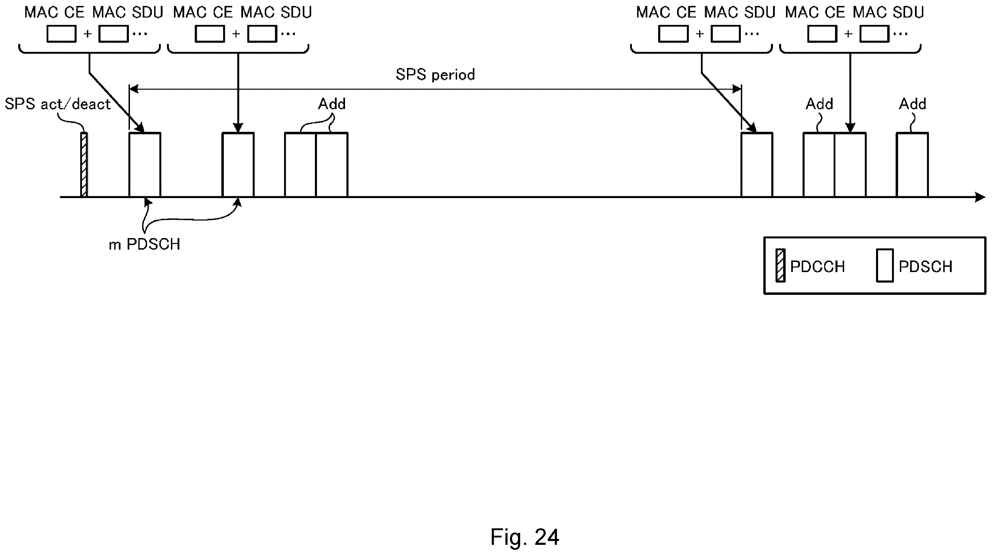

Fig. 24 is a diagram illustrating an example of resource allocation in a case where one or more PDSCHs are configured by using a plurality of PDSCHs configured in SPS configuration. The hatched square and the white squares represent a PDCCH and PDSCHs, respectively. The horizontal axis and the vertical axis represent a time domain and a frequency domain, respectively. The gNB performs SPS configuration for the UE by using RRC signaling, and notifies the UE of SPS activation/deactivation by using a PDCCH. Two PDSCHs are configured for each SPS period. By using the PDSCH configured in the SPS configuration, DL data and configuration information for the one or more PDSCHs are transmitted. A MAC SDU including DL data and a MAC CE including configuration information for one or more PDSCHs are multiplexed with each other by MAC.

In Fig. 24, in the first SPS period, a PDSCH is not configured by using the first PDSCH configured in the SPS configuration and two PDSCHs are configured (Added) by using the second PDSCH. DL data may be transmitted by the configured PDSCH. In the second SPS period, one PDSCH is configured (Added) by using the first PDSCH configured in the SPS configuration and one PDSCH is configured (Added) by using the second PDSCH. DL data may be transmitted by the configured PDSCH.

In this manner, configuration of one or more PDSCHs can be performed for each SPS period. The plurality of PDSCHs are configured in the SPS configuration, thereby enabling the number of PDSCHs and a timing for each SPS period to be flexibly changed. Configuration information for the one or more PDSCHs is dynamically changed by using each PDSCH of the plurality of PDSCHs configured in the SPS configuration, thereby enabling resource allocation more suitable for variation in a data generation timing and an amount of data to be performed. Reduction of delay time and enhancement of resource use efficiency can be achieved.

### Second Alteration of Third Embodiment

Another method for solving the problem disclosed in the first embodiment will be disclosed. One or more PDSCHs are configured in SPS configuration. Release information about one or more PDSCHs is notified by using the PDSCH configured in the SPS configuration. MAC signaling may be used for the notification of the release information about one or more PDSCHs. The release information about one or more PDSCHs may be included in a MAC CE.

The configuration method disclosed in the first embodiment may be applied to the method for configuring the plurality of PDSCHs in the SPS configuration. The release information about one or more PDSCHs configured by the SPS disclosed in the second alteration of the first embodiment may be applied as appropriate to the release information about one or more PDSCHs.

When DL data is transmitted by the PDSCH configured in the SPS configuration, the DL data and the release information about the one or more PDSCHs may be multiplexed with each other. The multiplexing may be performed by MAC. When transmission of DL data using the PDSCH configured in the SPS configuration is absent, only the release information about the one or more PDSCHs may be transmitted. When release of the one or more PDSCHs is absent, the release information may include information indicating the absence of PDSCH release information.

In addition to or in place of the PDSCH release information, information indicating which PDSCH is to be released may be provided and transmitted. The UE receives the PDSCH including the information, thereby enabling the UE to recognize which PDSCH is to be released. The UE does not perform reception of a released PDSCH.

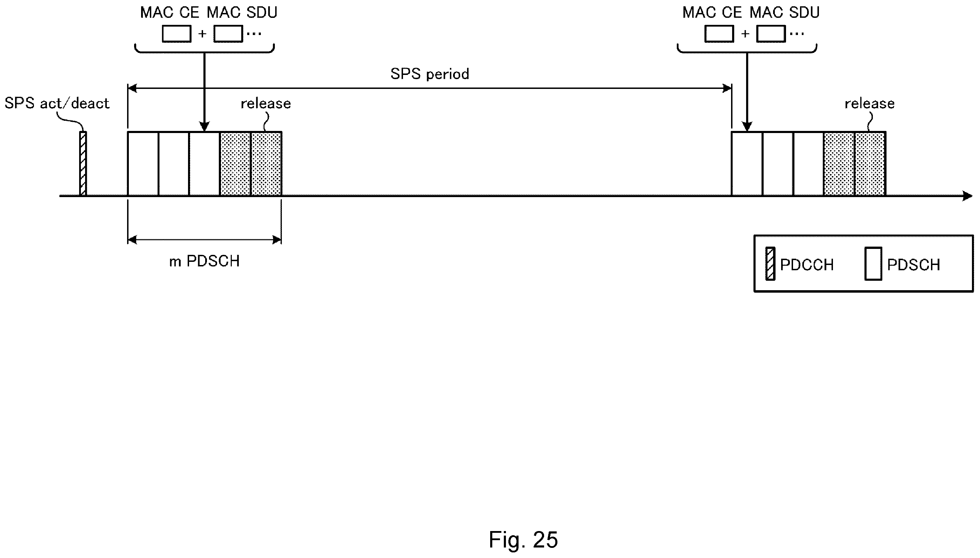

Fig. 25 is a diagram illustrating an example of resource allocation in a case where one or more PDSCHs are released by using a plurality of PDSCHs configured in SPS configuration. The hatched square and the white squares represent a PDCCH and PDSCHs, respectively. The horizontal axis and the vertical axis represent a time domain and a frequency domain, respectively. The gNB performs SPS configuration for the UE by using RRC signaling, and notifies the UE of SPS activation/deactivation by using a PDCCH. Five PDSCHs are configured for each SPS period. By using the PDSCH configured in the SPS configuration, DL data and release information about the one or more PDSCHs are transmitted. A MAC SDU including DL data and a MAC CE including release information about one or more PDSCHs are multiplexed with each other by MAC. Any PDSCH configured in the SPS configuration may be used to transmit the PDSCH release information. In Fig. 25, five PDSCHs are configured in the SPS configuration. In the first period, PDSCH release information is transmitted by using the third PDSCH configured in the SPS configuration. Release information about the fourth and fifth PDSCHs is transmitted. A released resource may be allocated to another UE by the gNB. The UE does not receive a released PDSCH. In the second SPS period, PDSCH release information is transmitted by using the first PDSCH configured in the SPS configuration. Release information about the fourth and fifth PDSCHs is transmitted. A released resource may be allocated to another UE by the gNB. The UE does not receive a released PDSCH.

In this manner, one or more PDSCHs of a plurality of PDSCHs configured in SPS configuration can be released for each SPS period. The number of PDSCHs for each SPS period can be flexibly changed. The PDSCH release information is dynamically changed, thereby enabling resource allocation more suitable for variation in a data generation timing and an amount of data to be performed even when multiple PDSCHs are configured in SPS configuration. Reduction of delay time and enhancement of resource use efficiency can be achieved. PDSCH reception processing in the UE can be reduced, and thus power consumption can be reduced.

### Fourth Embodiment

Another method for solving the problem disclosed in the first embodiment will be disclosed.

One PUSCH is configured in CG configuration. A PUSCH scheduling request is notified by using the PUSCH configured in the CG configuration. One or more PUSCHs are scheduled by a PDCCH.

The conventional CG configuration method may be applied to the method for configuring the one PUSCH in the CG configuration. When UL data is transmitted by the PUSCH configured in the CG configuration, the UL data and the PUSCH scheduling request may be multiplexed with each other. The multiplexing may be performed by MAC. When transmission of UL data using the PUSCH configured in the CG configuration is absent, only the PUSCH scheduling request may be transmitted. A gNB receives these pieces of information from a UE, thereby enabling the gNB to recognize a PUSCH scheduling request.

When the PUSCH scheduling request is absent, information indicating the absence of PUSCH scheduling may be notified. As another method, a MAC PDU may include padding. The gNB receives these pieces of information from the UE, thereby enabling the gNB to recognize the absence of a PUSCH scheduling request.

The gNB transmits a PDCCH to the UE to schedule one or more PUSCHs. The gNB may use, for the scheduling of the one or more PUSCHs, a PUSCH scheduling request received from the UE. The UE receives the PDCCH to receive scheduling information about the one or more PUSCHs. The UE may transmit UL data by using the scheduled PUSCH.

A conventional CG does not require reception of a PDCCH in a CG period. The UE does not need to monitor the PDCCH. However, in the method disclosed in the present embodiment, the UE receives scheduling information about one or more PUSCHs, and thus needs to receive a PDCCH. The method will be disclosed. When transmitting a PUSCH scheduling request, the UE starts PDCCH monitoring. The UE may stop monitoring after PDCCH reception.

Another method will be disclosed. A PDCCH monitoring period may be configured. After transmitting a PUSCH scheduling request, in the PDCCH monitoring period, the UE monitors a PDCCH. When receiving the PDCCH, the UE may continue to monitor a PDCCH during the PDCCH monitoring period. A plurality of PDCCHs may be transmitted during the PDCCH monitoring period, and the UE can receive the plurality of PDCCHs. As another method in the case of the PDCCH reception, the UE may stop PDCCH monitoring. Power consumption of the UE can be reduced. One PDCCH may be transmitted during the PDCCH monitoring period. The one or more PUSCHs are scheduled by the PDCCH, thereby enabling PUSCH resource allocation suitable for an amount of UL data to be performed.

A method for configuring a PDCCH monitoring period will be disclosed. The PDCCH monitoring period may be included in CG configuration information. The gNB may transmit the PDCCH monitoring period to the UE by using RRC signaling. The PDCCH monitoring period included in the CG configuration information may be transmitted by RRC signaling. The gNB may transmit the PDCCH monitoring period to the UE by using a PDCCH. DCI including the PDCCH monitoring period together with CG activation/deactivation information may be transmitted by using a PDCCH. As another method, the PDCCH monitoring period may be included in CG activation/deactivation information.

By using a PDCCH for scheduling one or more PUSCHs, the presence or absence of a subsequent PDCCH or the presence or absence of necessity of monitoring the subsequent PDCCH may be notified. A PDCCH monitoring period may be newly configured. By using the PDCCH, a PDCCH monitoring period for monitoring of the subsequent PDCCH may be notified. As another method, when receiving the PDCCH, the UE may restart the PDCCH monitoring period. In this manner, the gNB can perform flexible PUSCH scheduling for the UE.

The method for scheduling one or more PUSCHs by using the PDCCH disclosed in the third alteration of the second embodiment may be applied as appropriate to the method for scheduling the one or more PUSCHs by using the PDCCH.

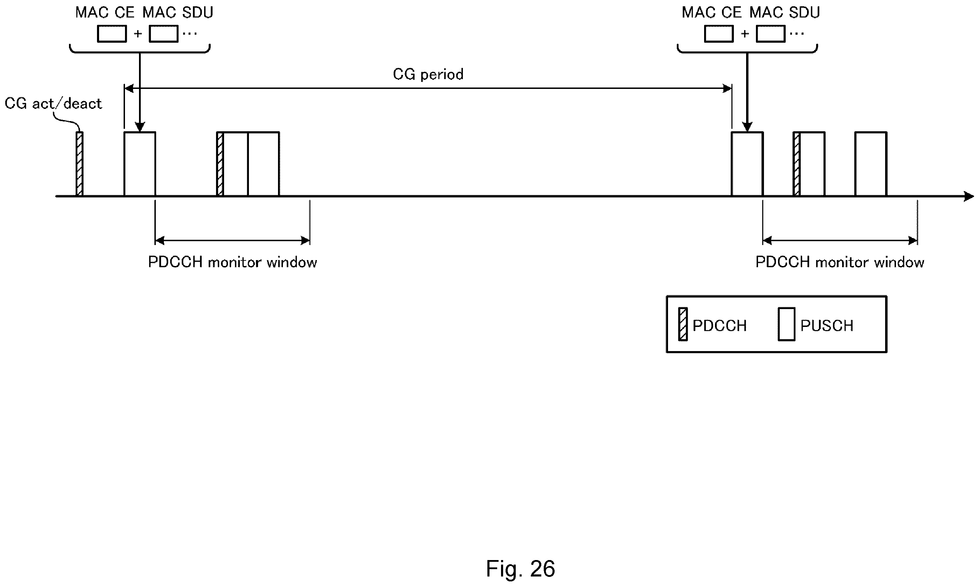

Fig. 26 is a diagram illustrating an example of resource allocation in a case where a scheduling request for one or more PUSCHs is notified by using a PUSCH configured in CG configuration. The hatched squares and the white squares represent PDCCHs and PUSCHs, respectively. The horizontal axis and the vertical axis represent a time domain and a frequency domain, respectively. The gNB performs CG configuration for the UE by using RRC signaling, and notifies the UE of CG activation/deactivation by using a PDCCH. One PUSCH is configured for each CG period. A scheduling request for one or more PUSCHs is transmitted by using the PUSCH configured in the CG configuration. A MAC SDU including UL data and a MAC CE including a scheduling request for one or more PUSCHs are multiplexed with each other by MAC.

The gNB that has received a PUSCH scheduling request from the UE performs scheduling of one or more PUSCHs by using a PDCCH. The PDCCH includes scheduling information about the one or more PUSCHs. In Fig. 26, two consecutive PUSCHs and two non-consecutive PUSCHs are scheduled in the first CG period and the second CG period, respectively. After notifying the gNB of a PUSCH scheduling request, the UE monitors a PDCCH in a PDCCH monitoring period. The UE that has received a PDCCH during the PDCCH monitoring period receives scheduling information about a PUSCH. The UE may transmit UL data by using the received PUSCH scheduling information. The PDCCH including the PUSCH scheduling information and a PUSCH scheduled by the PDCCH may not be temporally consecutive, and may be non-consecutive. Temporal spacing may be provided.

In this manner, configuration of one or more PUSCHs can be performed for each CG period. The PUSCH scheduling request is performed by using the PUSCH configured in the CG configuration, and thus transmission of an SR (Scheduling Request) becomes unnecessary. Necessity of waiting until an SR period is eliminated, and thus delay time can be reduced. The UE is not required to transmit an SR, and thus power consumption can be reduced. The gNB that has received a scheduling request from the UE can flexibly schedule a number of PUSCHs suitable for an amount of UL data generated in the UE. Accordingly, resource allocation more suitable for variation in a data generation timing and an amount of data can be performed. Reduction of delay time and enhancement of resource use efficiency can be achieved.

### First Alteration of Fourth Embodiment

Another method for solving the problem disclosed in the first embodiment will be disclosed. In CG configuration, a plurality of PUSCHs are configured. A PUSCH scheduling request is notified by using the PUSCH configured in the CG configuration. In other words, an additional PUSCH request is notified by using the PUSCH configured in the CG configuration. MAC signaling may be used for the notification of the additional PUSCH request. The additional PUSCH request may be included in a MAC CE. One or more PUSCHs are scheduled by a PDCCH.

The method disclosed in the first alteration of the second embodiment may be applied as appropriate to the method for configuring the plurality of PUSCHs in the CG configuration. When UL data is transmitted by the PUSCH configured in the CG configuration, the UL data and the PUSCH scheduling request may be multiplexed with each other. The multiplexing may be performed by MAC. When transmission of UL data using the PUSCH configured in the CG configuration is absent, only the PUSCH scheduling request may be transmitted. The gNB receives these pieces of information from the UE, thereby enabling the gNB to recognize a PUSCH scheduling request.

When the PUSCH scheduling request is absent, information indicating the absence of the PUSCH scheduling request may be included. As another method, a MAC PDU may include padding. The gNB receives these pieces of information, thereby enabling the gNB to recognize the absence of a PUSCH scheduling request.

The gNB transmits a PDCCH to the UE to schedule one or more PUSCHs. The gNB may use, for the scheduling of the one or more PUSCHs, a PUSCH scheduling request received from the UE. The UE receives the PDCCH to receive scheduling information about the one or more PUSCHs. The method disclosed in the fourth embodiment may be applied as appropriate to the method for enabling the UE to receive the PDCCH. The UE may transmit UL data by using a PUSCH scheduled by the PDCCH.

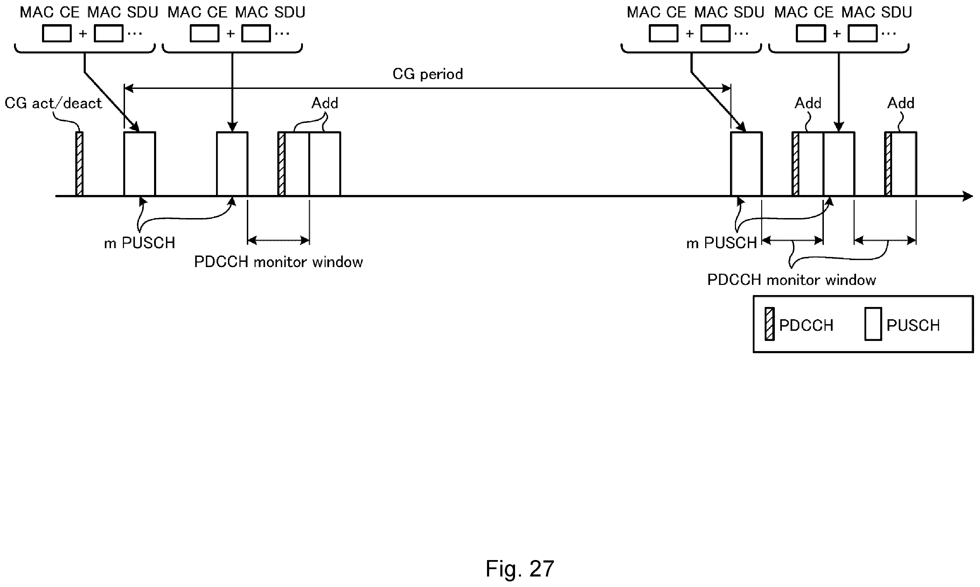

Fig. 27 is a diagram illustrating an example of resource allocation in a case where a PUSCH scheduling request is notified by using a plurality of PUSCHs configured in CG configuration. The hatched squares and the white squares represent PDCCHs and PUSCHs, respectively. The horizontal axis and the vertical axis represent a time domain and a frequency domain, respectively. The gNB performs CG configuration for the UE by using RRC signaling, and notifies the UE of CG activation/deactivation by using a PDCCH. Two PUSCHs are configured for each CG period. UL data and a PUSCH scheduling request are transmitted by using the PUSCHs configured in the CG configuration. A MAC SDU including UL data and a MAC CE including PUSCH scheduling information are multiplexed with each other by MAC.

In Fig. 27, in the first CG period, only UL data is transmitted by the first PUSCH configured in the CG configuration, and UL data and a PUSCH scheduling request multiplexed with each other are transmitted by the second PUSCH. In the second CG period, UL data and a PUSCH scheduling request multiplexed with each other are transmitted by using the first PUSCH configured in the CG configuration, and UL data and a PUSCH scheduling request multiplexed with each other are likewise transmitted by using the second PUSCH.

The gNB that has received a PUSCH scheduling request from the UE performs scheduling of one or more PUSCHs by using a PDCCH. In Fig. 27, in the first CG period, two consecutive PUSCHs are scheduled (Added) by a PDCCH in response to a PUSCH scheduling request included in the second PUSCH, and, in the second CG period, one PUSCH is scheduled (Added) by each PDCCH in response to each of PUSCH scheduling requests included in the first and second PUSCHs. After notifying the gNB of a PUSCH scheduling request, the UE monitors a PDCCH in a PDCCH monitoring period. The UE that has received the PDCCH during the PDCCH monitoring period receives scheduling information about a PUSCH. The UE may transmit UL data by using the received PUSCH scheduling information. The PDCCH including the PUSCH scheduling information and a PUSCH scheduled by the PDCCH may not be temporally consecutive, and may be non-consecutive. Temporal spacing may be provided.

In this manner, configuration of one or more PUSCHs can be performed for each CG period. The PUSCH scheduling request is performed by using the PUSCH configured in the CG configuration, and thus transmission of an SR becomes unnecessary. Necessity of waiting until an SR transmission period is eliminated, and thus delay time can be reduced. The UE is not required to transmit an SR, and thus power consumption can be reduced. The gNB that has received a scheduling request from the UE can flexibly schedule a number of PUSCHs suitable for an amount of UL data generated in the UE. A plurality of PUSCHs can be configured in the CG configuration, thereby enabling the gNB to timely and more flexibly schedule a number of PUSCHs suitable for an amount of UL data generated in the UE. Accordingly, resource allocation more suitable for variation in a data generation timing and an amount of data can be performed. Reduction of delay time and enhancement of resource use efficiency can be achieved.

### Second Alteration of Fourth Embodiment

Another method for solving the problem disclosed in the first embodiment will be disclosed. One or more PUSCHs are configured in CG configuration. By using the PUSCH configured in the CG configuration, information related to a PUSCH used for transmission is notified. MAC signaling may be used for the notification of the information related to a PUSCH used for transmission. The information related to a PUSCH used for transmission may be included in a MAC CE.

The configuration method disclosed in the first alteration of the second embodiment may be applied to the method for configuring the plurality of PUSCHs in the CG configuration. When UL data is transmitted by the PUSCH configured in the CG configuration, the UL data and the information related to a PUSCH used for transmission may be multiplexed with each other. The multiplexing may be performed by MAC. When transmission of UL data using the PUSCH configured in the CG configuration is absent, only the information related to a PUSCH used for transmission may be transmitted. The gNB receives the information from the UE, thereby enabling the gNB to recognize which PUSCH is to be used by the UE for transmission.

When the information related to a PUSCH used for transmission is absent, information indicating the absence of the information may be included. As another method, a MAC PDU may include padding. The gNB receives these pieces of information, thereby enabling the gNB to recognize the absence of a PUSCH used by the UE for transmission.

The information related to a PUSCH used for transmission may be information indicating which PUSCH is to be used for the transmission. The gNB receives the information, thereby enabling the gNB to identify a PUSCH used by the UE for transmission. The gNB can identify a PUSCH not used by the UE for transmission, from among a plurality of PUSCHs configured by a CG. The gNB may allocate, to another UE, a resource of the PUSCH not used by the UE for the transmission. The UE transmits UL data by using a PUSCH used for transmission and notified to the gNB. The UE does not transmit UL data by using a PUSCH other than the PUSCH used for transmission and notified to the gNB.

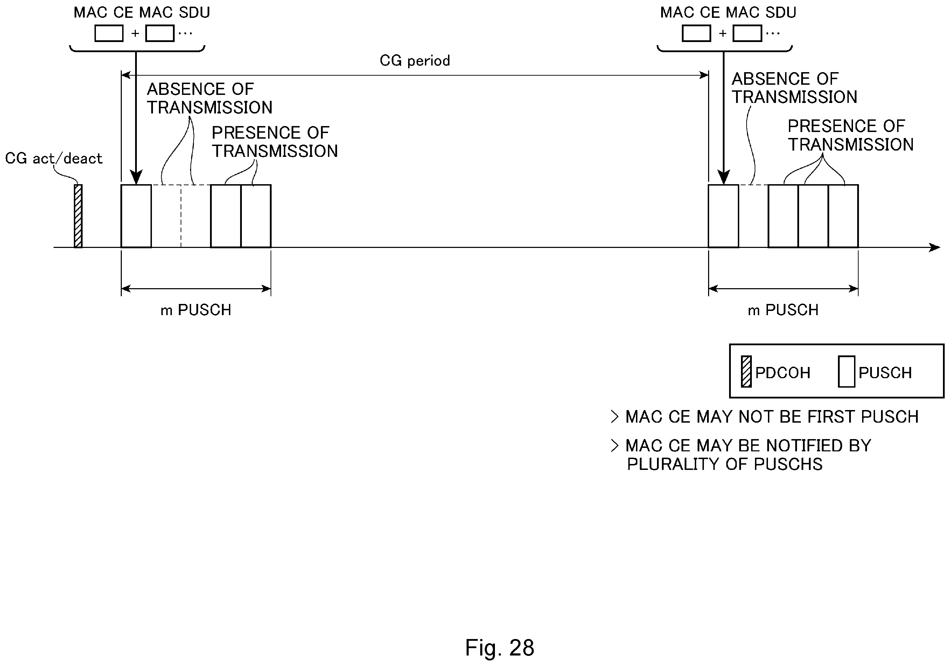

Fig. 28 is a diagram illustrating an example of resource allocation in a case where information related to a PUSCH used by the UE for transmission is transmitted by using a plurality of PUSCHs configured in CG configuration. The hatched square and the white squares represent a PDCCH and PUSCHs, respectively. The horizontal axis and the vertical axis represent a time domain and a frequency domain, respectively. The gNB performs CG configuration for the UE by using RRC signaling, and notifies the UE of CG activation/deactivation by using a PDCCH.

In Fig. 28, five PUSCHs are configured for each CG period. By using the PUSCH configured in the CG configuration, information related to a PUSCH used by the UE for transmission is transmitted. A MAC SDU including UL data and a MAC CE including information related to a PUSC used by the UE for transmission are multiplexed with each other by MAC. Any PUSCH configured in the CG configuration may be used to transmit the information related to a PUSCH used by the UE for transmission. In Fig. 28, the information related to a PUSCH used by the UE for transmission is transmitted on the first PUSCH.

In Fig. 28, in the first CG period, information about the fourth and fifth PUSCHs is transmitted as information related to a PUSCH used by the UE for transmission. In the second CG period, information about the third to fifth PUSCHs is transmitted as information related to a PUSCH used by the UE for transmission. In the first CG period, the UE does not perform transmission on the second and third PUSCHs from among the PUSCHs configured by the CG, and transmits UL data on the fourth and fifth PUSCHs. In the second CG period, the UE does not perform transmission on the second PUSCH, and transmits UL data on the third to fifth PUSCHs.

The gNB receives, from the UE, information related to a PUSCH used by the UE for transmission, thereby enabling the gNB to recognize which PUSCH from among PUSCHs configured by a CG is used or not used by the UE for the transmission. In Fig. 28, in the first CG period, the gNB may not perform reception of the second and third PUSCHs from the UE and may perform reception of the fourth and fifth PUSCHs from the UE. In the second CG period, the gNB may not perform reception of the second PUSCH from the UE and may perform reception of the third to fifth PUSCHs from the UE.

The gNB may allocate, to another UE, a resource of the PUSCH not used by the UE for the transmission.

In this manner, configuration of one or more PUSCHs can be performed for each CG period. Information related to a PUSCH used by the UE for transmission is transmitted by using a PUSCH configured in CG configuration, and thus the gNB only needs to receive only a PUSCH used by the UE for the transmission, from among PUSCHs configured by a CG. Processing in the gNB can be simplified and power consumption can be reduced. The gNB can allocate, to another UE, a resource of a PUSCH not used by the UE for transmission, from among PUSCHs configured by a CG. Resource use efficiency can be enhanced. Resource allocation more suitable for variation in a data generation timing and an amount of data can be performed even when multiple PUSCHs are configured in CG configuration. Reduction of delay time and enhancement of resource use efficiency can be achieved.

### Third Alteration of Fourth Embodiment

Another method for solving the problem disclosed in the first embodiment will be disclosed. One or more PUSCHs are configured in CG configuration. PUSCH release information is notified by using the PUSCH configured in the CG configuration. MAC signaling may be used for the notification of the PUSCH release information. The PUSCH release information may be included in a MAC CE.

The method disclosed in the first alteration of the second embodiment may be applied as appropriate to the method for configuring the plurality of PUSCHs in the CG configuration. When UL data is transmitted by the PUSCH configured in the CG configuration, the UL data and the PUSCH release information may be multiplexed with each other. The multiplexing may be performed by MAC. When transmission of UL data using the PUSCH configured in the CG configuration is absent, only the PUSCH release information may be transmitted. The gNB receives the information from the UE, thereby enabling the gNB to recognize a releasable PUSCH.

When the PUSCH release information is absent, information indicating the absence of the information may be included. As another method, a MAC PDU may include padding. The gNB receives these pieces of information, thereby enabling the gNB to recognize the absence of a releasable PUSCH.

The PUSCH release information may include information for identifying a PUSCH to be released. For example, the information may be a number of the PUSCH to be released. The gNB receives the information, thereby enabling the gNB to identify a releasable PUSCH. The gNB can identify a releasable PUSCH from among a plurality of PUSCHs configured by a CG. The gNB may allocate, to another UE, a resource of the releasable PUSCH. The UE does not transmit UL data on a PUSCH to be released notified to the gNB. The UE transmits UL data by using a PUSCH other than the PUSCH to be released.

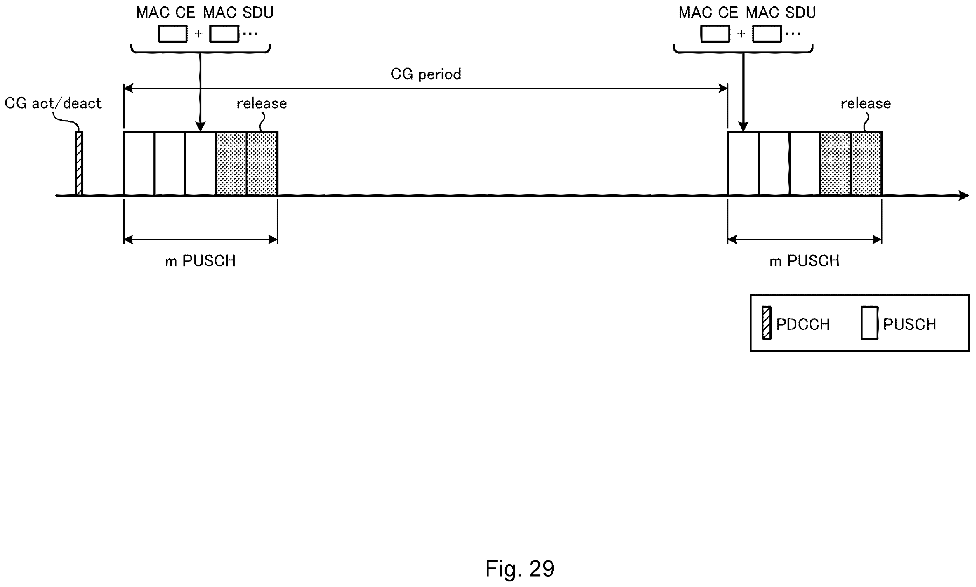

Fig. 29 is a diagram illustrating an example of resource allocation in a case where PUSCH release information is transmitted by using a plurality of PUSCHs configured in CG configuration. The hatched square and the white squares represent a PDCCH and PUSCHs, respectively. The horizontal axis and the vertical axis represent a time domain and a frequency domain, respectively. The gNB performs CG configuration for the UE by using RRC signaling, and notifies the UE of CG activation/deactivation by using a PDCCH.

In Fig. 29, five PUSCHs are configured for each CG period. By using the PUSCH configured in the CG configuration, UL data and PUSCH release information are transmitted. A MAC SDU including UL data and a MAC CE including PUSCH release information are multiplexed with each other by MAC. Any PUSCH configured in the CG configuration may be used to transmit the PUSCH release information. In Fig. 29, PUSCH release information is transmitted on the third PUSCH in the first CG period, and PUSCH release information is transmitted on the first PUSCH in the second CG period.

In Fig. 29, in the first CG period, information about the fourth and fifth PUSCHs is transmitted as PUSCH release information. In the second CG period, information about the fourth and fifth PUSCHs is transmitted as PUSCH release information. In the first CG period, the UE does not perform transmission on the fourth and fifth PUSCHs from among the PUSCHs configured by the CG, and transmits UL data on the first to third PUSCHs. In the second CG period, the UE does not perform transmission on the fourth and fifth PUSCHs, and transmits UL data on the first to third PUSCHs.

The gNB receives, from the UE, information related to PUSCH release, thereby enabling the gNB to recognize which PUSCH from among PUSCHs configured by a CG is releasable. In Fig. 29, in the first CG period, the gNB may not perform reception of the fourth and fifth PUSCHs from the UE and may perform reception of the first to third PUSCHs from the UE. In the second CG period, the gNB may not perform reception of the fourth and fifth PUSCHs from the UE and may perform reception of the first to third PUSCHs from the UE.

The gNB may allocate, to another UE, a resource of the PUSCH indicated by the UE by using the release information.

In this manner, one or more PUSCHs of a plurality of PUSCHs configured in CG configuration can be released for each CG period. The number of PUSCHs for each CG period can be flexibly changed. The PUSCH release information is dynamically changed, thereby enabling resource allocation more suitable for variation in a data generation timing and an amount of data to be performed even when multiple PUSCHs are configured in CG configuration. Reduction of delay time and enhancement of resource use efficiency can be achieved. PUSCH reception processing in the gNB can be reduced, and thus power consumption can be reduced.

### Fourth Alteration of Fourth Embodiment

Another method for solving the problem disclosed in the first embodiment will be disclosed. One or more PUSCHs are configured in CG configuration. An additional PUSCH request is notified by using the PUSCH configured in the CG configuration. MAC signaling may be used for the notification of the additional PUSCH request. The additional PUSCH request may be included in a MAC CE.

The configuration method disclosed in the first alteration of the second embodiment may be applied to the method for configuring the plurality of PUSCHs in the CG configuration. When UL data is transmitted by the PUSCH configured in the CG configuration, the UL data and the additional PUSCH request may be multiplexed with each other. The multiplexing may be performed by MAC. When transmission of UL data using the PUSCH configured in the CG configuration is absent, only the additional PUSCH request may be transmitted. The gNB receives the information from the UE, thereby enabling the gNB to recognize that addition of a PUSCH is necessary for the UE.

When the additional PUSCH request is absent, information indicating the absence of the request may be included. As another method, a MAC PDU may include padding. The gNB receives these pieces of information, thereby enabling the gNB to recognize that addition of a PUSCH is necessary.

Additional PUSCH request information may include the number of PUSCHs to be added. After the PUSCH configured by the CG, the gNB consecutively allocates PUSCH resources for the number of PUSCHs requested by the UE. The gNB does not allocate the allocated resources to another UE. The UE may use the additionally requested PUSCH for UL transmission.

A method for configuring a time domain for a resource of the PUSCH to be added will be disclosed. The time domain for the resource of the PUSCH to be added may be determined by using information about a time period from a PDCCH for CG activation/deactivation. Time domains for respective resources of the PUSCH configured by the CG and the PUSCH to be added can be collectively configured, and thus processing is simplified. Another method will be disclosed. The time domain may be determined by using information about a time period from a timing of transmission of the last PUSCH configured by the CG. The time domain can be configured without depending on the number of PUSCHs configured by the CG, and thus malfunction in a case where a PUSCH is added can be reduced.

The PUSCH time domain resources additionally allocated after the PUSCH configured by the CG may not be consecutive. Offset may be provided.

Configuration information for the time domain for the resource of the PUSCH to be added may be statically predetermined by a specification or the like. Malfunction in the gNB and the UE can be reduced. As another method, the gNB may notify the UE of the configuration information by using RRC signaling. RRC information for CG configuration including the configuration information may be transmitted. As another method, the gNB may notify the UE of the configuration information by using a PDCCH. For example, DCI for CG activation/deactivation including the configuration information may be notified by using a PDCCH. In this manner, the UE can recognize a timing of transmission of an added PUSCH.

The UE may notify the gNB of information about a time domain for the PUSCH to be added. For example, offset from the last PUSCH configured by the CG may be notified. In this manner, the UE can request allocation of an additional PUSCH resource suitable for a UL data generation timing, for example. As a method for the notification from the UE to the gNB, the notification may be performed by using MAC signaling, for example. An additional PUSCH request including the information, notified from the UE to the gNB, may be transmitted.

A method for configuring a frequency domain for a resource of the PUSCH to be added will be disclosed. The configuration method may be statically predetermined by a specification or the like. Malfunction in the gNB and the UE can be reduced. As another method, the frequency domain may be the same as information about a frequency domain for a resource of a PUSCH configured by the CG. For example, the frequency domain may be the same as a frequency domain for a resource of the last PUSCH configured by the CG. A number may be given to the PUSCH configured by the CG. The frequency domain may be the same as a frequency domain for a resource of the n-th PUSCH configured by the CG. The gNB may notify the UE of a number of a PUSCH with the same frequency domain. The gNB may notify the UE of the number by using RRC signaling. RRC information for CG configuration including the number may be transmitted. As another method, the gNB may notify the UE of the number by using a PDCCH. For example, DCI for CG activation/deactivation including the number may be notified by using a PDCCH. In this manner, the UE can recognize a frequency for transmission of an added PUSCH.

The UE may notify the gNB of a number of a PUSCH with the same frequency domain information. For example, the notification may be performed by using MAC signaling. An additional PUSCH request including the information, notified from the UE to the gNB, may be transmitted. In this manner, the UE can request, from the gNB, the same frequency domain as that for a PUSCH with high reception quality, for example.

The method for configuring the frequency domain for the resource of the PUSCH to be added may be applied as appropriate to another configuration for the PUSCH to be added. The UE can perform configuration for an additional PUSCH. The UE can perform transmission of an additional PUSCH.

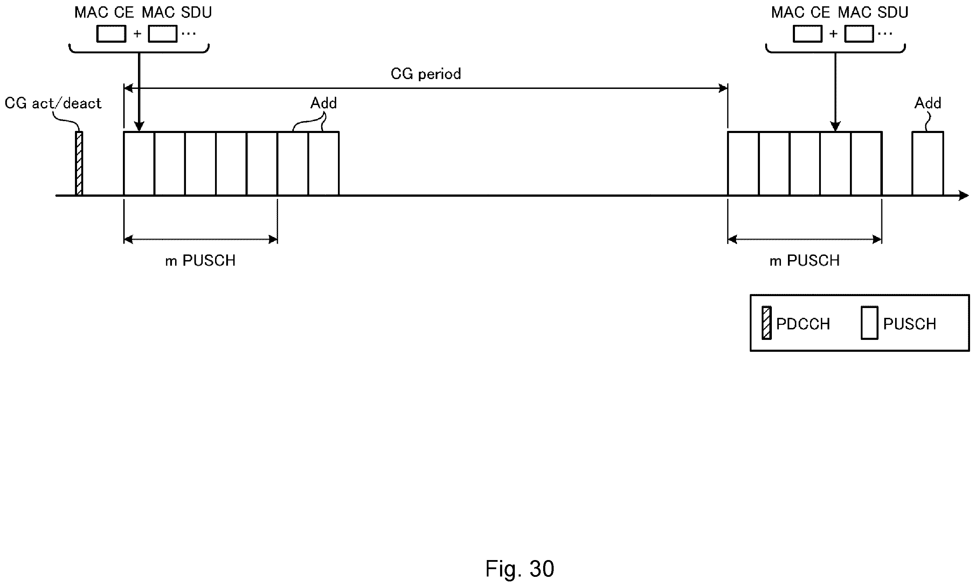

Fig. 30 is a diagram illustrating an example of resource allocation in a case where an additional request for a PUSCH is transmitted by using a plurality of PUSCHs configured in CG configuration. The hatched square and the white squares represent a PDCCH and PUSCHs, respectively. The horizontal axis and the vertical axis represent a time domain and a frequency domain, respectively. The gNB performs CG configuration for the UE by using RRC signaling, and notifies the UE of CG activation/deactivation via a PDCCH.

The gNB may transmit, to the UE, scheduling information about a resource of an additional PUSCH in advance. Part or all of the scheduling information about the resource of the additional PUSCH may be notified by the RRC signaling together with the CG configuration, or may be notified by the PDCCH together with the CG activation/deactivation. For example, part of the scheduling information about the resource of the additional PUSCH may be notified by the RRC signaling together with the CG configuration, and the remaining information may be notified by the PDCCH together with the CG activation/deactivation. In this manner, the UE can acquire scheduling information about a PUSCH to be added.

In Fig. 30, five PUSCHs are configured for each CG period in CG configuration. By using the PUSCH configured in the CG configuration, UL data and additional PUSCH request information are transmitted. A MAC SDU including UL data and a MAC CE including additional PUSCH request information are multiplexed with each other by MAC. Any PUSCH configured in the CG configuration may be used to transmit the additional PUSCH request information. In Fig. 30, respective pieces of additional PUSCH request information are transmitted on the first PUSCH in the first CG period and on the fourth PUSCH in the second CG period.

In Fig. 30, in the first CG period, additional request information about two PUSCHs is transmitted. In the second CG period, additional request information about one PUSCH is transmitted. The additional PUSCH request information may include, for example, offset information. In the first CG period, the first PUSCH includes, together with the additional request information about two PUSCHs, information indicating the absence of offset, for example, an offset value "0." In the second CG period, the fourth PUSCH includes, together with the additional request information about one PUSCH, offset information, for example, information indicating k slots. In an example in Fig. 30, assume that k = 1.

The gNB receives, from the UE, information related to an additional PUSCH request, thereby enabling the gNB to recognize whether to receive a scheduled PUSCH in addition to a PUSCH configured by a CG. In Fig. 30, in the first CG period, the gNB receives two PUSCHs in addition to PUSCHs configured by the CG. In the second CG period, the gNB receives one PUSCH in addition to PUSCHs configured by the CG. In this case, an offset value is considered.

When receiving an additional PUSCH request from the UE, the gNB does not allocate, to another UE, a resource of a PUSCH to be added.

In this manner, one or more PUSCHs can be additionally added for each CG period in addition to a plurality of PUSCHs configured in CG configuration. A PUSCH can be added depending on a request from the UE. Accordingly, the number of PUSCHs for each CG period can be added. Resource allocation more suitable for variation in a UL data generation timing and an amount of data can be performed. Reduction of delay time and enhancement of resource use efficiency can be achieved.

### Fifth Embodiment

As disclosed in the first embodiment, the characteristic of XR traffic has, for example, a non-integer periodicity, but a period of N milliseconds (N is a positive integer) is applied to the conventional SPS and CG, and thus deviation in a resource allocation timing from a data generation timing occurs, thereby causing the necessity of waiting for data transmission/reception until a subsequent period. Accordingly, the conventional SPS and CG is unsuited to the characteristics of XR traffic, thereby causing an increase in delay time. A delay exceeding a required delay due to occurrence of delay in data causes the data to be discarded, thereby causing degradation in communication quality. A fifth embodiment will disclose a method for solving such a problem.

In the method, an offset value is added to an SPS period every n periods configured by SPS (n is a positive integer). A gNB transmits, to a UE, information related to the offset value added to the SPS period. As the information, n, the offset value, information for identifying, among n periods, a period to which the offset value is added, such as a number (k) and the like, information for identifying a PDSCH for which a resource allocation timing is shifted by applying the offset value in n periods, such as a number (m) and the like, or combinations of these pieces of information may be used. k and/or m is not limited to one, and may be more than one. RRC signaling may be used as a method for transmitting the information from the gNB to the UE. For example, RRCReconfiguration including the information may be transmitted. For example, an SPS configuration including the information may be transmitted. As another method, DCI including the information may be transmitted. DCI for SPS activation/deactivation indication including the configuration may be transmitted. A PDCCH may be used for transmission of the DCI. The UE receives the information from the gNB. The UE can recognize, together with an SPS configuration, how often the offset value is to be added to an SPS period. The UE can receive a PDSCH in an SPS period to which the offset value is added. In this manner, an SPS period can be flexibly configured depending on a service type and a state of generation of DL data.

The case where the information related to the offset value added to the SPS period is transmitted from the gNB to the UE is disclosed, but, as another method, the information may be statically predetermined by a specification or the like. Processing can be simplified, and malfunction can be reduced.

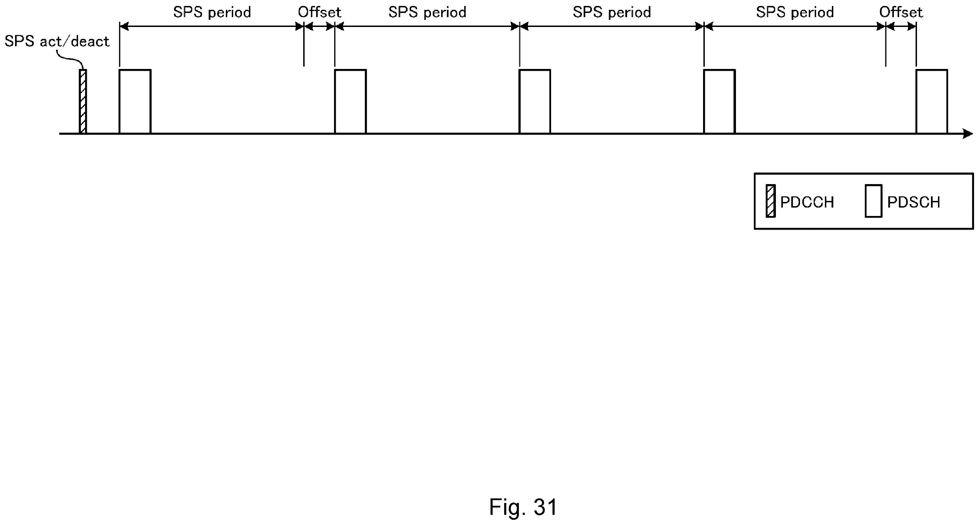

Fig. 31 is a diagram illustrating an example of resource allocation in a case where an offset value is added to an SPS period every n periods configured by SPS. The hatched square and the white squares represent a PDCCH and PDSCHs, respectively. The horizontal axis and the vertical axis represent a time domain and a frequency domain, respectively. In Fig. 31, one PDSCH is configured in the SPS configuration. A plurality of PDSCHs may be configured. The gNB performs SPS configuration for the UE by using RRC signaling, and notifies the UE of SPS activation/deactivation via a PDCCH. Fig. 31 shows a case where one offset is configured, n = 3, and k = 1. For example, in place of k = 1, m = 2 may be configured. A unit of the offset value may be a time unit, a symbol unit, a slot unit, a subframe unit, a radio frame unit, a Transmission Timing Interval (TTI) unit, or combinations of these.

In Fig. 31, a time interval between the first and second PDSCHs configured by the SPS is the time interval obtained by adding the offset value to an SPS period. A time interval between the second and third PDSCHs is the SPS period, and a time interval between the third and fourth PDSCHs is the SPS period. Likewise, a time interval between the fourth and fifth PDSCHs configured by the SPS is the time interval obtained by adding the offset value to the SPS period. A time interval between the fifth and sixth PDSCHs (not illustrated) is the SPS period, and a time interval between the sixth and seventh PDSCHs (not illustrated) is the SPS period. Such configuration in which an offset value is added to the k-th period every n periods is repeated. The gNB transmits a PDSCH at a timing obtained by adding the offset value every n SPS periods. The UE receives a PDSCH by using information related to the offset value added to the SPS period, the information being received from the gNB.

As described above, adding the offset value every n periods enables the gNB to perform adjustment suitable for a DL data generation timing. Even when the DL data generation timing has a non-integer periodicity, an appropriate offset value is added every n periods, thereby enabling a transmission delay time for DL data to be reduced. Accordingly, the situation where DL data is discarded due to a transmission delay time for the DL data exceeding a required delay can be suppressed. Degradation in communication quality can be reduced.

### First Alteration of Fifth Embodiment

Another method for solving the problem disclosed in the fifth embodiment will be disclosed. The gNB notifies the UE of an offset value to be added to a period configured by SPS. The offset value may be notified every n SPS periods. MAC signaling may be used for transmission of the offset value from the gNB to the UE. For example, a MAC CE including the offset value may be transmitted. The MAC CE may be transmitted by using a PDSCH configured in SPS configuration. When DL data is transmitted by the PDSCH configured in the SPS configuration, the DL data and the offset value may be multiplexed with each other. The multiplexing may be performed by MAC. When transmission of DL data using the PDSCH configured in the SPS configuration is absent, only the offset value may be transmitted.

The case where the offset value to be added to the period configured by the SPS is transmitted from the gNB to the UE is disclosed, but, as another method, an offset value may be preconfigured and information about whether the offset value is added may be transmitted. The method for transmitting the information related to the offset value disclosed in the fifth embodiment may be applied as appropriate to a method for preconfiguring the offset value from the gNB for the UE. The above-disclosed method for transmitting the offset value may be applied as appropriate to a method for transmitting the information about whether the offset value is added. In this manner, an amount of dynamically transmitted information can be reduced.

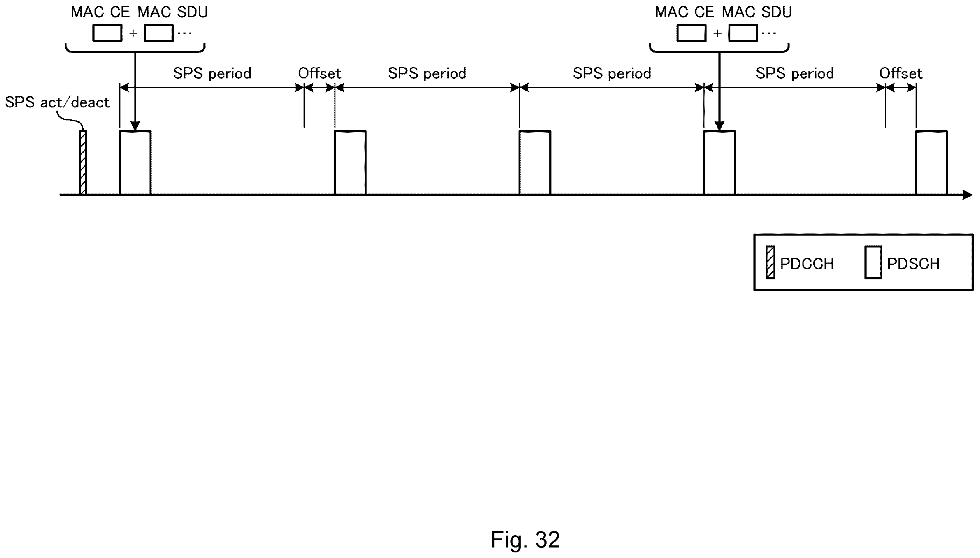

Fig. 32 is a diagram illustrating an example of resource allocation in a case where an offset value to be added to a period configured by SPS is notified. The hatched square and the white squares represent a PDCCH and PDSCHs, respectively. The horizontal axis and the vertical axis represent a time domain and a frequency domain, respectively. In Fig. 32, one PDSCH is configured in the SPS configuration. The gNB performs SPS configuration for the UE via RRC signaling, and notifies the UE of SPS activation/deactivation via a PDCCH.

In Fig. 32, an offset value is transmitted from the gNB to the UE by using the first PDSCH configured by SPS. A MAC SDU including DL data and a MAC CE including an offset value are multiplexed and transmitted. Thus, a timing of transmission of the second PDSCH is the timing obtained by adding the offset value to an SPS period. The offset value is not transmitted on the second PDSCH. Thus, a timing of transmission of the third PDSCH is a timing of the SPS period. The offset value is not transmitted on the third PDSCH. Thus, a timing of transmission of the fourth PDSCH is a timing of the SPS period. The offset value is transmitted by using the fourth PDSCH. Thus, a timing of transmission of the fifth PDSCH is the timing obtained by adding the offset value to the SPS period. As described above, when the offset value is added to the SPS period, the UE is notified of the offset value from the gNB.

The gNB transmits a PDSCH at the SPS period or the timing obtained by adding the offset value to the SPS period. The UE receives a PDSCH at the SPS period when not receiving the offset value from the gNB, and receives a PDSCH at the timing obtained by adding the offset value to the SPS period when receiving the offset value from the gNB. In this manner, the gNB can dynamically add an offset value to an SPS period, and the UE can derive a PDSCH timing by receiving the offset value from the gNB. The UE can receive a PDSCH.

The gNB may notify, by using MAC signaling, the UE of information for identifying, among n periods, a period to which the offset value is added, such as a number (k) and the like, information for identifying a PDSCH for which a resource allocation timing is shifted by applying the offset value in n periods, such as a number (m) and the like, or combinations of these pieces of information. A MAC CE including the information together with the offset value may be notified.

As described above, dynamically adding the offset value enables the gNB to perform adjustment suitable for a DL data generation timing. Even when the DL data generation timing has a non-integer periodicity, appropriate offset is configured, thereby enabling a transmission delay time for DL data to be reduced. When a period of generation of DL data temporally varies, appropriate offset is dynamically configured, thereby enabling a transmission delay time for DL data to be reduced. Accordingly, the situation where DL data is discarded due to a transmission delay time for the DL data exceeding a required delay can be suppressed. Degradation in communication quality can be reduced.

### Second Alteration of Fifth Embodiment

Another method for solving the problem disclosed in the fifth embodiment will be disclosed. In SPS configuration, a PDCCH is configured every n SPS periods. The gNB transmits, to the UE, information related to configuration of the PDCCH. As the information, n, a number (k) of a period in which the PDCCH is transmitted, from among n periods, or a combination of these pieces of information may be used. k is not limited to one, and may be more than one. The configuration information about the PDCCH disclosed in the first embodiment may be used as the information related to configuration of the PDCCH. The method for transmitting the information related to the offset value added to the SPS period disclosed in the fifth embodiment may be applied as appropriate to a method for transmitting the information from the gNB to the UE. In this manner, the UE can receive a PDCCH configured every n SPS periods.

The gNB notifies the UE of an offset value to be added to a period configured by SPS. The offset value may be notified every n SPS periods. The above-disclosed PDCCH is used as a method for transmitting the offset value from the gNB to the UE. For example, DCI including the offset value may be transmitted. The DCI is transmitted by using the above-disclosed PDCCH.

The case where the offset value to be added to the period configured by the SPS is transmitted from the gNB to the UE is disclosed, but, as another method, an offset value may be preconfigured and information about whether the offset value is added may be transmitted. The method for transmitting the information related to the offset value disclosed in the fifth embodiment may be applied as appropriate to a method for preconfiguring the offset value from the gNB for the UE. The above-disclosed method for transmitting the offset value may be applied as appropriate to a method for transmitting the information about whether the offset value is added. In this manner, an amount of dynamically transmitted information can be reduced.

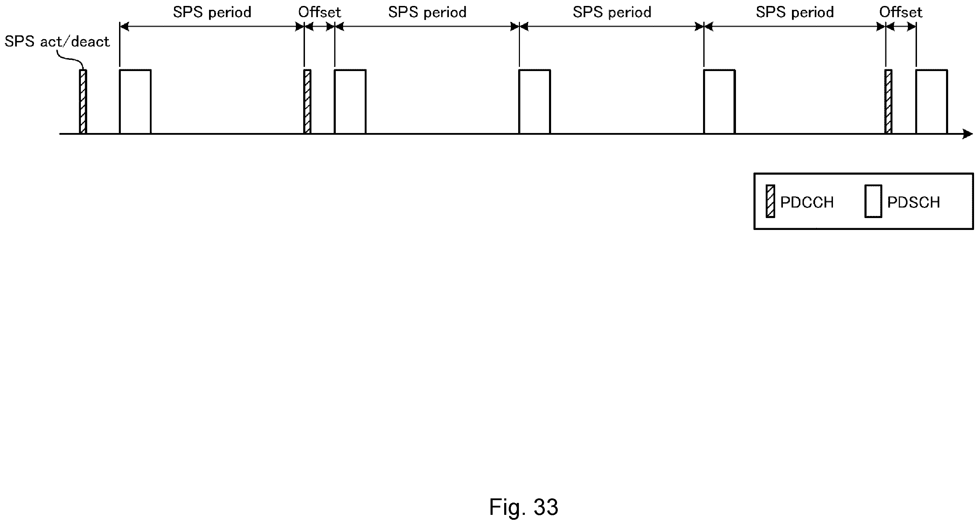

Fig. 33 is a diagram illustrating an example of resource allocation in a case where an offset value to be added to a period configured by SPS is notified by using a PDCCH. The hatched squares and the white squares represent PDCCHs and PDSCHs, respectively. The horizontal axis and the vertical axis represent a time domain and a frequency domain, respectively. In Fig. 33, in SPS configuration, a PDCCH is configured every n SPS periods. A PDCCH is transmitted from the gNB to the UE every n SPS periods. FIG. 33 shows a case where n = 3 and k = 2. A PDCCH is transmitted in the second period every three SPS periods. The PDCCH transmits an offset value to be added to an SPS period.

In Fig. 33, in the second period configured by the SPS, a PDCCH is transmitted and the offset value is transmitted. Thus, a timing of transmission of the second PDSCH is the timing obtained by adding the offset value to the first SPS period. A timing of transmission of each of the first and third PDSCHs is a timing configured by the SPS. Likewise, in the fifth period configured by the SPS, a PDCCH is transmitted and the offset value is transmitted. Thus, a timing of transmission of the fifth PDSCH is the timing obtained by adding the offset value to the fourth SPS period. A timing of transmission of each of the fourth and sixth PDSCHs (not illustrated) is a timing configured by the SPS.

The gNB transmits the offset value by using a configured PDCCH. The UE receives a PDSCH at the SPS period when not receiving the offset value from the gNB, and receives a PDSCH at the timing obtained by adding the offset value to the SPS period when receiving the offset value from the gNB. In this manner, the gNB can add an offset value to an SPS period, and the UE can derive a PDSCH timing by receiving the offset value from the gNB. The UE can receive a PDSCH.

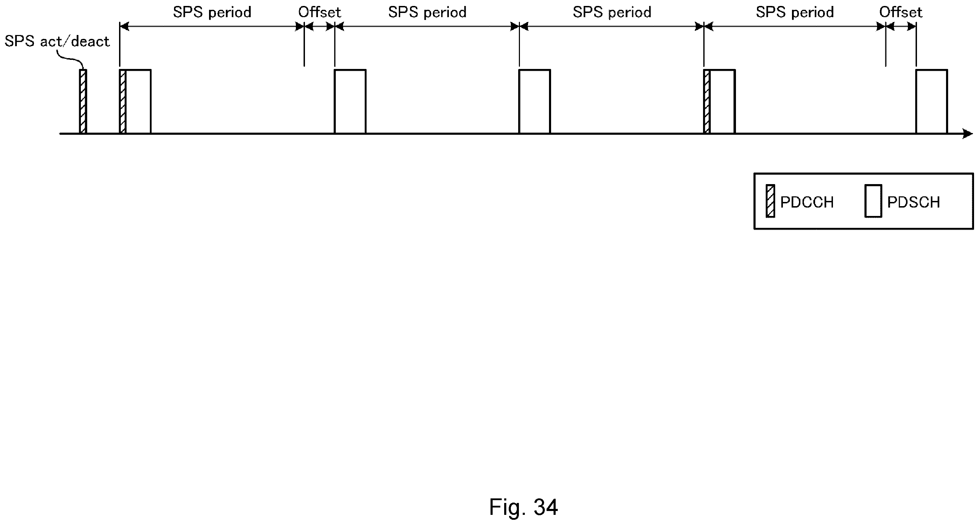

Fig. 34 is a diagram illustrating another example of the resource allocation in a case where the offset value to be added to the period configured by the SPS is notified by using the PDCCH. The hatched squares and the white squares represent PDCCHs and PDSCHs, respectively. The horizontal axis and the vertical axis represent a time domain and a frequency domain, respectively. In Fig. 34, in SPS configuration, a PDCCH is configured every n SPS periods. A PDCCH is transmitted from the gNB to the UE every n SPS periods. FIG. 34 shows a case where n = 3 and k = 1. A PDCCH is transmitted in the first period every three SPS periods. The PDCCH transmits an offset value to be added to an SPS period.

A number (k) of a period in which the offset value is notified may be different from a number of a PDSCH for which a resource allocation timing is shifted by applying the offset value. Information for identifying the PDSCH for which the resource allocation timing is shifted by applying the offset value may be the number of the PDSCH for which the resource allocation timing is shifted by applying the offset value, or may be offset to the number of the period in which the offset value is transmitted. The information is transmitted from the gNB to the UE. The method for notifying the offset value may be applied as appropriate to a method for transmitting the information for identifying the PDSCH for which the resource allocation timing is shifted by applying the offset value. The information for identifying the PDSCH for which the resource allocation timing is shifted by applying the offset value may be notified together with the offset value.

In the method in Fig. 34, the notified offset value is applied to a PDSCH allocated in a subsequent SPS period. A number of a period in which the offset value is notified is 1, and a number of a PDSCH for which a resource allocation timing is shifted by applying the offset value is 2. In Fig. 34, in the first period configured by the SPS, a PDCCH is transmitted and the offset value is transmitted by the PDCCH. Thus, a timing of transmission of the second PDSCH is the timing obtained by adding the offset value to an SPS period. A timing of transmission of each of the first and third PDSCHs is a timing configured by the SPS. Likewise, in the fourth period configured by the SPS, a PDCCH is transmitted and the offset value is transmitted by the PDCCH. Thus, a timing of transmission of the fifth PDSCH is the timing obtained by adding the offset value to the SPS period. A timing of transmission of each of the fourth and sixth PDSCHs (not illustrated) is a timing configured by the SPS.

As described above, a PDCCH is configured every n periods and the offset value is notified by the PDCCH, thereby enabling the gNB to perform adjustment suitable for a DL data generation timing. The offset value is transmitted by the PDCCH, thereby enabling the UE to acquire an offset value early. Even when the DL data generation timing has a non-integer periodicity, appropriate offset is configured every n periods, thereby enabling a transmission delay time for DL data to be reduced. Accordingly, the situation where DL data is discarded due to a transmission delay time for the DL data exceeding a required delay can be suppressed. Degradation in communication quality can be reduced.

The diagrams described in the fifth embodiment to the second alteration of the fifth embodiment each discloses the example in which the offset value is a positive value. The offset value may not be a positive value. The offset value may be a negative value. In a case of the negative value, a PDSCH resource allocation timing to which the offset value is applied is shifted forward by the offset value.

The fifth embodiment to the second alteration of the fifth embodiment each describes the case that a PDSCH resource allocation timing to which the offset value is not applied is the timing after the SPS period from the previous PDSCH resource allocation timing. As another method, an offset value based on a timing given by an SPS configuration period may be configured. In other words, only a PDSCH resource allocation timing to which the offset value is applied is shifted by the offset value, and another PDSCH resource allocation timing is a resource allocation timing based on a period given by SPS configuration. For example, in the fifth embodiment, the SPS period configured in the SPS configuration and the offset value are 8 ms and 1 ms, respectively. The first PDSCH resource allocation timing is 0 ms. When n = 3 and k = 2, the first, second, and third PDSCH resource allocation timings are 0 ms, 7 ms, and 16 ms, respectively. In this manner, only the second PDSCH resource allocation timing can be shifted. Scheduling appropriate to various DL data generation patterns can be performed.

### Sixth Embodiment

Another method for solving the problem disclosed in the fifth embodiment will be disclosed. An offset value is added to a CG period every n periods configured by a CG. A gNB transmits, to a UE, information related to the offset value added to the CG period. As the information, n, the offset value, information for identifying, among n periods, a period to which the offset is added, such as a number (k) and the like, information for identifying a PUSCH for which a resource allocation timing is shifted by applying the offset value in n periods, such as a number (m) and the like, or combinations of these pieces of information may be used. k and/or m is not limited to one, and may be more than one. RRC signaling may be used as a method for transmitting the information from the gNB to the UE. For example, RRCReconfiguration including the information may be transmitted. For example, a CG configuration including the information may be transmitted. As another method, DCI including the information may be transmitted. DCI for CG activation/deactivation indication including the configuration may be transmitted. A PDCCH may be used for transmission of the DCI. The UE receives the information from the gNB. The UE can recognize, together with a CG configuration, how often the offset value is to be added to a CG period. The UE can transmit a PUSCH in a CG period to which the offset value is added. In this manner, a CG period can be flexibly configured depending on a service type and a state of generation of UL data.

The case where the information related to the offset value added to the CG period is transmitted from the gNB to the UE is disclosed, but, as another method, the information may be statically predetermined by a specification or the like. Processing can be simplified, and malfunction can be reduced.

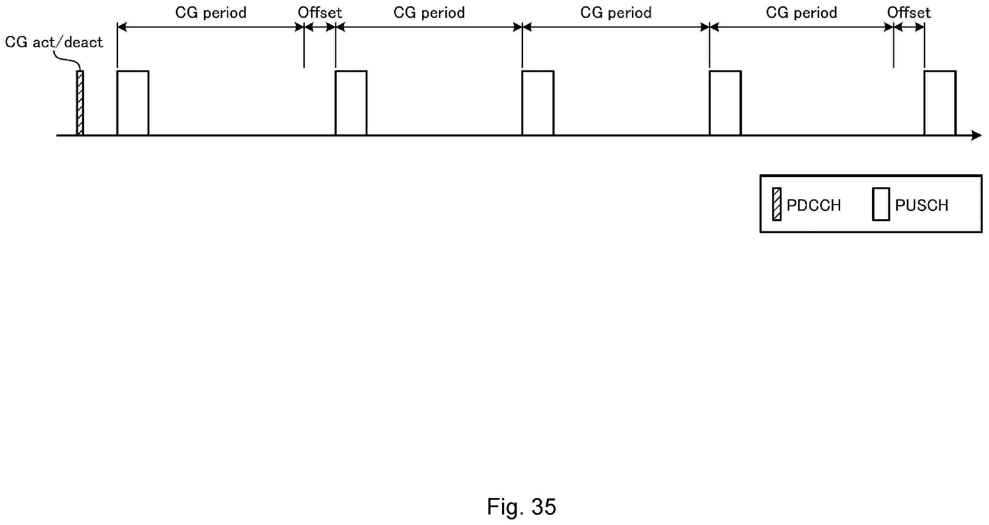

Fig. 35 is a diagram illustrating an example of resource allocation in a case where an offset value is added to a CG period every n periods configured by a CG. The hatched square and the white squares represent a PDCCH and PUSCHs, respectively. The horizontal axis and the vertical axis represent a time domain and a frequency domain, respectively. In Fig. 35, one PUSCH is configured in the CG configuration. A plurality of PUSCHs may be configured. The gNB performs CG configuration for the UE by using RRC signaling, and notifies the UE of CG activation/deactivation via a PDCCH. Fig. 35 shows a case where one offset is configured, n = 3, and k = 1. For example, in place of k = 1, m = 2 may be configured. A unit of the offset value may be a time unit, a symbol unit, a slot unit, a subframe unit, a radio frame unit, a TTI unit, or combinations of these.

In Fig. 35, a time interval between the first and second PUSCHs configured by the CG is the time interval obtained by adding the offset to a CG period. A time interval between the second and third PUSCHs is the CG period, and a time interval between the third and fourth PUSCHs is the CG period. Likewise, a time interval between the fourth and fifth PUSCHs configured by the CG is the time interval obtained by adding the offset to the CG period. A time interval between the fifth and sixth PUSCHs (not illustrated) is the CG period, and a time interval between the sixth and seventh PUSCHs (not illustrated) is the CG period. Such configuration in which an offset value is added to the k-th period every n periods is repeated. The UE transmits a PUSCH at a timing obtained by adding the offset value every n CG periods. The gNB receives a PUSCH at a timing obtained by adding the offset value every n CG periods.

As described above, adding the offset value every n periods enables the gNB to perform adjustment suitable for a UL data generation timing. Even when the UL data generation timing has a non-integer periodicity, an appropriate offset value is added every n periods, thereby enabling a transmission delay time for UL data to be reduced. Accordingly, the situation where UL data is discarded due to a transmission delay time for the UL data exceeding a required delay can be suppressed. Degradation in communication quality can be reduced.

### First Alteration of Sixth Embodiment

Another method for solving the problem disclosed in the fifth embodiment will be disclosed. The UE requests the gNB to add an offset value to a period configured by a CG. Information related to an offset request may be notified every n CG periods. The information related to an offset request may be information indicating a request for addition of an offset value to a CG period, an offset value, or a combination of these. MAC signaling may be used for transmission of the information related to an offset request from the UE to the gNB. For example, a MAC CE including the information may be transmitted. The MAC CE may be transmitted by using a PUSCH configured in CG configuration. When UL data is transmitted by the PUSCH configured in the CG configuration, the UL data and the information related to an offset request may be multiplexed with each other. The multiplexing may be performed by MAC. When transmission of UL data using the PUSCH configured in the CG configuration is absent, only the information related to an offset request may be transmitted.

The case where the information related to a request for the offset value to be added to the period configured by the CG is transmitted from the UE to the gNB is disclosed, but, as another method, an offset value may be preconfigured and information about whether the offset value is added may be transmitted. The method for transmitting the information related to the offset value disclosed in the sixth embodiment may be applied as appropriate to a method for preconfiguring the offset value from the gNB for the UE. The above-disclosed method for transmitting the information related to the offset request may be applied as appropriate to a method for transmitting the information about whether the offset value is added. In this manner, an amount of dynamically transmitted information can be reduced.

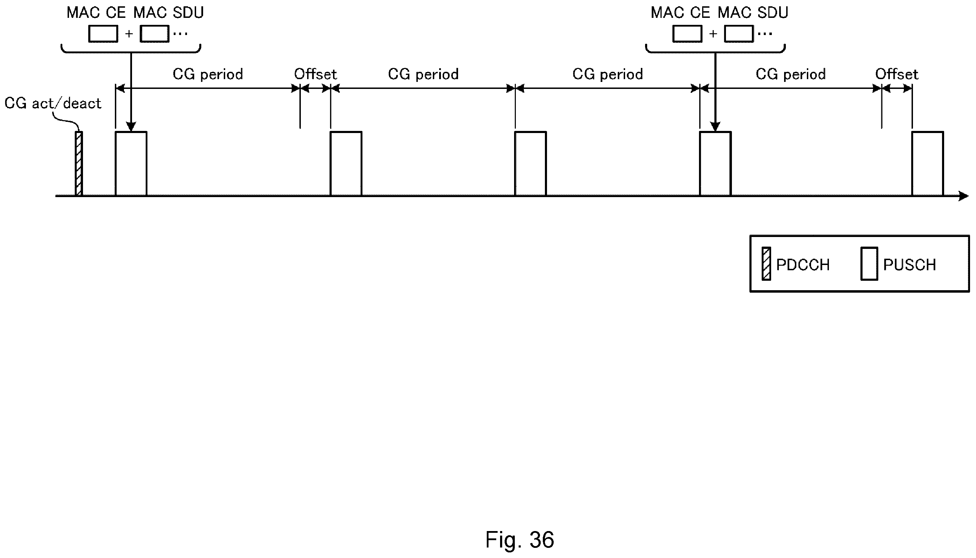

Fig. 36 is a diagram illustrating an example of resource allocation in a case where a request for addition of an offset value to a period configured by a CG is notified. The hatched square and the white squares represent a PDCCH and PUSCHs, respectively. The horizontal axis and the vertical axis represent a time domain and a frequency domain, respectively. In Fig. 36, one PUSCH is configured in the CG configuration. The gNB performs CG configuration for the UE via RRC signaling, and notifies the UE of CG activation/deactivation via a PDCCH.

By using the first PUSCH configured by the CG, information related to an offset request is transmitted from the UE to the gNB. A MAC SDU including UL data and a MAC CE including an offset value are multiplexed and transmitted. Thus, a timing of transmission of the second PUSCH is the timing obtained by adding the offset value to a CG period. The offset value is not transmitted on the second PUSCH. Thus, a timing of transmission of the third PUSCH is a timing of the CG period. The offset value is not transmitted on the third PUSCH. Thus, a timing of transmission of the fourth PUSCH is a timing of the CG period. The offset value is transmitted by using the fourth PUSCH. Thus, a timing of transmission of the fifth PUSCH is the timing obtained by adding the offset value to the CG period. As described above, when the UE notifies the gNB of the offset value, the offset value is added to the CG period.

The UE receives a PUSCH at the CG period when not transmitting the information related to the offset request to the gNB, and receives a PUSCH at the timing obtained by adding the offset value to the CG period when transmitting the information related to the offset request to the gNB. The gNB receives a PUSCH at the CG period when not receiving the information related to the offset request from the UE, and receives a PUSCH at the timing obtained by adding the offset value to the CG period when receiving the information related to the offset request from the UE. In this manner, an offset value can be dynamically added to a CG period in response to an offset request from the UE. The UE transmits the information related to the offset request to the gNB, thereby enabling the gNB to derive a PUSCH timing. The gNB can receive a PUSCH transmitted by the UE with addition of the offset value to a CG period.

The UE may notify the gNB of information for identifying, among n periods, a period to which the offset value is added, such as a number (k) and the like, information for identifying a PDSCH for which a resource allocation timing is shifted by applying the offset value in n periods, such as a number (m) and the like, or combinations of these pieces of information. A MAC CE including the information together with the offset value may be notified.

As described above, the UE dynamically notifies the gNB of the offset request, thereby enabling the UE to perform adjustment suitable for a UL data generation timing. Even when the UL data generation timing has a non-integer periodicity, appropriate offset is requested and a CG period is adjusted, thereby enabling a transmission delay time for UL data to be reduced. When a period of generation of UL data temporally varies, appropriate offset is dynamically requested and a CG period is adjusted, thereby enabling a transmission delay time for UL data to be reduced. Accordingly, the situation where UL data is discarded due to a transmission delay time for the UL data exceeding a required delay can be suppressed. Degradation in communication quality can be reduced.

### Second Alteration of Sixth Embodiment

Another method for solving the problem disclosed in the fifth embodiment will be disclosed. In CG configuration, a PDCCH is configured every n CG periods. The gNB transmits, to the UE, information related to configuration of the PDCCH. As the information, n, a number (k) of a period in which the PDCCH is transmitted, from among n periods, or a combination of these pieces of information may be used. k is not limited to one, and may be more than one. A number (k) of a period in which the PDCCH is transmitted may be a number of a PUSCH for which a resource allocation timing is shifted by applying the offset value. The configuration information about the PDCCH disclosed in the first embodiment may be used as the information related to configuration of the PDCCH. The method for transmitting the information related to the offset value added to the CG period disclosed in the sixth embodiment may be applied as appropriate to a method for transmitting the information from the gNB to the UE. In this manner, the UE can receive a PDCCH configured every n SPS periods.

The gNB notifies the UE of an offset value to be added to a period configured by a CG. The offset value may be notified every n CG periods. The above-disclosed PDCCH is used as a method for transmitting the offset value from the gNB to the UE. For example, DCI including the offset value may be transmitted. The DCI is transmitted by using the above-disclosed PDCCH.

The case where the offset value to be added to the period configured by the CG is transmitted from the gNB to the UE is disclosed, but, as another method, an offset value may be preconfigured and information about whether the offset value is added may be transmitted. The method for transmitting the information related to the offset value disclosed in the sixth embodiment may be applied as appropriate to a method for preconfiguring the offset value from the gNB for the UE. The above-disclosed method for transmitting the offset value may be applied as appropriate to a method for transmitting the information about whether the offset value is added. In this manner, an amount of dynamically transmitted information can be reduced.

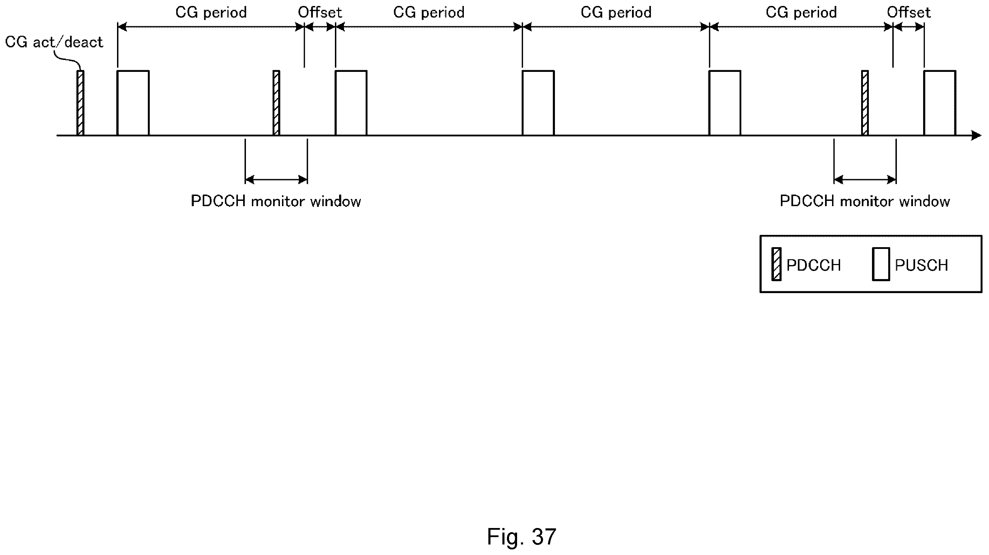

Fig. 37 is a diagram illustrating an example of resource allocation in a case where an offset value to be added to a period configured by a CG is notified by using a PDCCH. The hatched squares and the white squares represent PDCCHs and PUSCHs, respectively. The horizontal axis and the vertical axis represent a time domain and a frequency domain, respectively. In Fig. 37, in CG configuration, a PDCCH is configured every n CG periods. A PDCCH is transmitted from the gNB to the UE every n CG periods. FIG. 37 shows a case where n = 3 and k = 2. A PDCCH is transmitted in the second period every three CG periods. The PDCCH transmits an offset value to be added to a CG period.

A period in which the UE monitors a PDCCH may be configured. For example, the period may be a certain period before a PUSCH transmission timing in a CG period. The gNB may transmit a PDCCH monitoring period to the UE. The above-described method for transmitting the PDCCH configuration information may be applied as appropriate to a method for transmitting the PDCCH monitoring period from the gNB to the UE. A PDCCH configuration including the PDCCH monitoring period may be transmitted. In Fig. 37, the PDCCH monitoring period is configured in a CG period in which a PDCCH is configured.

In Fig. 37, in the second period configured by the CG, a PDCCH is transmitted and the offset value is transmitted by using the PDCCH. The UE monitors a PDCCH in the PDCCH monitoring period to receive a PDCCH. The UE can receive the offset value by receiving the PDCCH. Thus, a timing of transmission of the second PUSCH is the timing obtained by adding the offset value to the first CG period. A timing of transmission of each of the first and third PDSCHs is the CG period. Likewise, in the fifth period configured by the CG, a PDCCH is transmitted and the offset value is transmitted by using the PDCCH. The UE monitors a PDCCH in the PDCCH monitoring period to receive a PDCCH. The UE can receive the offset value by receiving the PDCCH. Thus, a timing of transmission of the fifth PUSCH is the timing obtained by adding the offset value to the fourth CG period. A timing of transmission of each of the fourth and sixth PUSCHs (not illustrated) is the CG period.

The gNB transmits the offset value by using a configured PDCCH. The UE transmits a PUSCH at the CG period when not receiving the offset value from the gNB, and transmits a PUSCH at the timing obtained by adding the offset value to the CG period when receiving the offset value from the gNB. The gNB receives a PUSCH at the CG period when not transmitting the offset value, and receives a PUSCH at the timing obtained by adding the offset value to the CG period when transmitting the offset value. In this manner, the gNB can receive a PUSCH transmitted by the UE at the timing obtained by adding the offset value.

A number (k) of a period in which the PDCCH is notified may be different from a number of a PUSCH for which a resource allocation timing is shifted by applying the offset value. Information for identifying the PDSCH for which the resource allocation timing is shifted by applying the offset value may be the number of the PUSCH for which the resource allocation timing is shifted by applying the offset value, or may be offset to the number of the period in which the PDCCH is transmitted. The information is transmitted from the gNB to the UE. The method for notifying the PDCCH configuration may be applied as appropriate to a method for transmitting the information for identifying the PUSCH for which the resource allocation timing is shifted by applying the offset value. The method for transmitting the offset value may be applied as appropriate to another method for transmitting the information for identifying the PDSCH for which the resource allocation timing is shifted by applying the offset value. The information may be transmitted by using a PDCCH. The information for identifying the PDSCH for which the resource allocation timing is shifted by applying the offset value may be notified together with the offset value.

For example, n = 3 and k = 1. Thus, a PDCCH is transmitted in the first period configured by the CG, and, by using the PDCCH, the offset value and offset for a PDSCH for which a resource allocation timing is shifted by applying the offset value are transmitted. For example, assuming that the offset for the PDSCH for which the resource allocation timing is shifted by applying the offset value is 1, a timing of transmission of the second PUSCH is the timing obtained by adding the offset value to the first CG period. A timing of transmission of each of the first and third PUSCHs is the CG period. Likewise, a PDCCH is transmitted in the fourth period configured by the CG, and, by using the PDCCH, the offset value and offset for a PDSCH for which a resource allocation timing is shifted by applying the offset value are transmitted. Likewise, assuming that the offset for the PDSCH for which the resource allocation timing is shifted by applying the offset value is 1, a timing of transmission of the fifth PUSCH is the timing obtained by adding the offset value to the fourth CG period. A timing of transmission of each of the fourth and sixth PUSCHs is the CG period.

As described above, a PDCCH is configured every n periods and the offset is notified by the PDCCH, thereby enabling the gNB to perform adjustment suitable for a UL data generation timing. The offset value is transmitted by the PDCCH, thereby enabling the UE to acquire an offset value early. Even when the UL data generation timing has a non-integer periodicity, appropriate offset is configured every n periods, thereby enabling a transmission delay time for UL data to be reduced. Accordingly, the situation where UL data is discarded due to a transmission delay time for the UL data exceeding a required delay can be suppressed. Degradation in communication quality can be reduced.

The diagrams described in the sixth embodiment to the second alteration of the sixth embodiment each discloses the example in which the offset value is a positive value. The offset value may not be a positive value. The offset value may be a negative value. In a case of the negative value, a PUSCH resource allocation timing to which the offset value is applied is shifted forward by the offset value.

The sixth embodiment to the second alteration of the sixth embodiment each describes the case that a PUSCH resource allocation timing to which the offset value is not applied is the timing after the CG period from the previous PUSCH resource allocation timing. As another method, an offset value based on a timing given by a CG configuration period may be configured. In other words, only a PUSCH resource allocation timing to which the offset value is applied is shifted by the offset value, and another PUSCH resource allocation timing is a resource allocation timing based on a period given by CG configuration. For example, in the sixth embodiment, the CG period configured in the CG configuration and the offset value are 8 ms and 1 ms, respectively. The first PUSCH resource allocation timing is 0 ms. When n = 3 and k = 2, the first, second, and third PUSCH resource allocation timings are 0 ms, 7 ms, and 16 ms, respectively. In this manner, only the second PUSCH resource allocation timing can be shifted. Scheduling appropriate to various UL data generation patterns can be performed.

### Seventh Embodiment

There is a case where inter-cell mobility processing is performed in response to movement of a UE. In mobility processing performed for a target cell from a source cell, the UE performs Random Access (RA) processing to perform synchronization processing for the target cell. For example, when a gNB including the source cell (source gNB (S-gNB)) is different from a gNB including the target cell (target gNB (T-gNB)), DL data is transferred from the S-gNB to the T-gNB in the mobility processing. The transferred DL data is buffered in the T-gNB until the UE and the gNB restart data communication after completing RA processing. As described above, in the inter-cell mobility, for the RA processing and the transfer processing, a DL data transmission timing in the T-gNB is different from a DL data transmission timing in the S-gNB. Accordingly, even when SPS configuration is configured to be suitable for the DL data transmission timing in the S-gNB, the timing is different from the DL data transmission timing in the T-gNB, and thus an issue of delay in DL data transmission may occur.

UL data is also buffered in the UE until the UE and the gNB restart data communication after performing RA processing. As described above, in the inter-cell mobility, for the RA processing, a UL data transmission timing for the T-gNB is different from a UL data transmission timing for the S-gNB. Accordingly, even when CG configuration is configured to be suitable for the UL data transmission timing for the S-gNB, the timing is different from the UL data transmission timing for the T-gNB, and thus an issue of delay in UL data transmission may occur.

A seventh embodiment will disclose a method for solving such a problem.

In the method, a T-gNB transmits DL data in a buffer to a UE by using dynamic scheduling. After performing RA processing with the UE being a mobility target, the T-gNB performs dynamic scheduling for the UE. The T-gNB performs PDSCH scheduling for DL data transmission by using a PDCCH. After performing RA processing with the T-gNB, the UE receives a dynamic grant. The UE monitors a PDCCH after performing the RA processing with the T-gNB to receive a PDCCH including scheduling information for the UE itself. The UE receives the scheduling information included in the PDCCH, and receives DL data by using a PDSCH indicated by the scheduling information.

In this manner, in mobility processing, DL data in a buffer of the T-gNB can be transmitted early to the UE.

The T-gNB causes the UE to transmit UL data in a buffer of the UE by using dynamic scheduling. After performing RA processing with the UE being a mobility target, the T-gNB performs dynamic scheduling for the UE. The T-gNB performs PUSCH scheduling for UL data transmission by using a PDCCH. After performing RA processing with the T-gNB, the UE receives a dynamic grant. The UE monitors a PDCCH after performing the RA processing with the T-gNB to receive a PDCCH including scheduling information for the UE itself. The UE receives the scheduling information included in the PDCCH, and transmits UL data by using a PUSCH.

In this manner, in mobility processing, UL data in a buffer of the UE can be transmitted early to the T-gNB.

An SR may be transmitted from the UE to the T-gNB. For example, the UE may transmit the SR in RA processing or after the RA processing. The T-gNB that has received the SR performs dynamic scheduling for the UE.

The SR transmitted from the UE to the T-gNB may be unnecessary. For example, when a bearer that periodically generates UL data, such as XR and the like, is configured, an SR transmitted from the UE to the T-gNB may be unnecessary in mobility processing. The SR transmitted from the UE to the T-gNB may be unnecessary in or after RA processing in the mobility processing. When the bearer that periodically generates UL data is configured, in the mobility processing, the T-gNB performs dynamic scheduling for the UE even without receiving the SR. When the bearer that periodically generates UL data is configured, the UE may monitor a PDCCH from the T-gNB even without transmitting the SR to the T-gNB. In this manner, the T-gNB can perform PUSCH scheduling for the UE early.

The case that the configured bearer that periodically generates UL data makes the SR unnecessary in the mobility processing is disclosed, but another method will be disclosed. Information indicating whether an SR is necessary in mobility processing is transmitted from the T-gNB to the UE. For example, in the mobility processing, an HO REQUEST ACK message including the information, transmitted from the T-gNB to the S-gNB, is transmitted, and an RRCReconfiguration message including the information is transmitted from the S-gNB to the UE. In this manner, the T-gNB can configure whether an SR is necessary.

The T-gNB may continue dynamic scheduling after RA processing until the T-gNB configures a CORESET for the UE. Alternatively, the T-gNB may continue the dynamic scheduling until the T-gNB configures SPS for the UE. Alternatively, the T-gNB may continue the dynamic scheduling until the T-gNB configures a CG for the UE. Alternatively, the T-gNB may continue the dynamic scheduling until completion of transmission of DL data stored in a buffer in mobility processing in the T-gNB. The UE can avoid continuing to monitor a PDCCH for dynamic scheduling after RA processing. Power consumption of the UE can be reduced.

Another method for solving the problem disclosed in the seventh embodiment will be disclosed. In mobility processing, the S-gNB deactivates configured SPS and/or CG. The S-gNB transmits SPS and/or CG deactivation to the UE. The UE that has received the SPS and/or CG deactivation from the S-gNB stops processing for the SPS and/or CG. The UE does not release SPS and/or CG configuration. The T-gNB activates the deactivated SPS and/or CG configuration in or after RA processing. The T-gNB transmits SPS and/or CG activation to the UE. The UE that has received the SPS and/or CG activation from the T-gNB performs the processing for the SPS and/or CG again.

A method for notifying the UE of SPS and/or CG deactivation from the S-gNB will be disclosed. RRC signaling may be used for the notification. For example, RRCReconfiguration including the notification, transmitted from the S-gNB to the UE in mobility processing, may be transmitted. The notification can be performed together with indication of mobility processing. As another method, a PDCCH may be used for the notification. DCI including SPS and/or CG deactivation may be notified. The notification can be dynamically performed in accordance with a timing of deactivation. As another method, MAC signaling may be used for the notification. For example, a MAC CE including SPS and/or CG deactivation may be transmitted by using a PDSCH configured by SPS. The UE does not need to receive a PDCCH, and thus processing is simplified.

In this manner, the S-gNB can notify the UE of SPS and/or CG deactivation. The UE can receive, from the S-gNB, SPS and/or CG deactivation for the UE. SPS and/or CG deactivation can be performed in mobility processing.

A method for notifying the UE of SPS and/or CG activation from the T-gNB will be disclosed. RRC signaling may be used for the notification. For example, the T-gNB transmits RRCReconfiguration to the UE after RA processing. The RRCReconfiguration including the notification may be transmitted. The T-gNB can securely perform the notification after connecting to the UE. As another method, a PDCCH may be used for the notification. DCI including SPS and/or CG activation may be notified. The notification can be dynamically performed in accordance with a timing of activation.

In this manner, the T-gNB can notify the UE of SPS and/or CG activation. The UE can receive SPS and/or CG activation from the T-gNB. SPS and/or CG activation can be performed in mobility processing.

The UE is configured to be notified of SPS and/or CG deactivation and activation, but, as another method, deactivation and/or activation may be automatically performed without the notification. When mobility processing occurs, SPS and/or CG deactivation and activation for the UE being a mobility processing target may be automatically performed. For example, a condition for performing the deactivation and activation may be statically determined by a specification or the like. In this manner, notification to the UE can be made unnecessary. Signaling load can be reduced.

In this manner, the T-gNB can perform SPS and/or CG without releasing SPS and/or CG configured by the S-gNB. Accordingly, the T-gNB can perform SPS and/or CG for the UE early. DL data or UL data in a buffer of the T-gNB or the UE can be transmitted early in mobility processing.

Another method for solving the problem disclosed in the seventh embodiment will be disclosed. In mobility processing, a configured SPS and/or CG configuration is released. The S-gNB may transmit a release of an SPS and/or CG configuration to the UE. The UE that has received the release of the SPS and/or CG configuration from the S-gNB releases the SPS and/or CG configuration. The release may be performed even without notification from the S-gNB. For example, a condition for releasing the configuration may be statically determined by a specification or the like.

The T-gNB configures SPS and/or CG in or after RA processing by mobility processing. The T-gNB notifies the UE of an SPS and/or CG configuration. The T-gNB may notify the UE of SPS and/or CG activation. The UE that has received the SPS and/or CG configuration and activation from the T-gNB performs processing for the SPS and/or CG.

A method in which the T-gNB configures SPS and/or CG for the UE by using mobility processing will be disclosed. In mobility processing, the T-gNB transmits an SPS and/or CG configuration to the UE via the S-gNB. The T-gNB transmits, to the S-gNB, an HO REQUEST ACK including the configuration. The S-gNB transmits, to the UE, RRCReconfiguration including the configuration received from the T-gNB. The UE receives, from the S-gNB, an SPS and/or CG configuration from the T-gNB. When SPS and/or CG activation/deactivation is required, after RA processing by the mobility processing, the T-gNB may transmit SPS and/or CG activation/deactivation to the UE by using a PDCCH. The UE monitors a PDCCH after the RA processing with the T-gNB to receive the SPS and/or CG activation/deactivation using the PDCCH. Thus, the UE can perform processing for SPS and/or CG with the T-gNB.

A method in which the T-gNB configures SPS and/or CG for the UE by using mobility processing will be disclosed. In mobility processing, the T-gNB transmits an SPS and/or CG configuration to the UE via the S-gNB. The T-gNB transmits, to the S-gNB, an HO REQUEST ACK including the configuration. The S-gNB transmits, to the UE, RRCReconfiguration including the configuration received from the T-gNB. The UE receives, from the S-gNB, an SPS and/or CG configuration from the T-gNB. When SPS and/or CG activation/deactivation is required, after RA processing by the mobility processing, the T-gNB may transmit SPS and/or CG activation/deactivation to the UE by using a PDCCH. The UE monitors a PDCCH after the RA processing with the T-gNB to receive the SPS and/or CG activation/deactivation using the PDCCH. Thus, the UE can perform processing for SPS and/or CG with the T-gNB.

In the method in which the T-gNB transmits the SPS and/or CG configuration to the UE via the S-gNB in the mobility processing, the configuration is performed before forwarding processing and RA processing in the mobility processing, and thus there remains a problem of deviation in a timing of transmission of DL data or UL data. To solve such a problem, another method in which the T-gNB configures SPS and/or CG for the UE by using mobility processing will be disclosed. In mobility processing, the T-gNB transmits an SPS and/or CG configuration to the UE. The T-gNB transmits RRCReconfiguration to the UE after RA processing with the UE. The RRCReconfiguration including the configuration may be transmitted. The T-gNB can securely perform the notification after connecting to the UE.

When SPS and/or CG activation/deactivation is required, after transmitting an SPS and/or CG configuration to the UE by using RRC signaling, the T-gNB may transmit SPS and/or CG activation/deactivation to the UE by using a PDCCH. After receiving the SPS and/or CG configuration from the T-gNB, the UE monitors a PDCCH to receive the SPS and/or CG activation/deactivation using the PDCCH. Thus, the UE can perform processing for SPS and/or CG with the T-gNB.

The method in which the T-gNB transmits the SPS and/or CG configuration to the UE in the mobility processing after the RA processing causes a problem that SPS and/or CG is unavailable until the configuration is performed. To solve such a problem, another method in which the T-gNB configures SPS and/or CG for the UE by using mobility processing will be disclosed.

In such another method, in mobility processing, the T-gNB transmits an SPS and/or CG configuration to the UE in RA processing. MSG2 in RA processing may be used for the transmission. MAC signaling may be used for MSG2. For example, the T-gNB transmits a MAC CE including the SPS and/or CG configuration to the UE by using MSG2. Together with the SPS and/or CG configuration, activation/deactivation of the configuration may be transmitted. Alternatively, activation of the configuration may be performed by transmission of an SPS and/or CG configuration. The UE receives the SPS and/or CG configuration in RA processing with the T-gNB. In this manner, SPS and/or CG configuration can be performed between the T-gNB and the UE in RA processing. The gNB can use SPS and/or CG configured by the T-gNB for DL data transmission/reception or UL data transmission/reception with the UE.

The T-gNB can consider, in SPS and/or CG configuration, deviation in a timing of transmission of DL data or UL data caused by forwarding processing and RA processing in mobility processing. SPS and/or CG is configured in the RA processing, and thus the UE being a mobility processing target can receive an SPS and/or CG configuration early. By using MSG2 in the RA processing, an SPS and/or CG configuration can be received at the earliest timing when the UE can communicate with the T-gNB. Thus, SPS and/or CG can be used in DL data or UL data transmission/reception between the UE and the T-gNB. Accordingly, delay caused by deviation in a timing of transmission of DL data or UL data in mobility processing can be reduced.

As another method, the T-gNB may transmit, in mobility processing, an SPS and/or CG configuration to the UE via the S-gNB, and may transmit, in RA processing, modification information about the SPS and/or CG configuration to the UE. The above-disclosed method may be applied as appropriate to a method for the transmission. The transmission may be performed by using MSG2.

As modification information, an offset value may be provided. The T-gNB adds the offset value to a start timing of SPS configured via the S-gNB. The UE that has received the offset value from the T-gNB adds the offset value to a start timing of SPS and/or CG received via the S-gNB. Alternatively, the UE may add the offset value to a resource allocation timing of SPS and/or CG immediately after reception of the offset value, instead of the start timing.

In this manner, the T-gNB can modify an SPS and/or CG configuration in consideration of deviation in a timing of transmission of DL data or UL data caused by forwarding processing and RA processing in mobility processing. The T-gNB transmits modification information about an SPS and/or CG configuration to the UE in RA processing, thereby enabling the UE to receive the modification information about the SPS and/or CG configuration early. By using MSG2 in RA processing, modification information about an SPS and/or CG configuration can be received at the earliest timing when the UE can communicate with the T-gNB. Thus, modification information about an SPS and/or CG configuration can be used in DL data or UL data transmission/reception between the UE and the T-gNB. Accordingly, delay caused by deviation in a timing of transmission of DL data or UL data in mobility processing can be reduced. Only modification information about an SPS and/or CG configuration needs only to be transmitted by using MSG2, and an amount of information to be transmitted can be reduced. MSG2 processing time can be shortened.

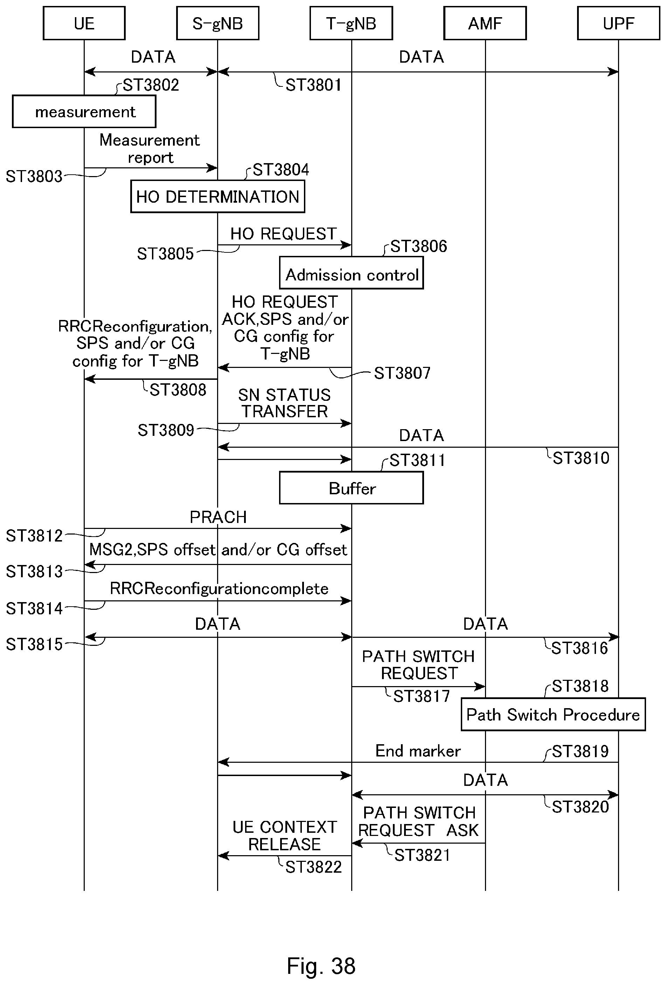

FIG. 38 is a diagram illustrating an example of a mobility processing sequence for transmitting the modification information about the SPS and/or CG configuration in the RA processing. In Step ST3801, data communication is performed between a UPF, the S-gNB, and the UE. SPS and/or CG may be configured between the S-gNB and the UE. Data communication may be performed by using the configuration. The UE performs measurement in step ST3802, and reports a result of the measurement to the S-gNB in Step ST3803. In Step ST3804, the S-gNB determines, for the UE, a handover (HO, hand over) that is mobility processing for the T-gNB. In Step ST3805, the S-gNB transmits HO REQUEST to the T-gNB. HO REQUEST may include an SPS and/or CG configuration. The configuration may include the configuration information disclosed in the first embodiment to the second alteration of the sixth embodiment. In this manner, the T-gNB can recognize the SPS and/or CG configuration performed by the S-gNB. In Step ST3806, the T-gNB performs admission control. The T-gNB performs SPS and/or CG configuration for the UE being a mobility target. In the configuration, the SPS and/or CG configuration performed by the S-gNB, received from the S-gNB, may be considered. In Step ST3807, the T-gNB transmits HO REQUEST ACK to the S-gNB. HO REQUEST ACK includes the SPS and/or CG configuration performed by the T-gNB. In Step ST3808, the S-gNB notifies the UE of mobility processing configuration indication. The notification may be performed by using RRCReconfiguration. RRCReconfiguration may include the SPS and/or CG configuration performed by the T-gNB, received from the T-gNB. The UE can use the SPS and/or CG configuration in communication with the T-gNB. The S-gNB that has transmitted the mobility processing configuration indication to the UE in Step ST3808 transmits a data transmission status to the T-gNB in Step ST3809. The transmission is performed by using SN STATUS TRANSFER. In Step ST3810, the S-gNB starts transferring, to the T-gNB, DL data received from the UPF. The T-gNB that has received the DL data transferred from the S-gNB buffers the DL data in Step ST3811. The T-gNB buffers the DL data until data communication with the UE becomes available. The UE that has received the mobility processing configuration indication in Step ST3808 starts mobility processing for the T-gNB. In Step ST3812, the UE transmits a PRACH to start RA processing with the T-gNB. The T-gNB that has received the PRACH transmits MSG2 to the UE in Step ST3813. The T-gNB may include modification information about the SPS and/or CG configuration in MSG2. The modification information about the configuration may include the modification information about the configuration disclosed in the first embodiment to the second alteration of the sixth embodiment. When receiving the PRACH from the UE, the T-gNB may derive how long it takes to complete the RA processing, and may derive modification information about the SPS and/or CG configuration to adjust the time. The modification information may be, for example, the above-disclosed offset value to be added to the start timing of the SPS and/or CG received via the S-gNB. In this manner, an SPS and/or CG configuration in the T-gNB can be adjusted to SPS and/or CG suitable for a transmission timing in the T-gNB, in consideration of deviation in a transmission timing caused by transfer processing and RA processing by mobility processing. In Step ST3813, the UE that has received the modification information about the SPS and/or CG configuration applies the modification to SPS and/or CG to be started.

In Step ST3814, the UE notifies the T-gNB of RRCReconfigurationcomplete. In Step ST3815, the UE performs data communication with the T-gNB. The SPS and/or CG to which the modification information received in step ST3813 is applied may be used for the data communication. In Step ST3816, the T-gNB transmits UL data to the UPF. In Steps ST3817 and ST3818, path switch is performed between the T-gNB, an AMF, and the UPF. In Step ST3819, an end marker is transmitted from the UPF to the T-gNB via the S-gNB, and an end of the transferred data is notified. In Step ST3820, DL data is transmitted from the UPF to the T-gNB. Thus, DL and UL data transmission/reception is performed between the UE, the T-gNB, and the UPF. In Step ST3821, the AMF transmits PATH SWITCH REQUEST ACK to the T-gNB. In step ST3822, the T-gNB transmits UE CONTEXT RELEASE to the S-gNB.

The above-disclosed method in which the T-gNB transmits the modification information about the SPS and/or CG configuration to the UE in the RA processing may be applied as appropriate to the method in which in the mobility processing, the S-gNB deactivates the configured SPS and/or CG and the T-gNB activates the SPS and/or CG. The T-gNB may transmit the modification information about the configuration to the UE together with SPS and/or CG activation. By using the SPS and/or CG activation received from the T-gNB, and SPS and/or CG modified by using the modification information about the configuration, the UE performs transmission/reception of DL data or UL data.

With such mobility processing, delay caused by deviation in a timing of transmission of DL data or UL data in mobility processing can be reduced.

With such a method as that disclosed in the present embodiment, scheduling can be performed in consideration of deviation in a timing of transmission of DL data or UL data caused by transfer processing for DL data and RA processing between the UE and the gNB in mobility processing of the UE. Accordingly, even when the mobility processing is performed, delay caused by transmission of DL data or UL data can be reduced. The situation where DL data or UL data is discarded due to a transmission delay time for the DL data or UL data exceeding a required delay can be suppressed. Degradation in communication quality can be reduced.

In the present disclosure, although there is a description of the gNB or the cell, it may be the gNB or may be the cell, unless otherwise specifically noted.

In the present disclosure, the gNB may be the MCG or the SCG. The method disclosed in the seventh embodiment may be applied to PSCell change. The same effect can be achieved in the PSCell change.

The UE may notify the gNB of preference information on a configuration of a CG. Examples of the preference information on the configuration of the CG include CG periodicity, an offset, time domain resource allocation, frequency domain resource allocation, and the like. The preference information may be information disclosed in the second embodiment to the third alteration of the second embodiment, the fourth embodiment to the fourth alteration of the fourth embodiment, the sixth embodiment to the second alteration of the sixth embodiment, and the seventh embodiment. A combination of these may be used. By receiving the preference information on the configuration of the CG from the UE, the gNB can recognize the configuration of the CG that is preferable for the UE.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

For example, the methods disclosed in the embodiments and their alterations described above may be applied to SL communication. For example, they may be applied to communication between the UE and the NW via relay. They may be applied to communication between the UE and the NW via L2 relay.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

Various aspects of the present disclosure are summarized below as supplementary notes.

### (Supplementary Note 1)

A base station capable of performing periodic communication to transmit and receive data to and from a communication terminal in a predetermined period, the base station being configured to:
when transmitting downlink data to the communication terminal in the periodic communication, allocate a physical downlink control channel and a physical downlink shared channel used in a first period that is a transmission period for the downlink data, change the physical downlink shared channel used in the first period in response to variation in an amount of data of the downlink data transmitted to the communication terminal, and notify the communication terminal of a result of the change by using the physical downlink control channel allocated to the first period; and
when receiving uplink data from the communication terminal in the periodic communication, allocate a physical downlink control channel and a physical uplink shared channel used in a second period that is a transmission period for the uplink data, change the physical uplink shared channel used in the second period in response to variation in an amount of data of the uplink data transmitted by the communication terminal, and notify the communication terminal of a result of the change by using the physical downlink control channel allocated to the second period.

### (Supplementary Note 2)

A base station capable of performing periodic communication to transmit and receive data to and from a communication terminal in a predetermined period, the base station being configured to:
when transmitting downlink data to the communication terminal in the periodic communication, allocate a physical downlink control channel and a physical downlink shared channel used in a first period that is a transmission period for the downlink data, change the physical downlink shared channel used in the first period in response to variation in an amount of data of the downlink data transmitted to the communication terminal, and notify the communication terminal of a result of the change by using the physical downlink shared channel allocated to the first period; and
when receiving uplink data from the communication terminal in the periodic communication, allocate a physical downlink control channel and a physical uplink shared channel used in a second period that is a transmission period for the uplink data, change the physical uplink shared channel used in the second period in response to variation in an amount of data of the uplink data transmitted by the communication terminal, and notify the communication terminal of a result of the change by using the physical downlink control channel allocated to the second period.

### (Supplementary Note 3)

The base station according to supplementary note 1 or 2, wherein the base station is configured to
add, when the downlink data is periodically generated, an offset value based on a relationship between a period of generation of the downlink data and the first period to the first period to reduce a deviation in a timing of transmission of the downlink data from a timing of generation of the downlink data.

### (Supplementary Note 4)

The base station according to supplementary note 1, 2, or 3, wherein the base station is configured to
add, when the uplink data is periodically generated, an offset value based on a relationship between a period of generation of the uplink data and the second period to the second period to reduce a deviation in a timing of transmission of the uplink data from a timing of generation of the uplink data.

### (Supplementary Note 5)

A communication system including:
a plurality of base stations each corresponding to the base station according to any one of supplementary notes 1 to 4, wherein
when a communication terminal connecting to a first base station that is one of the plurality of base stations switches a connection target to a second base station that is one of the plurality of base stations,
the second base station is configured to allocate a physical downlink control channel and a physical downlink shared channel used in a period of downlink data transmission to a connection switching target terminal that is the communication terminal to which the connection target is switched, allocate a physical downlink control channel and a physical uplink shared channel used in a period of uplink data transmission by the connection switching target terminal, and notify, via the first base station, the connection switching target terminal of a result of allocation of a physical downlink control channel and a physical downlink shared channel used for downlink data transmission to the connection switching target terminal and a result of allocation of a physical downlink control channel and a physical uplink shared channel used by the connection switching target terminal for uplink data transmission.

### Reference Signs List

- 202: Communication terminal apparatus (mobile terminal),
- 210: Communication system,
- 213, 240-1, 240-2, 750: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell.

## Claims

1. A base station capable of performing periodic communication to transmit and receive data to and from a communication terminal in a predetermined period, the base station being configured to:
when transmitting downlink data to the communication terminal in the periodic communication, allocate a physical downlink control channel and a physical downlink shared channel used in a first period that is a transmission period for the downlink data, change the physical downlink shared channel used in the first period in response to variation in an amount of data of the downlink data transmitted to the communication terminal, and notify the communication terminal of a result of the change by using the physical downlink control channel allocated to the first period; and
when receiving uplink data from the communication terminal in the periodic communication, allocate a physical downlink control channel and a physical uplink shared channel used in a second period that is a transmission period for the uplink data, change the physical uplink shared channel used in the second period in response to variation in an amount of data of the uplink data transmitted by the communication terminal, and notify the communication terminal of a result of the change by using the physical downlink control channel allocated to the second period.

2. A base station capable of performing periodic communication to transmit and receive data to and from a communication terminal in a predetermined period, the base station being configured to:
when transmitting downlink data to the communication terminal in the periodic communication, allocate a physical downlink control channel and a physical downlink shared channel used in a first period that is a transmission period for the downlink data, change the physical downlink shared channel used in the first period in response to variation in an amount of data of the downlink data transmitted to the communication terminal, and notify the communication terminal of a result of the change by using the physical downlink shared channel allocated to the first period; and
when receiving uplink data from the communication terminal in the periodic communication, allocate a physical downlink control channel and a physical uplink shared channel used in a second period that is a transmission period for the uplink data, change the physical uplink shared channel used in the second period in response to variation in an amount of data of the uplink data transmitted by the communication terminal, and notify the communication terminal of a result of the change by using the physical downlink control channel allocated to the second period.

3. The base station according to claim 1 or 2, wherein the base station is configured to
add, when the downlink data is periodically generated, an offset value based on a relationship between a period of generation of the downlink data and the first period to the first period to reduce a deviation in a timing of transmission of the downlink data from a timing of generation of the downlink data.

4. The base station according to claim 1 or 2, wherein the base station is configured to:
add, when the uplink data is periodically generated, an offset value based on a relationship between a period of generation of the uplink data and the second period to the second period to reduce a deviation in a timing of transmission of the uplink data from a timing of generation of the uplink data.

5. A communication system comprising:
a plurality of base stations each corresponding to the base station according to claim 1 or 2, wherein
when a communication terminal connecting to a first base station that is one of the plurality of base stations switches a connection target to a second base station that is one of the plurality of base stations,
the second base station is configured to allocate a physical downlink control channel and a physical downlink shared channel used in a period of downlink data transmission to a connection switching target terminal that is the communication terminal to which the connection target is switched, allocate a physical downlink control channel and a physical uplink shared channel used in a period of uplink data transmission by the connection switching target terminal, and notify, via the first base station, the connection switching target terminal of a result of allocation of a physical downlink control channel and a physical downlink shared channel used for downlink data transmission to the connection switching target terminal and a result of allocation of a physical downlink control channel and a physical uplink shared channel used by the connection switching target terminal for uplink data transmission.
